# EUROPEAN PATENT SPECIFICATION

(11) **EP 4 589 489 B1**
(45) Date of publication and mention of the grant of the patent: **30.09.2026**
(21) Application number: 24222231.3
(22) Date of filing: 20.12.2024
(51) Int. Cl.: G06N 10/60, G06N 10/80

(54) **INFORMATION PROCESSING PROGRAM, INFORMATION PROCESSING METHOD, AND INFORMATION PROCESSING DEVICE**
INFORMATIONSVERARBEITUNGSPROGRAMM, INFORMATIONSVERARBEITUNGSVERFAHREN UND INFORMATIONSVERARBEITUNGSVORRICHTUNG
PROGRAMME DE TRAITEMENT D'INFORMATIONS, PROCÉDÉ DE TRAITEMENT D'INFORMATIONS ET DISPOSITIF DE TRAITEMENT D'INFORMATIONS

(30) Priority: 22.01.2024 JP 2024007688
(43) Date of publication of application: 23.07.2025
(73) Proprietor: FUJITSU LIMITED, Kawasaki-shi, Kanagawa 211-8588 (JP)
(72) Inventor: TOMITA, Yoshinori, Kawasaki-shi, Kanagawa, 211-8588 (JP)
(74) Representative: Hoffmann Eitle

(56) References cited:
- GIAN GIACOMO GUERRESCHI ET AL: "Intel Quantum Simulator: A cloud-ready high-performance simulator of quantum circuits", ARXIV.ORG, CORNELL UNIVERSITY LIBRARY, 201 OLIN LIBRARY CORNELL UNIVERSITY ITHACA, NY 14853, 28 January 2020 (2020-01-28), XP081587730
- JARROD R MCCLEAN ET AL: "Exploiting locality in quantum computation for quantum chemistry", ARXIV.ORG, CORNELL UNIVERSITY LIBRARY, 201 OLIN LIBRARY CORNELL UNIVERSITY ITHACA, NY 14853, 29 July 2014 (2014-07-29), XP080800036, DOI: 10.1021/JZ501649M
- DIADAMO STEPHEN ET AL: "Distributed Quantum Computing and Network Control for Accelerated VQE", IEEE TRANSACTIONS ON QUANTUM ENGINEERING, IEEE, vol. 2, 9 February 2021 (2021-02-09), pages 1 - 21, XP011847711, DOI: 10.1109/TQE.2021.3057908
- SHANG HONGHUI ET AL: "Large-Scale Simulation of Quantum Computational Chemistry on a New Sunway Supercomputer", SC22: INTERNATIONAL CONFERENCE FOR HIGH PERFORMANCE COMPUTING, NETWORKING, STORAGE AND ANALYSIS, IEEE, 13 November 2022 (2022-11-13), pages 1 - 14, XP034299860, DOI: 10.1109/SC41404.2022.00019
- MIKIO MORITA ET AL: "Simulator Demonstration of Large Scale Variational Quantum Algorithm on HPC Cluster", ARXIV.ORG, CORNELL UNIVERSITY LIBRARY, 201 OLIN LIBRARY CORNELL UNIVERSITY ITHACA, NY 14853, 19 February 2024 (2024-02-19), XP091686585

## Description

### FIELD

The embodiment discussed herein is related to an information processing program, an information processing method, and an information processing device.

### BACKGROUND

Typically, in fields of material development, drug discovery, or the like, a Variational Quantum Eigensolver (VQE) exists as a method for performing quantum chemical calculation for investigating a property of a target molecule or a target atom. The VQE is, for example, a method for repeatedly performing an iteration, for executing a quantum circuit, obtaining an expected value of a Hamiltonian based on a quantum state obtained by executing the quantum circuit, and updating a parameter of the quantum circuit so as to minimize the expected value of the Hamiltonian. In the quantum chemical calculation by the VQE, a portion for executing the quantum circuit and a portion for obtaining the expected value of the Hamiltonian are realized by a quantum simulator, for example.

As related art, for example, there is a technology for implementing quantum calculation processing by the quantum simulator as parallel processing by a plurality of servers by Message Passing Interface (MPI) parallel.

Imamura, Satoshi, et al. "mpiQulacs: A Distributed Quantum Computer Simulator for A64FX-based Cluster Systems." arXiv preprint arXiv:2203.16044 (2022) is disclosed as related art.

GIAN GIACOMO GUERRESCHI ET AL: "Intel Quantum Simulator: A cloudready high-performance simulator of quantum circuits" relates to the latest release of the Intel Quantum Simulator (IQS). The software allows users to leverage the available hardware resources provided by supercomputers, as well as available public cloud computing infrastructure.

JARROD R MCCLEAN ET AL: "Exploiting locality in quantum computation for quantum chemistry relates to the impact on scaling for quantum chemistry on a quantum computer that results from consideration of locality of interactions and exploitation of local basis sets.

DIADAMO STEPHEN ET AL: "Distributed Quantum Computing and Network Control for Accelerated VQE" relates to an approach for distributing an accelerated variational quantum eigensolver algorithm over arbitrary sized-in terms of number of qubits-distributed quantum computers.

SHANG HONGHUI ET AL: "Large-Scale Simulation of Quantum Computational Chemistry on a New Sunway Supercomputer relates to variational quantum eigensolver (VQE) simulator for simulating quantum computational chemistry problems on a new Sunway supercomputer.

### SUMMARY

### TECHNICAL PROBLEM

However, in the related art, there is a case where a processing time required for the quantum chemical calculation by the VQE becomes enormous. For example, as the number of qubits of the quantum circuit increases, a processing time required for the quantum calculation processing executed by the quantum simulator that executes the quantum circuit exponentially increases, and the processing time required for the quantum chemical calculation by the VQE increases. Furthermore, for example, it is considered to implement the quantum calculation processing by the quantum simulator as the parallel processing by the plurality of servers. However, it is difficult to determine how to distribute the quantum calculation processing by the quantum simulator to how many servers.

In one aspect, an object of the present embodiment is to reduce a processing time required for quantum chemical calculation by a VQE.

### SOLUTION TO PROBLEM

The present invention is defined in the independent claims. Preferred embodiments are defined by the dependent claims. Further aspects and examples are provided for facilitating the understanding of the invention.

### ADVANTAGOUS EFFECTS OF INVENTION

According to one mode, it is possible to reduce a processing time required for quantum chemical calculation by a VQE.

### BRIEF DESCRIPTION OF DRAWINGS

FIG. 1 is an explanatory diagram illustrating an example of an information processing method according to an embodiment;
FIG. 2 is an explanatory diagram illustrating an example of an information processing system 200;
FIG. 3 is a block diagram illustrating a hardware configuration example of an information processing device 100;
FIG. 4 is a block diagram illustrating a hardware configuration example of an arithmetic device 212;
FIG. 5 is a block diagram illustrating a functional configuration example of the information processing device 100;
FIG. 6 is an explanatory diagram illustrating an example of quantum chemical calculation by a VQE;
FIG. 7 is an explanatory diagram (part 1) illustrating an example in which a plurality of times of quantum calculation processing including gradient calculation is distributed;
FIG. 8 is an explanatory diagram (part 2) illustrating an example in which the plurality of times of quantum calculation processing including the gradient calculation is distributed;
FIG. 9 is an explanatory diagram illustrating gRPC distribution processing;
FIG. 10 is an explanatory diagram (part 1) illustrating a tendency of a change in a processing time required for the gradient calculation;
FIG. 11 is an explanatory diagram (part 2) illustrating the tendency of the change in the processing time required for the gradient calculation;
FIG. 12 is an explanatory diagram illustrating a guideline for causing a distribution processing number to be variable;
FIG. 13 is an explanatory diagram (part 1) illustrating an example in which the distribution processing number is changed in the middle;
FIG. 14 is an explanatory diagram (part 2) illustrating an example in which the distribution processing number is changed in the middle;
FIG. 15 is an explanatory diagram illustrating an example in which the distribution processing number is other than a divisor of the number of parameters theta[];
FIG. 16 is an explanatory diagram (part 1) illustrating an example in which a speed can be increased by MPI parallel processing;
FIG. 17 is an explanatory diagram (part 2) illustrating an example in which the speed can be increased by the MPI parallel processing;
FIG. 18 is an explanatory diagram (part 1) illustrating a specific example for controlling an arithmetic system 210, in a first example;
FIG. 19 is an explanatory diagram (part 2) illustrating a specific example for controlling the arithmetic system 210, in the first example;
FIG. 20 is an explanatory diagram (part 3) illustrating a specific example for controlling the arithmetic system 210, in the first example;
FIG. 21 is an explanatory diagram (part 4) illustrating a specific example for controlling the arithmetic system 210, in the first example;
FIG. 22 is an explanatory diagram (part 5) illustrating a specific example for controlling the arithmetic system 210, in the first example;
FIG. 23 is an explanatory diagram (part 6) illustrating a specific example for controlling the arithmetic system 210, in the first example;
FIG. 24 is an explanatory diagram (part 7) illustrating a specific example for controlling the arithmetic system 210, in the first example;
FIG. 25 is an explanatory diagram (part 8) illustrating a specific example for controlling the arithmetic system 210, in the first example;
FIG. 26 is an explanatory diagram (part 9) illustrating a specific example for controlling the arithmetic system 210, in the first example;
FIG. 27 is an explanatory diagram (part 1) illustrating an example of an effect in the first example;
FIG. 28 is an explanatory diagram (part 2) illustrating an example of the effect in the first example;
FIG. 29 is an explanatory diagram (part 3) illustrating an example of the effect in the first example;
FIG. 30 is an explanatory diagram (part 4) illustrating an example of the effect in the first example;
FIG. 31 is an explanatory diagram (part 5) illustrating an example of the effect in the first example;
FIG. 32 is an explanatory diagram (part 6) illustrating an example of the effect in the first example;
FIG. 33 is an explanatory diagram (part 7) illustrating an example of the effect in the first example;
FIG. 34 is an explanatory diagram (part 8) illustrating an example of the effect in the first example;
FIG. 35 is a flowchart illustrating an example of an overall processing procedure;
FIG. 36 is a flowchart illustrating an example of a solving processing procedure according to the first example;
FIG. 37 is a flowchart illustrating an example of a first determination processing procedure;
FIG. 38 is a flowchart illustrating an example of a second determination processing procedure;
FIG. 39 is a flowchart illustrating an example of a quantum calculation processing procedure;
FIG. 40 is an explanatory diagram illustrating an example of a predetermined Hamiltonian 4000;
FIG. 41 is an explanatory diagram illustrating a specific example for deleting terms as many as those of which designation has been accepted from the predetermined Hamiltonian 4000;
FIG. 42 is an explanatory diagram illustrating another specific example for deleting the terms as many as those of which the designation has been accepted from the predetermined Hamiltonian 4000;
FIG. 43 is an explanatory diagram illustrating a specific example of a calculation formula used to predict a time required to calculate an expected value of a Hamiltonian;
FIG. 44 is an explanatory diagram (part 1) illustrating an example of an effect in a second example;
FIG. 45 is an explanatory diagram (part 2) illustrating an example of the effect in the second example;
FIG. 46 is an explanatory diagram (part 3) illustrating an example of the effect in the second example;
FIG. 47 is an explanatory diagram (part 4) illustrating an example of the effect in the second example;
FIG. 48 is an explanatory diagram (part 5) illustrating an example of the effect in the second example;
FIG. 49 is an explanatory diagram (part 6) illustrating an example of the effect in the second example;
FIG. 50 is an explanatory diagram (part 7) illustrating an example of the effect in the second example;
FIG. 51 is an explanatory diagram (part 8) illustrating an example of the effect in the second example;
FIG. 52 is an explanatory diagram (part 9) illustrating an example of the effect in the second example;
FIG. 53 is an explanatory diagram (part 10) illustrating an example of the effect in the second example;
FIG. 54 is an explanatory diagram (part 11) illustrating an example of the effect in the second example;
FIG. 55 is a flowchart illustrating an example of a solving processing procedure according to the second example;
FIG. 56 is a flowchart illustrating an example of a first term deletion processing procedure;
FIG. 57 is a flowchart illustrating an example of a second term deletion processing procedure; and
FIG. 58 is a flowchart illustrating an example of a third term deletion processing procedure.

### DESCRIPTION OF EMBODIMENTS

Hereinafter, an embodiment of an information processing program, an information processing method, and an information processing device will be described in detail with reference to the drawings.

### (One Example of Information Processing Method According to Embodiment)

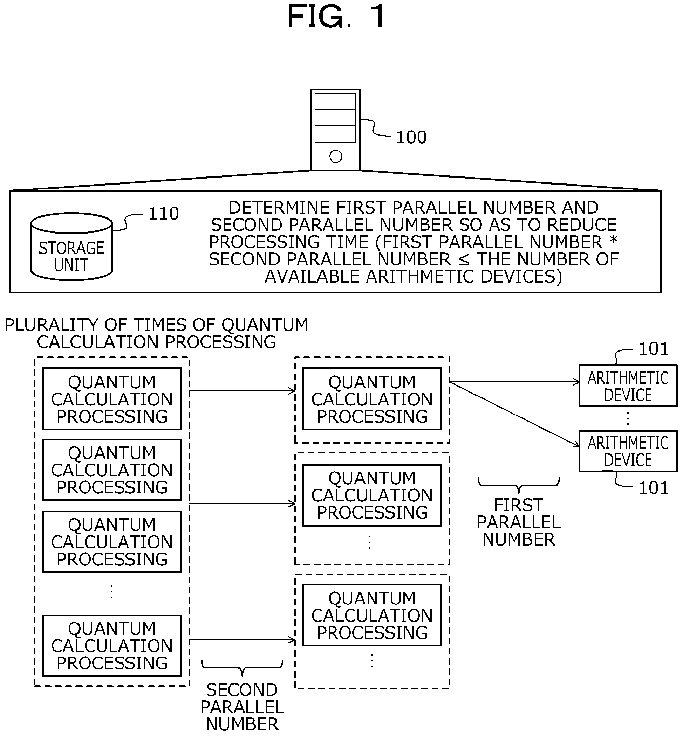

FIG. 1 is an explanatory diagram illustrating an example of an information processing method according to the embodiment. An information processing device 100 is a computer that assists quantum chemical calculation by a VQE. The information processing device 100 is, for example, a server, a personal computer (PC), or the like. In the quantum chemical calculation, for example, a property of a target molecule or a target atom or the like is studied based on the Schrodinger equation.

The VQE corresponds to a variation method and is a method for solving an optimization problem. The VQE sets, for example, an initial value of a parameter of a quantum circuit. The parameter relates to, for example, a quantum gate of the quantum circuit. The parameter corresponds to a variable of the optimization problem. Thereafter, for example, the VQE repeatedly performs an iteration for executing the quantum circuit, obtaining an expected value of a Hamiltonian based on a quantum state obtained by executing the quantum circuit, and updating the parameter of the quantum circuit so as to minimize the expected value of the Hamiltonian. The expected value of the Hamiltonian finally obtained corresponds to a solution of the optimization problem.

In the quantum chemical calculation by the VQE, a portion for executing the quantum circuit and a portion for obtaining the expected value of the Hamiltonian are realized by a quantum simulator, for example. Furthermore, the portion for executing the quantum circuit and the portion for obtaining the expected value of the Hamiltonian may be realized by, for example, an actual quantum computer. For example, about content of the VQE, Reference Literature 1 below can be referred.

Reference Literature 1: Peruzzo, Alberto, et al. "A variational eigenvalue solver on a photonic quantum processor." Nature communications 5.1 (2014): 4213.

However, there is a problem in that a processing time required for the quantum chemical calculation by the VQE becomes enormous. For example, as the number of qubits of the quantum circuit increases, a processing time required for the quantum calculation processing executed by the quantum simulator that executes the quantum circuit exponentially increases, and the processing time required for the quantum chemical calculation by the VQE increases. Specifically, as a scale of the target molecule is larger, the number of qubits of the quantum circuit increases, and the processing time required for the quantum chemical calculation by the VQE may be several hundred days. Furthermore, for example, as the number of qubits of the quantum circuit increases, a memory usage amount required for the quantum calculation processing by the quantum simulator exponentially increases, and it is difficult to realize the quantum calculation processing by the quantum simulator by a single server.

Therefore, it is considered to implement the quantum calculation processing by the quantum simulator as parallel processing by the plurality of servers. By implementing the quantum calculation processing by the quantum simulator as the parallel processing by the plurality of servers, it is expected to reduce the processing time required for the quantum calculation processing by the quantum simulator and cope with an increase in the memory usage amount required for the quantum calculation processing by the quantum simulator.

At this time, it is difficult to determine how to distribute the quantum calculation processing by the quantum simulator to how many servers. For example, from a viewpoint of a capital investment effect, it is desirable to improve a server operation efficiency. Specifically, it is desirable not to generate an extra server that does not handle any job. In particular, in an on-premise environment, it is desirable to improve the server operation efficiency. For example, when a system including a large number of servers is prepared to cope with a case where the number of qubits is relatively large, when the quantum chemical calculation by the VQE is executed to solve an optimization problem of which the number of qubits is relatively small, the extra server is likely to be generated.

Furthermore, for example, it is desirable to ensure use fairness of the server. Specifically, it is desirable to share the system including a large number of servers for various calculation applications including the quantum chemical calculation by the VQE, without occupying the system only by the quantum chemical calculation by the VQE. For example, when a relatively large number of servers are allocated to the quantum chemical calculation by the VQE in the system, servers to be allocated to another job other than the quantum chemical calculation by the VQE lack, and the another job is in a standby state without being executed. Furthermore, for example, it is desirable to appropriately determine the number of servers to which the quantum calculation processing by the quantum simulator is distributed, according to the number of qubits of the quantum circuit.

In this way, it is desirable to appropriately determine the number of servers to which the quantum calculation processing by the quantum simulator is distributed, while ensuring the use fairness of the server, so as not to generate the extra server. Here, as described above, it is difficult to determine how to distribute the quantum calculation processing by the quantum simulator to how many servers. Therefore, it is difficult not to generate the extra server. Furthermore, it is difficult to ensure the use fairness of the server. Furthermore, it is difficult to appropriately improve an efficiency of the quantum calculation processing by the quantum simulator.

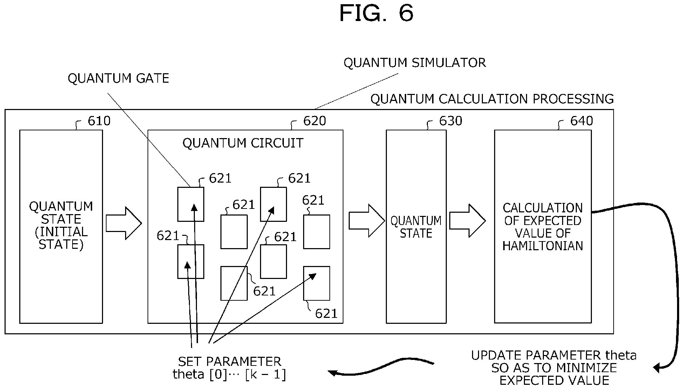

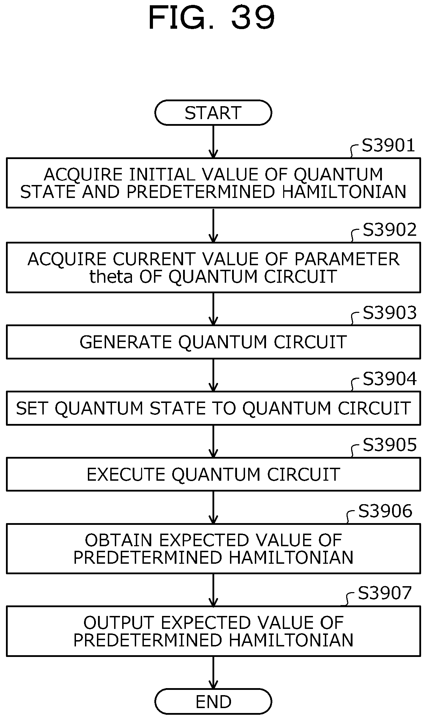

Furthermore, for example, in a case where the quantum calculation processing illustrated in FIGs. 6 and 39 to be described later is executed by the quantum simulator once, a method is considered for implementing the quantum calculation processing as the parallel processing by the plurality of servers, by Message Passing Interface (MPI) parallel. For this method, for example, *"mpiQulacs: A Distributed Quantum Computer Simulator for A64FX-based Cluster Systems."* described above can be referred. In the quantum chemical calculation by the VQE, the quantum calculation processing by the quantum simulator is repeatedly executed, and a total processing time required for the plurality of times of quantum calculation processing is significantly long. Therefore, it is desirable to further improve the efficiency of the quantum calculation processing by the quantum simulator.

Therefore, in the present embodiment, an information processing method capable of reducing the processing time required for the quantum chemical calculation by the VQE will be described. Specifically, according to the information processing method, by appropriately determining how to distribute the quantum calculation processing by the quantum simulator to how many servers, it is possible to reduce the processing time required for the quantum chemical calculation by the VQE.

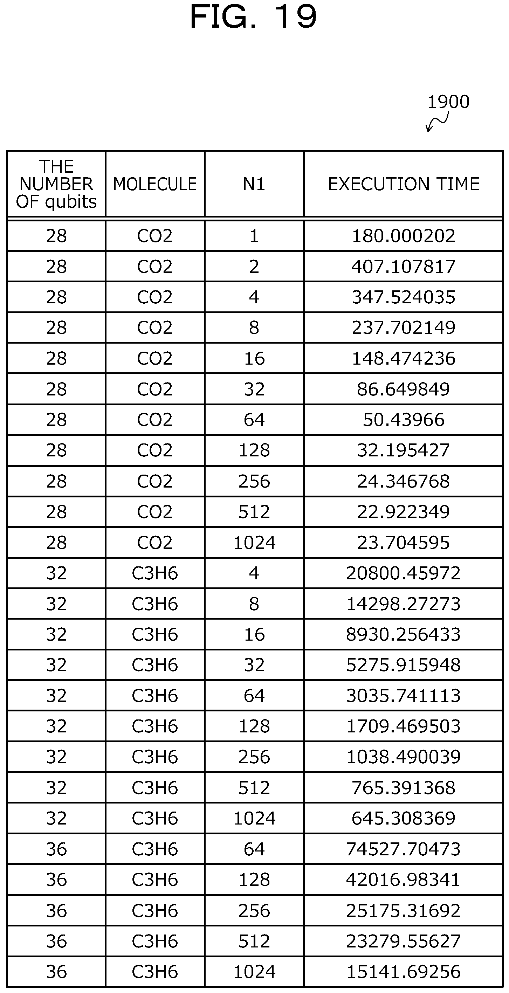

In FIG. 1, the information processing device 100 includes a storage unit 110. The storage unit 110 stores a value list that may be designated as a first parallel number and includes a combination of the first parallel number and a sample of a processing time in which the quantum calculation processing is executed once with the first parallel number. For example, a specific example of the value list corresponds to a table 1900 illustrated in FIG. 19 and will be described with reference to FIG. 19.

The first parallel number represents into how many pieces the one quantum calculation processing, of the plurality of times of quantum calculation processing in the quantum chemical calculation by the VQE, is distributed. The first parallel number is, for example, a parallel number corresponding to a parallel processing method called data parallel. The data parallel corresponds to, for example, the MPI parallel. The data parallel may correspond to, for example, a method other than the MPI parallel. The plurality of times of quantum calculation processing in the quantum chemical calculation by the VQE is, as a typical example, to execute the quantum calculation processing the same number of times as the number of parameters set to the quantum circuit, in order to perform gradient calculation for obtaining a gradient, in an optimization algorithm using the gradient.

The storage unit 110 stores, for example, the value list that may be designated as the first parallel number and that includes the combination of the first parallel number associated with information regarding each of a plurality of molecules and the sample of the processing time required for executing the quantum calculation processing once with the first parallel number. The information regarding the molecule includes, for example, a type of a molecule. The information regarding the molecule includes, for example, the number of qubits used to define a quantum circuit corresponding to the molecule. The information regarding the molecule may include arrangement of atoms in the molecule or the like.

(1-1) The information processing device 100 acquires information regarding the target molecule in the quantum chemical calculation by the VQE. The information regarding the target molecule includes, for example, a type of the target molecule. The information regarding the target molecule includes, for example, the number of qubits used to define a quantum circuit corresponding to the target molecule. The information regarding the target molecule may include, for example, arrangement of atoms in the target molecule or the like. The information processing device 100 acquires the value list that may be designated as the first parallel number and that includes the combination of the first parallel number and the sample of the processing time in which the quantum calculation processing is executed once with the first parallel number, based on the information regarding the target molecule. Specifically, the information processing device 100 refers to the storage unit 110 and acquires the value list that may be designated as the first parallel number and includes the combination of the first parallel number, associated with the information regarding the target molecule and the sample of the processing time in which the quantum calculation processing is executed once with the first parallel number.

(1-2) The information processing device 100 determines the first parallel number and a second parallel number, based on the acquired value list that may be designated as the first parallel number. The second parallel number represents into how many pieces the plurality of times of quantum calculation processing in the quantum chemical calculation by the VQE is distributed and executed. The second parallel number is, for example, a parallel number corresponding to a parallel processing method called distribution processing. The distribution processing corresponds to, for example, g Remote Procedure Call (RPC) distribution processing. The distribution processing may correspond to a method other than the gRPC distribution processing, for example. The information processing device 100 acquires, for example, the number of arithmetic devices 101 available for the quantum calculation processing.

The arithmetic device 101 is, for example, a computer that activates the quantum simulator. The arithmetic device 101 is, for example, a server. The arithmetic device 101 executes all or a part of the quantum chemical calculation by the VQE, by the quantum simulator. For example, the information processing device 100 determines the first parallel number and the second parallel number so as to reduce the processing time required for the plurality of times of quantum calculation processing, within a range in which a product of the first parallel number and the second parallel number does not exceed the acquired number of arithmetic devices 101 available for the quantum calculation processing.

Specifically, the information processing device 100 specifies a plurality of possible combinations of the first parallel number and the second parallel number, within the range in which the product of the first parallel number and the second parallel number does not exceed the number of arithmetic devices 101 available for the quantum calculation processing. Specifically, the information processing device 100 calculates an estimated value of the processing time in which the quantum chemical calculation by the VQE is executed, for each of the plurality of specified combinations and searches for a combination with the smallest estimated value. Specifically, the information processing device 100 determines the first parallel number and the second parallel number in the found combination.

As a result, the information processing device 100 can search for an optimum combination among the plurality of possible combinations and appropriately determine the first parallel number and the second parallel number. When determining the first parallel number and the second parallel number, the information processing device 100 can consider improvement in an operation efficiency of the arithmetic device 101 and use fairness of the arithmetic device 101, based on the number of available arithmetic devices 101.

(1-3) The information processing device 100 controls the plurality of times of quantum calculation processing, based on the determined first parallel number and second parallel number. For example, the information processing device 100 controls the plurality of times of quantum calculation processing, in at least one of a plurality of iterations repeatedly executed at the time of quantum chemical calculation by the VQE. For example, the information processing device 100 controls the plurality of times of quantum calculation processing, in all of the plurality of iterations, based on the determined first parallel number and second parallel number.

Specifically, the information processing device 100 controls the system so as to execute the plurality of times of quantum calculation processing, in all of the plurality of iterations, using different parallel processing methods in parallel, based on the determined first parallel number and second parallel number. The system includes the plurality of arithmetic devices 101. The parallel processing method includes, for example, the data parallel described above and the distribution processing described above.

As a result, the information processing device 100 can reduce the processing time required for the quantum chemical calculation by the VQE. Specifically, in a case of implementing the plurality of times of quantum calculation processing by the quantum simulator, for forming the quantum chemical calculation by the VQE, as the parallel processing by the plurality of arithmetic devices 101, the information processing device 100 can reduce the processing time required for the plurality of times of quantum calculation processing by the quantum simulator.

Specifically, the information processing device 100 can appropriately distribute the quantum calculation processing by the quantum simulator, using the different parallel processing methods in parallel, to the arithmetic devices 101 as many as the product of the first parallel number and the second parallel number, while considering the number of available arithmetic devices 101.

Therefore, specifically, the information processing device 100 can distribute the quantum calculation processing by the quantum simulator to an appropriate number of arithmetic devices 101 while improving the operation efficiency of the arithmetic device 101 and ensuring the use fairness of the arithmetic device 101. Specifically, the information processing device 100 can appropriately improve the efficiency of the quantum calculation processing by the quantum simulator and reduce the processing time required for the quantum calculation processing by the quantum simulator.

Here, a case has been described where the information processing device 100 determines the first parallel number and the second parallel number once for all of the plurality of iterations. However, the present embodiment is not limited to this. For example, the information processing device 100 may determine the first parallel number and the second parallel number for each of the plurality of iterations. Specifically, the information processing device 100 determines the first parallel number and the second parallel number again every time immediately before each of the plurality of iterations is executed.

Here, a case has been described where a function as the information processing device 100 is implemented by a single computer. However, the present embodiment is not limited to this. For example, the function as the information processing device 100 may be implemented by cooperation of a plurality of computers. For example, the function as the information processing device 100 may be implemented in a cloud.

Here, a case has been described where the information processing device 100 reduces the processing time required for the quantum chemical calculation by the VQE, by executing the quantum calculation processing by the quantum simulator in parallel, based on the first parallel number and the second parallel number. However, the present embodiment is not limited to this.

For example, as the number of terms for defining the Hamiltonian regarding the target molecule in the quantum chemical calculation by the VQE increases, the processing time in which the expected value of the Hamiltonian is obtained increases, and the processing time required for the quantum chemical calculation by the VQE becomes enormous. On the other hand, there may be a case where the information processing device 100 reduces the processing time in which the expected value of the Hamiltonian is obtained and reduces the processing time required for the quantum chemical calculation by the VQE, by reducing the number of terms for defining the Hamiltonian.

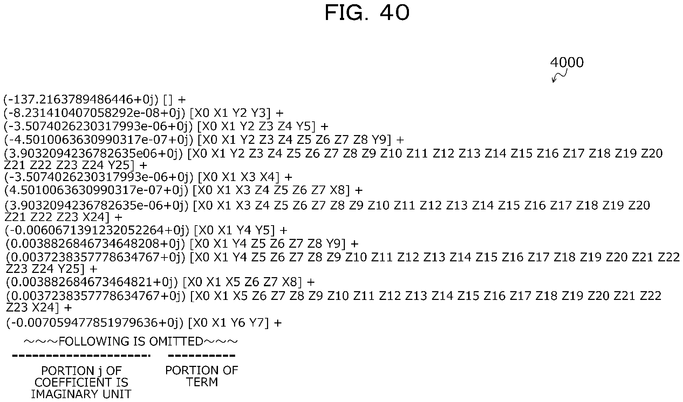

Specifically, there may be a case where the information processing device 100 reduces the processing time required for the quantum chemical calculation by the VQE, by reducing the number of terms for defining the Hamiltonian, after determining the first parallel number and the second parallel number. Furthermore, specifically, there may be a case where the information processing device 100 reduces the processing time required for the quantum chemical calculation by the VQE, by reducing the number of terms for defining the Hamiltonian, without determining the first parallel number and the second parallel number. An example in a case where the information processing device 100 reduces the number of terms for defining the Hamiltonian will be described later with reference to FIGs. 40 to 58.

### (One Example of Information Processing System 200)

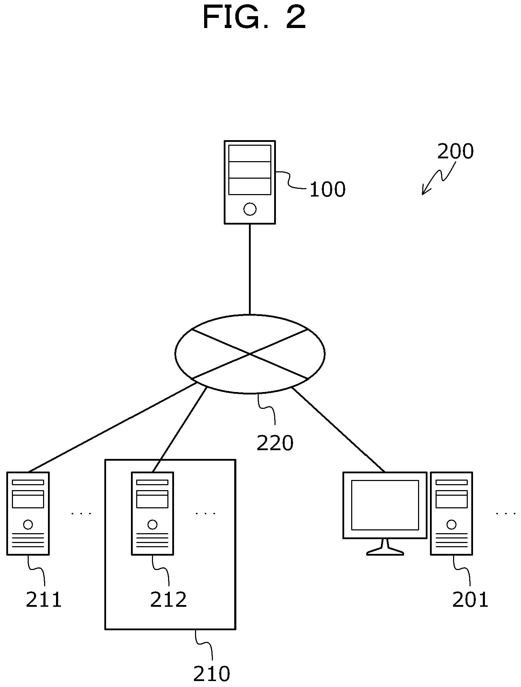

Next, an example of an information processing system 200, to which the information processing device 100 illustrated in FIG. 1 is applied, will be described with reference to FIG. 2.

FIG. 2 is an explanatory diagram illustrating an example of the information processing system 200. In FIG. 2, the information processing system 200 includes the information processing device 100, a control device 211, an arithmetic system 210, and a client device 201. The arithmetic system 210 includes, for example, the plurality of arithmetic devices 212.

In the information processing system 200, the information processing device 100 and the control device 211 are coupled via a wired or wireless network 220. The network 220 is, for example, a Local Area Network (LAN), a Wide Area Network (WAN), the Internet, or the like. Furthermore, in the information processing system 200, the control device 211 and the arithmetic device 212 are coupled via the wired or wireless network 220. Furthermore, in the information processing system 200, the information processing device 100 and the client device 201 are coupled via the wired or wireless network 220. Furthermore, in the information processing system 200, the control device 211 and the client device 201 are coupled via the wired or wireless network 220.

The information processing device 100 is a computer that controls the arithmetic system 210 for executing the quantum calculation processing. The information processing device 100 determines how to distribute the plurality of times of quantum calculation processing, of the quantum chemical calculation by the VQE, to the plurality of arithmetic devices 212 of the arithmetic system 210 and controls the plurality of arithmetic devices 212 of the arithmetic system 210, via the control device 211. The plurality of times of quantum calculation processing may include, for example, quantum calculation processing for realizing the gradient calculation. The plurality of times of quantum calculation processing may include, for example, quantum calculation processing for realizing processing other than the gradient calculation. The quantum calculation processing for realizing the processing other than the gradient calculation is, for example, quantum calculation processing for realizing a search for a parameter or the like.

The information processing device 100 includes, for example, a storage unit. The storage unit stores a value list that may be designated as the first parallel number and includes the combination of the first parallel number and the sample of the processing time in which the quantum calculation processing is executed once with the first parallel number. The storage unit stores, for example, the value list that may be designated as the first parallel number and that includes the combination of the first parallel number associated with information regarding each of the plurality of molecules and the sample of the processing time in which the quantum calculation processing is executed once with the first parallel number.

The information processing device 100 acquires, for example, a processing request for requesting to solve a problem regarding the target molecule by receiving the processing request from the client device 201. The processing request includes, for example, the information regarding the target molecule in the quantum chemical calculation by the VQE. The information processing device 100 may acquire the processing request, for example, based on a user's operation input. The information processing device 100 acquires the information regarding the target molecule in the quantum chemical calculation by the VQE, for example, based on the acquired processing request.

The information processing device 100 acquires, for example, the value list that may be designated as the first parallel number and that includes the combination of the first parallel number and the sample of the processing time in which the quantum calculation processing is executed once with the first parallel number, based on the information regarding the target molecule. Specifically, the information processing device 100 refers to the storage unit and acquires the value list that may be designated as the first parallel number and includes the combination of the first parallel number, associated with the acquired information regarding the target molecule and the sample of the processing time in which the quantum calculation processing is executed once with the first parallel number.

The information processing device 100 acquires, for example, the number of arithmetic devices 212 currently available for the quantum calculation processing, by inquiring the control device 211. For example, the information processing device 100 determines the first parallel number and the second parallel number, so as to reduce the processing time in which the plurality of times of quantum calculation processing is executed, within the range in which the product of the first parallel number and the second parallel number does not exceed the acquired number, based on the acquired value list that may be designated as the first parallel number. As a result, the information processing device 100 can appropriately determine, for example, how to distribute the plurality of times of quantum calculation processing to how many arithmetic devices 212.

For example, the information processing device 100 transmits a calculation request to the control device 211, so as to execute the plurality of times of quantum calculation processing, in each of the plurality of iterations, based on the determined first parallel number and second parallel number. The plurality of iterations includes two or more iterations repeatedly executed at the time of quantum chemical calculation by the VQE. The calculation request includes, for example, the determined first parallel number and second parallel number. The calculation request may include, for example, the information regarding the target molecule. The information processing device 100 may be capable of controlling the arithmetic system 210, so as to execute the plurality of times of quantum calculation processing, in each of the plurality of iterations, based on the first parallel number and the second parallel number, without via the control device 211. As a result, the information processing device 100 can control the arithmetic system 210 so as to efficiently execute the quantum chemical calculation by the VQE.

For example, there may be a case where the information processing device 100 transmits the calculation request to the control device 211 so as to execute the plurality of times of quantum calculation processing, in a first iteration of the plurality of iterations, based on the determined first parallel number and second parallel number. In this case, each time when any one iteration is executed by the arithmetic system 210, the information processing device 100 may determine the first parallel number and the second parallel number again, for the next iteration. Then, the information processing device 100 transmits the calculation request to the control device 211 so as to execute the plurality of times of quantum calculation processing, in the next iteration, based on the first parallel number and the second parallel number determined again. As a result, the information processing device 100 can control the arithmetic system 210 so as to efficiently execute the quantum chemical calculation by the VQE.

The information processing device 100 receives, from the control device 211, a solution of a problem regarding the target molecule obtained as a result of executing the quantum chemical calculation by the VQE. The information processing device 100 outputs the solution of the problem regarding the target molecule to outside. The information processing device 100 transmits, for example, the solution of the problem regarding the target molecule to the client device 201. The information processing device 100 may output the solution of the problem regarding the target molecule, so that a user can refer to the solution. As a result, the information processing device 100 can make the solution of the problem regarding the target molecule be available outside. The information processing device 100 is, for example, a server, a PC, or the like.

The control device 211 is a computer that controls the plurality of arithmetic devices 212. The control device 211 transmits the number of arithmetic devices 212 currently available for the quantum calculation processing, to the information processing device 100, in response to an inquiry. The control device 211 receives the calculation request from the information processing device 100. The control device 211 acquires the first parallel number and the second parallel number, based on the calculation request. The control device 211 allocates the plurality of times of quantum calculation processing in the quantum chemical calculation by the VQE, to one or more arithmetic devices 212 of the plurality of arithmetic devices 212, based on the first parallel number and the second parallel number and executes the quantum calculation processing. The control device 211 transmits the solution of the problem regarding the target molecule obtained as a result of executing the quantum chemical calculation by the VQE, to the information processing device 100. The control device 211 is, for example, a server, a PC, or the like.

The arithmetic device 212 is a computer that executes requested calculation processing. The arithmetic device 212 can execute the quantum calculation processing. The arithmetic device 212 may be capable of executing classical calculation processing. The arithmetic device 212 activates, for example, the quantum simulator. The arithmetic device 212 executes the quantum calculation processing by the quantum simulator, for example, under control by the control device 211. There may be a case where the arithmetic device 212 executes the quantum calculation processing, by the quantum simulator, under the control of the information processing device 100, for example. The arithmetic device 212 is, for example, a classical computer that activates the quantum simulator. The classical computer is, for example, a server, a PC, or the like. There may be a case where the arithmetic device 212 is, for example, a quantum computer and does not include the quantum simulator.

The client device 201 is a computer used by a user who desires to execute the quantum chemical calculation by the VQE. The client device 201 generates a processing request for requesting to solve the problem regarding the target molecule, based on a user's operation input and transmits the processing request to the information processing device 100. The client device 201 receives the solution of the problem regarding the target molecule obtained as a result of executing the quantum chemical calculation by the VQE, from the information processing device 100. The client device 201 outputs the solution of the problem regarding the target molecule obtained as a result of executing the quantum chemical calculation by the VQE so that the user can refer to the solution. The client device 201 is, for example, a PC, a tablet terminal, a smartphone, or the like.

Here, a case has been described where the information processing device 100 and the control device 211 are different devices. However, the present embodiment is not limited to this. For example, there may be a case where the information processing device 100 has a function as the control device 211 and also operates as the control device 211. Furthermore, a case has been described where the information processing device 100 and the client device 201 are different devices. However, the present embodiment is not limited to this. For example, there may be a case where the information processing device 100 has a function as the client device 201, and also operates as the client device 201.

### (Hardware Configuration Example of Information Processing Device 100)

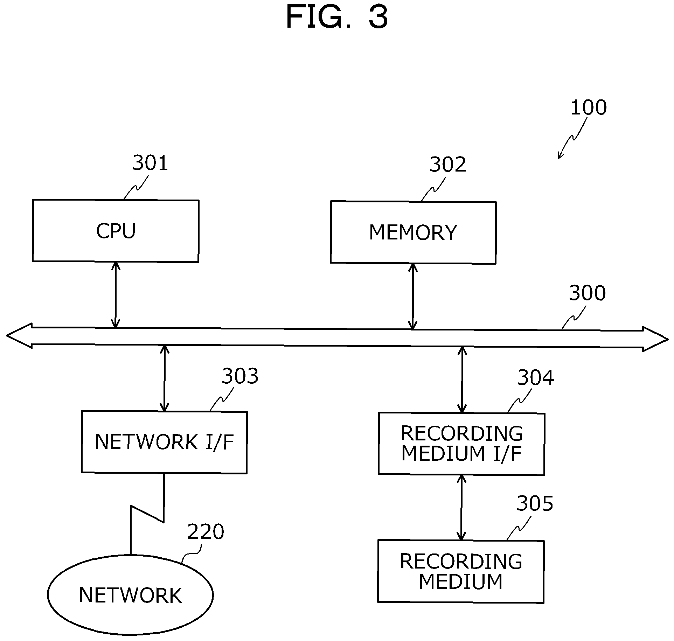

Next, a hardware configuration example of the information processing device 100 will be described with reference to FIG. 3.

FIG. 3 is a block diagram illustrating the hardware configuration example of the information processing device 100. In FIG. 3, the information processing device 100 includes a Central Processing Unit (CPU) 301, a memory 302, a network Interface (I/F) 303, a recording medium I/F 304, and a recording medium 305. Furthermore, the components are coupled to each other by a bus 300.

Here, the CPU 301 is in charge of overall control of the information processing device 100. The memory 302 includes, for example, a Read Only Memory (ROM), a Random Access Memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is coupled to the network 220 through a communication line, and is coupled to another computer via the network 220. Then, the network I/F 303 takes control of an interface between the network 220 and inside, and controls input and output of data to and from the another computer. The network I/F 303 is, for example, a modem, a LAN adapter, or the like.

The recording medium I/F 304 controls reading and writing of data from and to the recording medium 305 under the control of the CPU 301. The recording medium I/F 304 is, for example, a disk drive, a Solid State Drive (SSD), a Universal Serial Bus (USB) port, or the like. The recording medium 305 is a nonvolatile memory that stores data written under control of the recording medium I/F 304. The recording medium 305 is, for example, a disk, a semiconductor memory, a USB memory, or the like. The recording medium 305 may be attachable to and detachable from the information processing device 100.

The information processing device 100 may include, for example, a keyboard, a mouse, a display, a printer, a scanner, a microphone, a speaker, and the like in addition to the components described above. Furthermore, the information processing device 100 may include a plurality of the recording medium I/Fs 304 and a plurality of the recording media 305. Furthermore, the information processing device 100 does not need to include the recording medium I/F 304 or the recording medium 305.

### (Hardware Configuration Example of Control Device 211)

Specifically, since a hardware configuration example of the control device 211 is similar to the hardware configuration example of the information processing device 100 illustrated in FIG. 3, description thereof is omitted.

### (Hardware Configuration Example of Arithmetic Device 212)

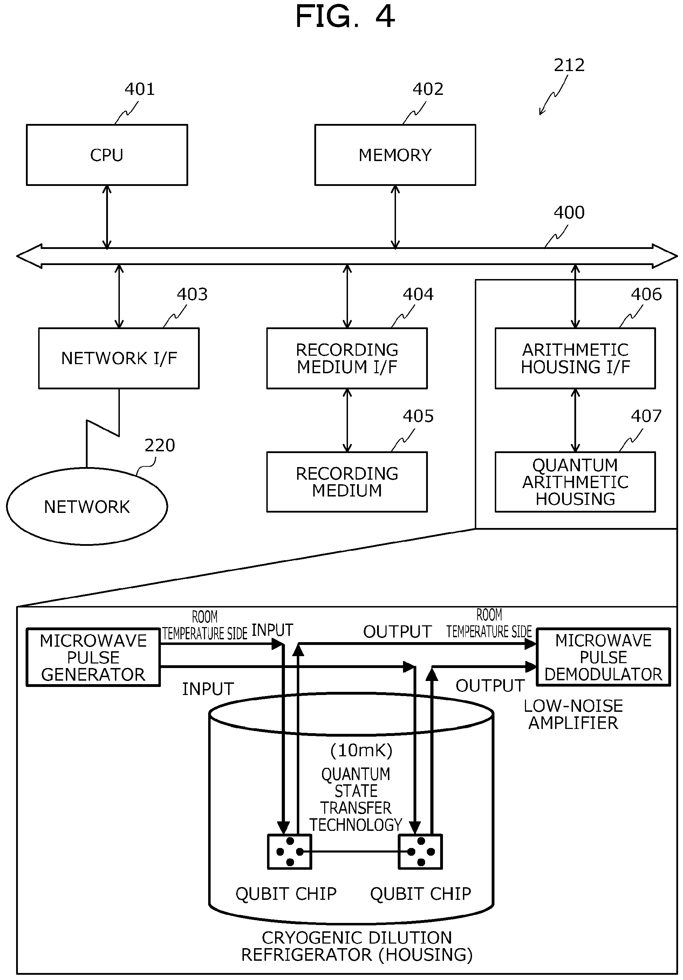

Since the hardware configuration example of the arithmetic device 212 in a case where the arithmetic device 212 is the classical computer that activates the quantum simulator is specifically similar to the hardware configuration example of the information processing device 100 illustrated in FIG. 3, description thereof is omitted. On the other hand, a case is considered where the arithmetic device 212 is a quantum computer. Here, the hardware configuration example of the arithmetic device 212 in a case where the arithmetic device 212 is the quantum computer will be described with reference to FIG. 4.

FIG. 4 is a block diagram illustrating the hardware configuration example of the arithmetic device 212. In FIG. 4, the arithmetic device 212 includes a CPU 401, a memory 402, a network I/F 403, a recording medium I/F 404, and a recording medium 405. The arithmetic device 212 further includes an arithmetic housing I/F 406 and a quantum arithmetic housing 407. Furthermore, the components are coupled to each other by a bus 400.

Here, the CPU 401 is in charge of overall control of the arithmetic device 212. The memory 402 includes, for example, a ROM, a RAM, a flash ROM, and the like. Specifically, for example, the flash ROM or the ROM stores various programs, and the RAM is used as a work area for the CPU 401. The programs stored in the memory 402 are loaded into the CPU 401 to cause the CPU 401 to execute coded processing.

The network I/F 403 is coupled to the network 220 through a communication line, and is coupled to another computer via the network 220. Then, the network I/F 403 takes control of an interface between the network 220 and inside, and controls input and output of data to and from the another computer. The network I/F 403 includes, for example, a modem, a LAN adapter, or the like.

The recording medium I/F 404 controls reading and writing of data from and to the recording medium 405 under control of the CPU 401. The recording medium I/F 404 is, for example, a disk drive, an SSD, a USB port, or the like. The recording medium 405 is a nonvolatile memory that stores data written under control of the recording medium I/F 404. The recording medium 405 is, for example, a disk, a semiconductor memory, a USB memory, or the like. The recording medium 405 may be attachable to and detachable from the arithmetic device 212.

The arithmetic housing I/F 406 controls access to the quantum arithmetic housing 407 under the control of the CPU 401. The arithmetic housing I/F 406 converts an output signal from the CPU 401 into an input signal into the quantum arithmetic housing 407, using a microwave pulse generator, and transmits the input signal to the quantum arithmetic housing 407. The arithmetic housing I/F 406 converts an output signal from the quantum arithmetic housing 407 into an input signal into the CPU 401, using a microwave pulse demodulator, and transmits the input signal to the CPU 401. The quantum arithmetic housing 407 is an arithmetic device in which one or more qubit chips cooled to a cryogenic temperature of 10 mK are mounted. The qubit chip represents, for example, a logical qubit chip. The quantum arithmetic housing 407 uses the one or more qubit chips to perform a predetermined operation in response to the input signal, and outputs an output signal corresponding to a result of performing the predetermined operation.

The arithmetic device 212 may include, for example, a keyboard, a mouse, a display, a printer, a scanner, a microphone, a speaker, and the like in addition to the components described above. Furthermore, the arithmetic device 212 may include a plurality of the recording medium I/Fs 404 and a plurality of the recording media 405. Furthermore, the arithmetic device 212 does not need to include the recording medium I/F 404 and the recording medium 405. Furthermore, the qubit chip in the quantum arithmetic housing 407 may be controlled by a method other than microwaves. The qubit chip in the quantum arithmetic housing 407 may realize, for example, an optical qubit.

### (Hardware Configuration Example of Client Device 201)

Since a hardware configuration example of the client device 201 is specifically similar to the hardware configuration example of the information processing device 100 illustrated in FIG. 3, description thereof is omitted.

### (Functional Configuration Example of Information Processing Device 100)

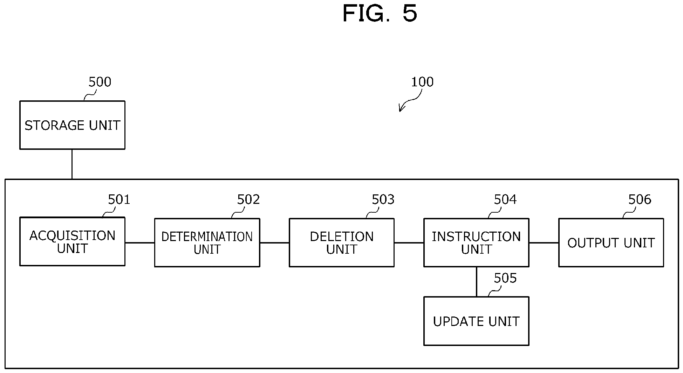

Next, a functional configuration example of the information processing device 100 will be described with reference to FIG. 5.

FIG. 5 is a block diagram illustrating the functional configuration example of the information processing device 100. The information processing device 100 includes a storage unit 500, an acquisition unit 501, a determination unit 502, a deletion unit 503, an instruction unit 504, an update unit 505, and an output unit 506.

For example, the storage unit 500 is implemented by a storage region such as the memory 302 or the recording medium 305 illustrated in FIG. 3. Hereinafter, a case will be described where the storage unit 500 is included in the information processing device 100. However, the present embodiment is not limited to this. For example, there may be a case where the storage unit 500 is included in a device different from the information processing device 100, and storage content of the storage unit 500 may be referred from the information processing device 100.

The acquisition unit 501 to the output unit 506 function as an example of a control unit. Specifically, the acquisition unit 501 to the output unit 506 achieve their functions by causing the CPU 301 to execute a program stored in the storage region such as the memory 302 or the recording medium 305 illustrated in FIG. 3, or through the network I/F 303, for example. A processing result of each functional unit is stored in, for example, the storage region such as the memory 302 or the recording medium 305 illustrated in FIG. 3.

The storage unit 500 stores various types of information referred to or updated in the processing of each functional unit. The storage unit 500, for example, stores the value list that may be designated as the first parallel number and includes the combination of the first parallel number and the sample of the processing time in which the quantum calculation processing is executed once with the first parallel number. The first parallel number represents into how many pieces one of the plurality of times of quantum calculation processing is distributed to be executed. The plurality of times of quantum calculation processing is included in the quantum chemical calculation by the VQE. The quantum chemical calculation by the VQE is implemented by the plurality of iterations repeatedly executed. The plurality of times of quantum calculation processing is included in the iteration, for example.

The iteration includes, for example, the gradient calculation. The gradient calculation is processing to be executed to search for a minimum value and is calculation processing executed in an optimization algorithm for searching for the minimum value such as an SLSQP method. The iteration includes, for example, a search for an optimum parameter. The plurality of times of quantum calculation processing includes, for example, two or more pieces of quantum calculation processing for realizing the gradient calculation. The plurality of times of quantum calculation processing may include, for example, two or more pieces of quantum calculation processing for realizing the search for the optimum parameter. The two or more pieces of quantum calculation processing for realizing the gradient calculation is a group of existing quantum calculation processing as many as parameters to be set to the quantum circuit used for the quantum chemical calculation by the VQE. The iteration includes, for example, expected value calculation. The expected value calculation is to obtain the expected value of the Hamiltonian. The first parallel number may be different for each quantum calculation processing.

Specifically, the storage unit 500 stores the value list that may be designated as the first parallel number and that includes the combination of the first parallel number associated with information regarding each of the plurality of molecules and the sample of the processing time in which the quantum calculation processing is executed once with the first parallel number. Specifically, the storage unit 500 stores the value list that may be designated as the first parallel number, using a table 1900 to be described later with reference to FIG. 19. The value list that may be designated as the first parallel number is stored in the storage unit 500 in advance, for example. The value list that may be designated as the first parallel number may be, for example, acquired by the acquisition unit 501 and stored in the storage unit 500.

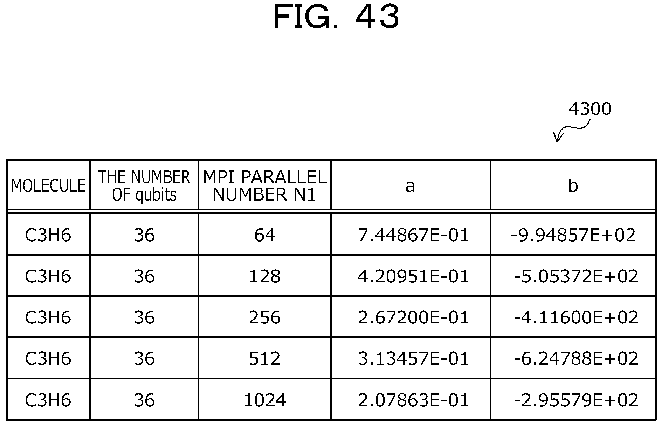

The storage unit 500 stores, for example, characteristic information indicating a change in the processing time in which the expected value of the Hamiltonian is obtained, according to a change in the number of terms for defining the Hamiltonian. The characteristic information is, for example, mathematical information that includes a variable indicating the number of terms of the Hamiltonian and makes it possible to calculate the processing time in which the expected value of the Hamiltonian is obtained. The mathematical information includes a coefficient of an expression or the like. Specifically, the storage unit 500 stores the mathematical information, using a table 4300 to be described later with reference to FIG. 43. The characteristic information may be, for example, a database in a table format. The characteristic information is stored, for example, in the storage unit 500 in advance. For example, the characteristic information may be acquired by the acquisition unit 501 and stored in the storage unit 500.

The storage unit 500 stores, for example, various types of information to be referred in the quantum chemical calculation by the VQE in order to solve the problem regarding the target molecule. The various types of information includes, for example, molecule information regarding the target molecule in the quantum chemical calculation by the VQE. The various types of information includes, for example, mathematical information indicating a predetermined Hamiltonian regarding the target molecule. The mathematical information includes, for example, a plurality of terms for defining the predetermined Hamiltonian and a coefficient for each of the plurality of terms. Specifically, the storage unit 500 stores the molecule information. The molecule information is, for example, acquired by the acquisition unit 501 and stored in the storage unit 500. Specifically, the storage unit 500 stores the mathematical information. The mathematical information is, for example, acquired by the acquisition unit 501 and stored in the storage unit 500. The mathematical information may be generated based on the molecule information and stored in the storage unit 500.

The storage unit 500 stores, for example, the number of arithmetic devices 212 available for the quantum calculation processing, in the arithmetic system 210 including the plurality of arithmetic devices 212. The number of arithmetic devices 212 is, for example, acquired by the acquisition unit 501 and stored in the storage unit 500. As a result, the storage unit 500 can sequentially store a latest demand of the arithmetic device 212.

The acquisition unit 501 acquires various types of information to be used in the processing of each functional unit. The acquisition unit 501 stores the acquired various types of information in the storage unit 500, or outputs the acquired various types of information to each functional unit. Furthermore, the acquisition unit 501 may output the various types of information stored in the storage unit 500 to each functional unit. The acquisition unit 501 acquires the various types of information based on a user's operation input, for example. The acquisition unit 501 may receive various types of information from, for example, a device different from the information processing device 100.

The acquisition unit 501 acquires, for example, the processing request for requesting to solve the problem regarding the target molecule. The processing request may include the molecule information regarding the target molecule in the quantum chemical calculation by the VQE. The processing request may include the mathematical information indicating the predetermined Hamiltonian regarding the target molecule. Specifically, the acquisition unit 501 acquires the processing request by receiving the processing request from another computer. The another computer is, for example, the client device 201 or the like. Specifically, the acquisition unit 501 acquires the processing request, by receiving an input of the processing request, based on a user's operation input.

The acquisition unit 501 acquires, for example, the molecule information regarding the target molecule in the quantum chemical calculation by the VQE. Specifically, the acquisition unit 501 acquires the molecule information by receiving the molecule information from another computer. The another computer is, for example, the client device 201 or the like. Specifically, the acquisition unit 501 acquires the molecule information, by receiving an input of the molecule information, based on a user's operation input. Specifically, the acquisition unit 501 may acquire the molecule information by extracting the molecule information from the acquired processing request.

The acquisition unit 501 acquires the mathematical information indicating the predetermined Hamiltonian regarding the target molecule. Specifically, the acquisition unit 501 acquires the mathematical information by receiving the mathematical information from another computer. The another computer is, for example, the client device 201 or the like. Specifically, the acquisition unit 501 acquires the mathematical information by receiving an input of the mathematical information, based on a user's operation input. Specifically, the acquisition unit 501 may acquire the mathematical information by extracting the mathematical information from the acquired processing request.

The acquisition unit 501 acquires, for example, the number of arithmetic devices 212 available for the quantum calculation processing. Specifically, the acquisition unit 501 acquires the number of arithmetic devices 212 available for the quantum calculation processing, by inquiring the arithmetic system 210 including the plurality of arithmetic devices 212 of the number of arithmetic devices 212 available for the quantum calculation processing. Specifically, the acquisition unit 501 may acquire the number of arithmetic devices 212 by receiving an input of the number of arithmetic devices 212, based on a user's operation input. As a result, the acquisition unit 501 can obtain a guideline for determining how to distribute the quantum chemical calculation by the VQE to how many arithmetic devices 212.

Specifically, it is considered that the acquisition unit 501 acquires the number of arithmetic devices 212 available for the quantum calculation processing once before the arithmetic system 210 executes the quantum chemical calculation by the VQE. Specifically, the acquisition unit 501 may acquire the number of arithmetic devices 212 available for the quantum calculation processing, before the arithmetic system 210 executes each of the plurality of iterations for realizing the quantum chemical calculation by the VQE. As a result, the acquisition unit 501 can obtain the guideline for determining how to distribute the quantum chemical calculation by the VQE to how many arithmetic devices 212. Specifically, the acquisition unit 501 can improve an operation efficiency of the arithmetic device 212 and can consider use fairness of the arithmetic device 212 or the like, when it is determined how to distribute the quantum chemical calculation by the VQE to how many arithmetic devices 212.

The acquisition unit 501 may accept a start trigger to start the processing of any one of the functional units. The start trigger is a predetermined operation input by a user, for example. The start trigger may be, for example, reception of predetermined information from another computer. The start trigger may be, for example, output of predetermined information by any one of the functional units. The acquisition unit 501 may accept, for example, the acquisition of the processing request as a start trigger to start processing of the determination unit 502, the deletion unit 503, and the instruction unit 504.

The determination unit 502 acquires the value list that may be designated as the first parallel number and includes the combination of the first parallel number and the sample of the processing time in which the quantum calculation processing is executed once with the first parallel number, based on the molecule information acquired by the acquisition unit 501. For example, the determination unit 502 refers to the storage unit 500 and acquires the value list that may be designated as the first parallel number, associated with the information regarding the target molecule acquired by the acquisition unit 501.

The determination unit 502 determines the first parallel number and the second parallel number, so as to reduce the processing time in which the plurality of times of quantum calculation processing is executed, based on the acquired value list that may be designated as the first parallel number. The second parallel number represents into how many pieces the plurality of times of quantum calculation processing is distributed to be executed. For example, the determination unit 502 determines the first parallel number and the second parallel number, within a range in which the product of the first parallel number and the second parallel number does not exceed the number of arithmetic devices 212 available for the quantum calculation processing. As a result, the determination unit 502 can appropriately determine how to distribute the quantum chemical calculation by the VQE to how many arithmetic devices 212.

The deletion unit 503 deletes a term of which an absolute value of a coefficient is equal to or less than a reference value, among the plurality of terms, from the predetermined Hamiltonian, based on the coefficient of each of the plurality of terms for defining the predetermined Hamiltonian regarding the target molecule, in the quantum chemical calculation by the VQE. For example, the deletion unit 503 sets the reference value by any one of a plurality of methods to be described later and deletes the term of which the absolute value of the coefficient is equal to or less than the reference value, among the plurality of terms, from the predetermined Hamiltonian.

As a result, the deletion unit 503 can delete a term that has the absolute value of the coefficient equal to or less than the reference value and is determined to have a relatively small effect on accuracy of an execution result of the quantum chemical calculation by the VQE. Therefore, the deletion unit 503 can reduce the processing time in which the expected value of the Hamiltonian is obtained, while maintaining the accuracy of the execution result of the quantum chemical calculation by the VQE.

For example, a method is considered in which the deletion unit 503 specifies the number of terms to be deleted and sets, as the reference value, an absolute value of a coefficient in a specific term existing in order corresponding to the specified number, from the smallest absolute value of the coefficient, among the plurality of terms, from the predetermined Hamiltonian. At this time, for example, the deletion unit 503 specifies the number of terms to be deleted, by accepting designation of the number of terms to be deleted. Furthermore, for example, the deletion unit 503 may accept designation of an upper limit value of the processing time, refer to the storage unit 500, and specify the number of terms to be deleted, so that the processing time, in which the expected value of the predetermined Hamiltonian is obtained, is equal to or less than the designated upper limit value, based on the characteristic information. Furthermore, the deletion unit 503 may accept designation of a ratio and specify the number of terms corresponding to the ratio of which the designation has been accepted, with respect to the number of terms for defining the predetermined Hamiltonian, as the number of terms to be deleted. As a result, the deletion unit 503 can reduce the processing time in which the expected value of the Hamiltonian is obtained, while maintaining the accuracy of the execution result of the quantum chemical calculation by the VQE.

Furthermore, for example, a method is considered in which the deletion unit 503 sets a first reference value for a coefficient having a positive value and a second reference value for a coefficient having a negative value. For example, the deletion unit 503 deletes a first term that is a term of which a coefficient has a positive value and an absolute value of the coefficient is equal to or less than the first reference value and a second term that is a term of which a coefficient has a negative value and an absolute value of the coefficient is equal to or less than the second reference value, among the plurality of terms, from the predetermined Hamiltonian. At this time, for example, there may be a case where the deletion unit 503 deletes the first term and the second term, so that a total value of the absolute values of the coefficients of the first term and a total value of the absolute values of the coefficients of the second term are substantially equal to each other. Furthermore, for example, there may be a case where the deletion unit 503 deletes the first term and the second term so that the number of first terms and the number of second terms are substantially equal to each other. As a result, the deletion unit 503 can delete the term of which the coefficient has the positive value and the term of which the coefficient has the negative value, in a balanced manner. Therefore, the deletion unit 503 can easily maintain the accuracy of the execution result of the quantum chemical calculation by the VQE.

The instruction unit 504 controls the quantum chemical calculation by the VQE. For example, the instruction unit 504 controls the plurality of times of quantum calculation processing, based on at least one of the first parallel number and the second parallel number determined by the determination unit 502 and the predetermined Hamiltonian deleted by the deletion unit 503. Specifically, the instruction unit 504 controls the plurality of times of quantum calculation processing, in at least one of the plurality of iterations. Specifically, the instruction unit 504 may control the plurality of times of quantum calculation processing, in each of the plurality of iterations. As a result, the instruction unit 504 can cause the arithmetic system 210 to execute the quantum chemical calculation by the VQE.

For example, in a case where the second parallel number is set as a predetermined value and multiple values that may be designated as the first parallel number are respectively applied to different pieces of quantum calculation processing, the instruction unit 504 may control the plurality of times of quantum calculation processing. As a result, the instruction unit 504 can acquire the execution result of each quantum calculation processing. The predetermined value is, for example, set by a user in advance. The plurality of values that may be designated as the first parallel number is set by the user in advance, for example. As a result, the instruction unit 504 can cause the arithmetic system 210 to try and execute the quantum chemical calculation by the VQE.

The update unit 505 updates storage content of the storage unit 500, based on the execution result of at least one time of the quantum calculation processing, among the plurality of times of quantum calculation processing. For example, the update unit 505 acquires the combination of the first parallel number and the sample of the processing time in which the quantum calculation processing is executed once with the first parallel number, as the execution result of at least one time of the quantum calculation processing, among the plurality of times of quantum calculation processing, from the control device 211. For example, the update unit 505 stores the acquired combination in the storage unit 500, in association with the information regarding the target molecule. As a result, hereinafter, the update unit 505 can refer to the storage content of the storage unit 500 and easily and accurately determine the first parallel number and the second parallel number by the determination unit 502.

The update unit 505 may update the storage content of the storage unit 500, based on the execution result of at least one quantum calculation processing, in a case where the second parallel number is set as the predetermined value and the multiple values that may be designated as the first parallel number are respectively applied to the different pieces of quantum calculation processing. For example, the update unit 505 acquires, from the control device 211, the combination of each of the plurality of values that may be designated as the first parallel number and the sample of the processing time in which the quantum calculation processing is executed once with the first parallel number, as the execution result of at least one time of the quantum calculation processing. The update unit 505 stores, for example, the acquired combination in the storage unit 500, in association with the information regarding the target molecule. As a result, hereinafter, the update unit 505 can refer to the storage content of the storage unit 500 and easily and accurately determine the first parallel number and the second parallel number by the determination unit 502. In a case where the storage unit 500 is empty, the update unit 505 can prepare the storage content of the storage unit 500.

The output unit 506 outputs a processing result of at least any one of the functional units. Examples of an output format include display on a display, print output to a printer, transmission to an external device by the network I/F 303, or storage in the storage region such as the memory 302 or the recording medium 305. As a result, the output unit 506 may notify the user of the processing result of at least any one of the functional units to improve convenience of the information processing device 100.

The output unit 506 outputs the solution of the problem regarding the target molecule obtained as a result of executing the quantum chemical calculation by the VQE. For example, the output unit 506 receives the solution of the problem regarding the target molecule, from the control device 211. For example, the output unit 506 transmits the received solution of the problem regarding the target molecule, to the client device 201. The output unit 506 may output, for example, the solution of the problem regarding the target molecule, so that the user can refer to the solution. As a result, the output unit 506 can make the solution of the problem regarding the target molecule be available outside.

Here, a case has been described where the information processing device 100 includes the acquisition unit 501, the determination unit 502, the deletion unit 503, the instruction unit 504, the update unit 505, and the output unit 506. However, the present embodiment is not limited to this. For example, there may be a case where the information processing device 100 does not include the determination unit 502. In this case, for example, the information processing device 100 controls the arithmetic system 210, so as to execute the quantum chemical calculation by the VQE, without deleting a term from the predetermined Hamiltonian. This case corresponds to a first example to be described later with reference to FIGs. 6 to 39.

Furthermore, for example, there may be a case where the information processing device 100 suppresses the first parallel number to the minimum necessary by the determination unit 502. In this case, for example, the information processing device 100 controls the arithmetic system 210, so as to execute the quantum chemical calculation by the VQE, while setting the first parallel number to a minimum necessary value and the second parallel number to one. From a viewpoint of the memory usage amount, it is preferable for the information processing device 100 to determine the first parallel number. This case corresponds to a second example to be described later with reference to FIGs. 40 to 58. Furthermore, for example, there may be a case where the information processing device 100 does not include the update unit 505.

### <First Example> Parallel Number

The first example will be described with reference to FIGs. 6 to 39. The first example corresponds to a case where the information processing device 100 controls the arithmetic system 210, so as to execute the quantum chemical calculation by the VQE, without deleting the term of the predetermined Hamiltonian, after determining an MPI parallel number and a distribution processing number. The MPI parallel number corresponds to the first parallel number described above. The distribution processing number corresponds to the second parallel number described above.

First, an example of the quantum chemical calculation by the VQE will be described with reference to FIG. 6. FIG. 6 is an explanatory diagram illustrating an example of the quantum chemical calculation by the VQE. As illustrated in FIG. 6, for example, the quantum chemical calculation by the VQE includes a process realized by the quantum simulator, for executing a quantum circuit 620 including one or more quantum gates 621, based on a quantum state 610 that is an initial state. The quantum gate 621 includes a parameter theta[]. For example, it assumes that there are the k parameters theta[], which means that the number of elements in the parameter theta[] is k. Before the quantum circuit is executed, a value of the parameter theta[] is set to the quantum gate.

The quantum chemical calculation by the VQE includes, for example, a process for setting the parameter theta[] to the quantum gate, causing the quantum state 610 to act on the quantum circuit 620, and obtaining a quantum state 630, and then, obtaining the expected value of the Hamiltonian based on the quantum state 630.

The quantum chemical calculation by the VQE includes, for example, a process for solving the optimization problem realized by the classical computer such as the information processing device 100, for updating the parameter theta[] so as to minimize the expected value of the Hamiltonian. As an algorithm for solving the optimization problem, the SLSQP method or the like has been known and can be used. Executing the quantum calculation processing corresponds to obtaining a value of an objective function of the optimization problem. The parameter theta[] is a variable of the objective function, and the expected value of the Hamiltonian is an evaluation value of the objective function. The update includes, for example, the plurality of times of quantum calculation processing.

In some optimization algorithms such as the SLSQP method, a gradient is obtained, and a devisal for quickly reaching to an optimal solution is made. In the gradient calculation, the plurality of times of quantum calculation processing is executed for setting a value theta [i] + Δ obtained by adding a minute value Δ to each value theta [i] of each element of the current theta [] to the quantum gate, executing the quantum circuit, and obtaining the expected value of the Hamiltonian. Therefore, if the number of elements of theta [] is k, k times of quantum calculation processing is executed to perform the gradient calculation. Thereafter, update of the value of theta[] is attempted by a line search method or the like, using the obtained gradient. Although the number of times changes depending on a parameter of the line search, the quantum circuit is executed several times, at this stage. Depending on the optimization algorithm to be used, a specific procedure along which theta[] is updated is different. However, theta[] is sequentially updated so that the expected value of the Hamiltonian decreases. A series of processes for updating the parameter theta[] once is defined as a single iteration. When the gradient calculation is performed, it is not necessary to evaluate the objective function in order from zero to k - 1 for i of theta [i]. In addition, to evaluate the objective function is to execute the quantum calculation processing, and in a case where the quantum simulator is used, the processing time of the quantum calculation processing tends to be long. Therefore, it is desirable to shorten the processing time, by distributing the plurality of times of quantum calculation processing including the gradient calculation to some arithmetic devices 212 and enabling to simultaneously evaluate the objective function the plurality of times.

On the other hand, in the line search method or the like, it is necessary to evaluate the objective function in order. Therefore, there is a case where it is not possible to distribute and simultaneously evaluate the objective function. Note that, when the objective function is evaluated with the optimization algorithm, a value of the variable is transferred to the objective function. However, when the gradient calculation is performed, k sets of variable values are collectively transferred, and when the variable value is updated as in the line search method, a mechanism is used in which one set of one variable value is transferred. Therefore, processing for executing the quantum calculation processing that is the objective function is always common to processing for setting the one set of variable values to a portion corresponding to theta[] of the quantum gate as in FIG. 6 until obtaining the expected value of the Hamiltonian. It is not necessary to change the processing in FIG. 6 by distinguishing which optimization algorithm is used, whether or not the gradient calculation is currently performed, or line search is currently performed. Control that the evaluation of the objective function can be distributedly and simultaneously executed a plurality of times when the plurality of sets of values are passed from the optimization algorithm side to the objective function is executed by a control processing unit 702, corresponding to upstream-side processing in FIG. 6.

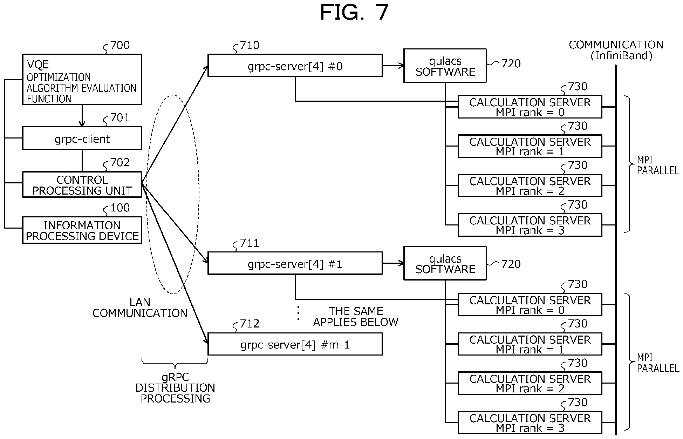

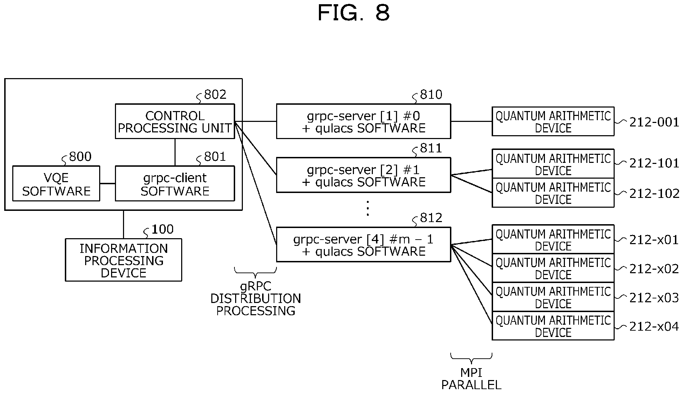

Next, with reference to FIGs. 7 and 8, an example will be described in which the information processing device 100 controls the arithmetic system 210 so as to distribute the plurality of times of quantum calculation processing including the gradient calculation to some arithmetic devices 212, using two different parallel processing methods in parallel. The two parallel processing methods include the MPI parallel and the gRPC distribution processing.

The MPI parallel is, for example, to share and process one large data block in parallel by a plurality of calculation servers 730. The calculation server 730 is, for example, implemented by the arithmetic device 212. The "MPI parallel number" represents how many calculation servers 730 share and process the one large data block in parallel, in the MPI parallel. The "MPI parallel number" corresponds to the "first parallel number" described above. Therefore, the plurality of calculation servers 730 has the same software and exchanges data each other via a high-speed network such as InfiniBand.

The gRPC distribution processing is, for example, to share different input datasets and simultaneously execute the plurality of times of quantum calculation processing, by the plurality of calculation servers 730, in a case where certain processing includes the plurality of input datasets. The calculation server 730 is, for example, implemented by the arithmetic device 212. The "distribution processing number" represents how many calculation servers 730 share and simultaneously execute the plurality of input datasets, in the gRPC distribution processing. The "distribution processing number" corresponds to the "second parallel number" described above.

FIGs. 7 and 8 are explanatory diagrams illustrating an example in which the plurality of times of quantum calculation processing including the gradient calculation is distributed. In FIG. 7, there is an optimization algorithm 700 used in the VQE. The optimization algorithm 700 calls the quantum calculation processing, in order to evaluate the objective function. A grpc-client 701 is a functional unit that requests a grpc-server to execute the quantum calculation processing including the gradient calculation. The grpc-server is the calculation server 730 that is in charge of the quantum calculation processing, in the gRPC distribution processing. In the following description, there is the plurality of groups of the calculation servers 730 that execute the quantum calculation processing with an MPI parallel number x, and an i-th group is referred to as "grpc-server [x] #i".

As illustrated in FIG. 7, the control processing unit 702 can distribute the quantum calculation processing including the gradient calculation to m grpc-servers [x] #i at a maximum by the gRPC distribution processing. In the example in FIG. 7, i = 0 to m - 1. The control processing unit 702 causes the quantum calculation processing to be executed in the grpc-server [x] #i, by the gRPC distribution processing. Specifically, each of the x calculation servers 730 forming an arithmetic unit grpc-server [x] #i executes qulacs software 720 and share single quantum calculation processing. Specifically, the x calculation servers 730 forming the arithmetic unit grpc-server [x] #i exchange data each other via the high-speed network such as InfiniBand, with a communication framework of the MPI. The qulacs software 720 is the quantum simulator.

Next, description of FIG. 8 will be made, and a case will be described where the control processing unit 702 or the like illustrated in FIG. 7 is applied to the information processing system 200. In FIG. 8, the information processing device 100 includes VQE software 800 that implements the optimization algorithm 700 by the VQE. The VQE software 800 defines how to control the arithmetic system 210 so as to execute the quantum chemical calculation by the VQE. The information processing device 100 includes grpc-client software 801 that implements the grpc-client 701. The information processing device 100 includes a control processing unit 802 corresponding to the control processing unit 702.

Furthermore, the grpc-server [x] #i is a group of the one or more arithmetic devices 212. For example, a grpc-server [1] #0 (810) is an arithmetic device 212-001. The grpc-server [1] #0 (810) executes the qulacs software 720 which is a quantum simulator in the MPI parallel by the plurality of arithmetic devices 212. For example, a grpc-server [2] #1 (811) is a group of an arithmetic device 212-101 and an arithmetic device 212-102. For example, a grpc-server [4] #m-1 (812) is a group of an arithmetic device 212-x01, an arithmetic device 212-x02, an arithmetic device 212-x03, and an arithmetic device 212-x04.

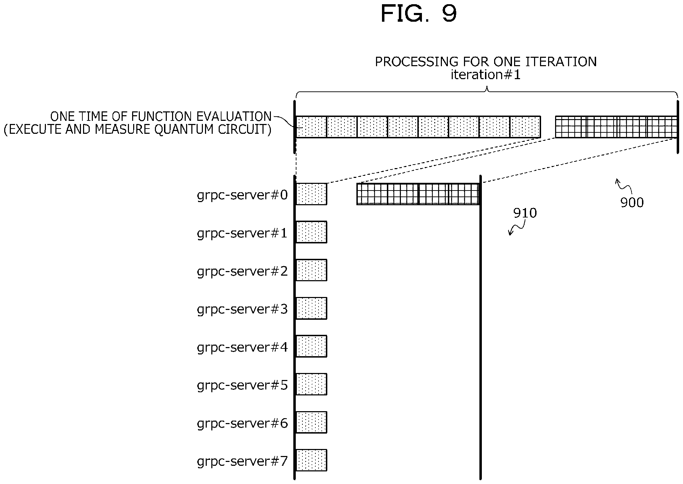

Next, description of FIG. 9 will be made, and the gRPC distribution processing will be described.

FIG. 9 is an explanatory diagram illustrating an effect of processing time reduction by the gRPC distribution processing. In the example in FIG. 9, since the number of elements of the parameter theta[] is eight, eight times of quantum calculation processing is needed for the gradient calculation. Furthermore, in the example in FIG. 9, the parameter theta[] is updated, by executing the quantum calculation processing four times, by the line search method or the like using the obtained gradient value. In the example in FIG. 9, each rectangle represents that the objective function is evaluated once in the optimization algorithm, that is, the quantum calculation processing is executed once as illustrated in FIG. 6. In the example in FIG. 9, each stipple-hatched rectangle represents, for example, that eight times of execution of the quantum circuit corresponding to the gradient calculation. In the example in FIG. 9, for example, each cross-hatched rectangle represents four times of execution of the quantum circuit for updating a value of a next parameter theta[].

A reference numeral 900 in FIG. 9 indicates a length of a processing time required for one iteration as a length in the horizontal direction, in a case where the single arithmetic device 212 executes a single iteration. For example, as indicated by the reference numeral 900, the processing time required for one iteration is a length of 12 rectangles.

On the other hand, a reference numeral 910 in FIG. 9 indicates the length of the processing time required for one iteration as a length in the horizontal direction, in a case where the distribution processing number = 8 and eight pieces of processing for realizing the gradient calculation, in one iteration, is distributed to eight grpc-servers 810, 811, and .... For example, as indicated by the reference numeral 910, since the eight pieces of processing for realizing the gradient calculation is processed in parallel and this needs only one rectangle, the processing time required for one iteration is a length of five rectangles. In this way, according to the gRPC distribution processing, it is possible to reduce the processing time of a gradient calculation portion.

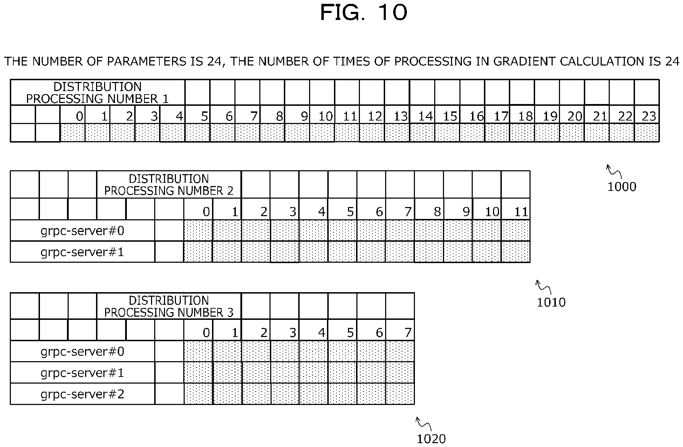

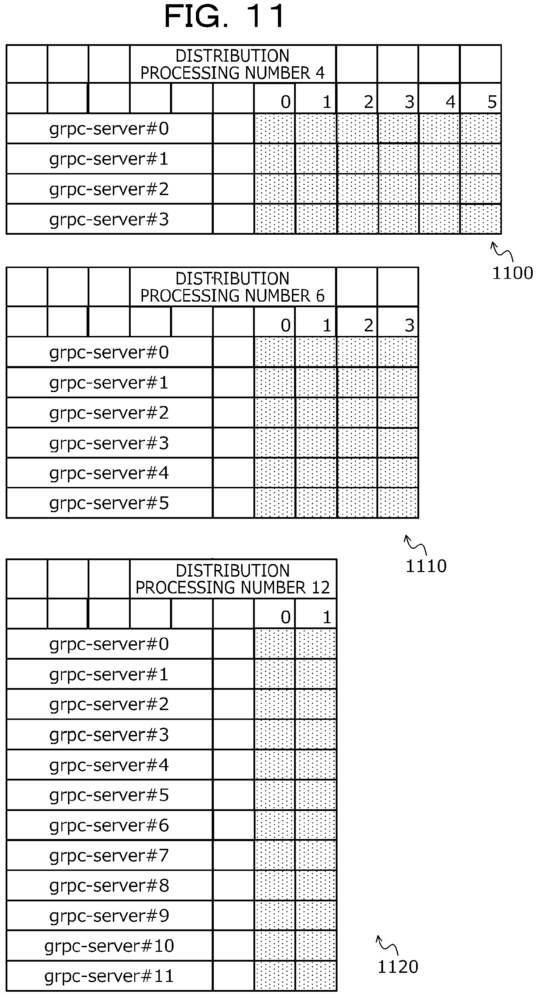

Next, description of FIGs. 10 and 11 will be made. A tendency of a change in the processing time required for the gradient calculation, according to a change in the distribution processing number in the gRPC distribution processing will be described.

FIGs. 10 and 11 are explanatory diagrams illustrating the tendency of the change in the processing time required for the gradient calculation. In the examples in FIGs. 10 and 11, since the number of elements of the parameter theta[] is 24, it is assumed that 24 times of quantum calculation processing for realizing the gradient calculation exist. In the examples in FIGs. 10 and 11, each stipple-hatched rectangle corresponds to one quantum calculation processing illustrated in FIG.6. A grpc-server #i corresponds to any one of the grpc-servers 810, 811, and ... in FIG. 8.

A table 1000 in FIG. 10 corresponds to a case where the distribution processing number = 1. As indicated in the table 1000, the processing time required for the gradient calculation is a length of 24 rectangles. A table 1010 in FIG. 10 corresponds to a case where the distribution processing number = 2. As indicated in the table 1010, the processing time required for the gradient calculation is a length of 12 rectangles. For example, in a case where the distribution processing number = 2, two grpc-servers are used. A table 1020 in FIG. 10 corresponds to a case where the distribution processing number = 3. As indicated in the table 1020, the processing time required for the gradient calculation is a length of eight rectangles. For example, in a case where the distribution processing number = 3, three grpc-servers are used.

Next, description of FIG. 11 will be made. A table 1100 in FIG. 11 corresponds to a case where the distribution processing number = 4. A table 1110 in FIG. 11 corresponds to a case where the distribution processing number = 6. A table 1120 in FIG. 11 corresponds to a case where the distribution processing number = 12. In this way, as the distribution processing number is larger, the processing time required for the gradient calculation tends to be shorter. On the other hand, as the distribution processing number is larger, the number of grpc-servers increases, that is, the number of arithmetic devices 212 to be used tends to increase.

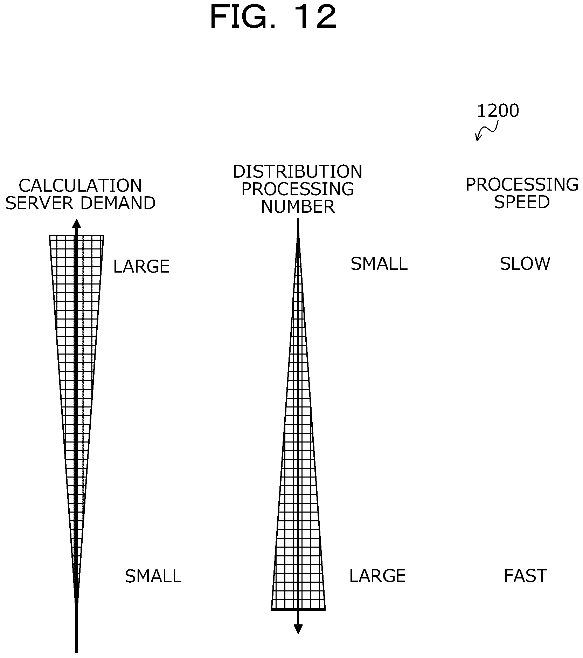

Next, description of FIG. 12 will be made, and a guideline for causing the distribution processing number to be variable, according to a change in the demand of the arithmetic device 212, in the arithmetic system 210 will be described. The demand corresponds to an amount of processing using the arithmetic device 212. Therefore, as the demand is larger, the number of available arithmetic devices 212 decreases.

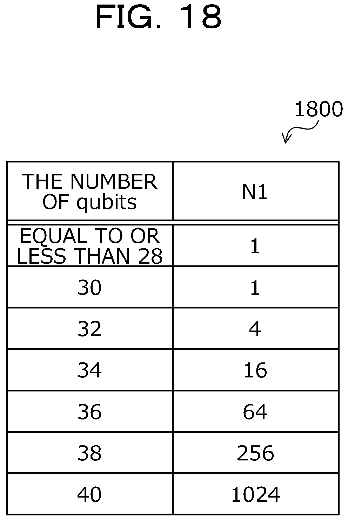

FIG. 12 is an explanatory diagram illustrating the guideline for causing the distribution processing number to be variable. As indicated in a relationship diagram 1200 in FIG. 12, as the demand is less and the number of available arithmetic devices 212 is larger, the information processing device 100 can increase the distribution processing number, and it is considered to be preferable that the distribution processing number is caused to be variable, so as to increase a processing speed. Therefore, it is desirable for the information processing device 100 to appropriately determine the distribution processing number, based on the number of available arithmetic devices 212. A specific example in which the information processing device 100 determines the distribution processing number will be described later with reference to FIGs. 18 to 25.

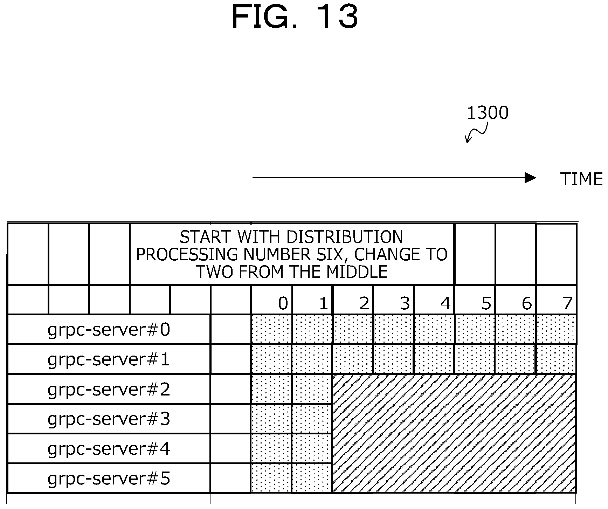

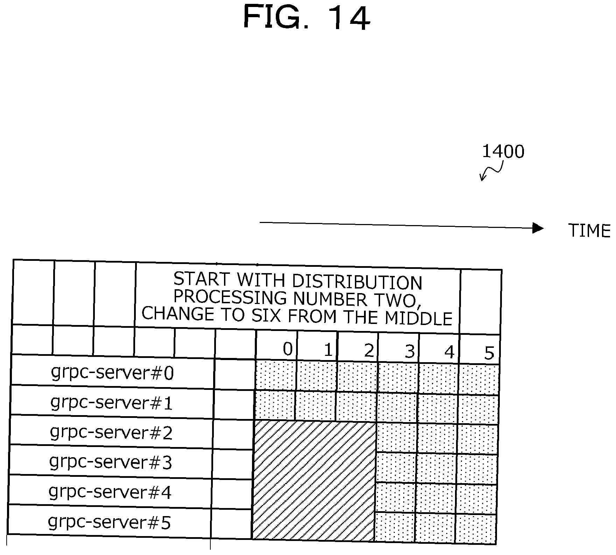

Here, although a case where the distribution processing number is fixed until one iteration is completed has been described, the present embodiment is not limited to this. For example, there may be a case where the distribution processing number is changed, according to the change in the number of available arithmetic devices 212, before the one iteration is completed. An example in which the information processing device 100 changes the distribution processing number before the one iteration is completed will be described later with reference to FIGs. 13 and 14.

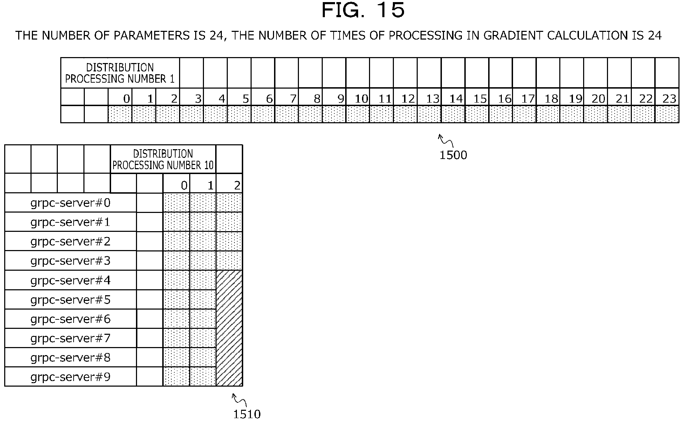

Although a case has been described where the distribution processing number is a divisor for the number of elements in the parameter theta[], the present embodiment is not limited to this. For example, there may be a case where the distribution processing number is a number other than the divisor for the number of elements in the parameter theta[]. An example in which the distribution processing number is a number other than the divisor for the number of elements in the parameter theta[] will be described later with reference to FIG. 15.

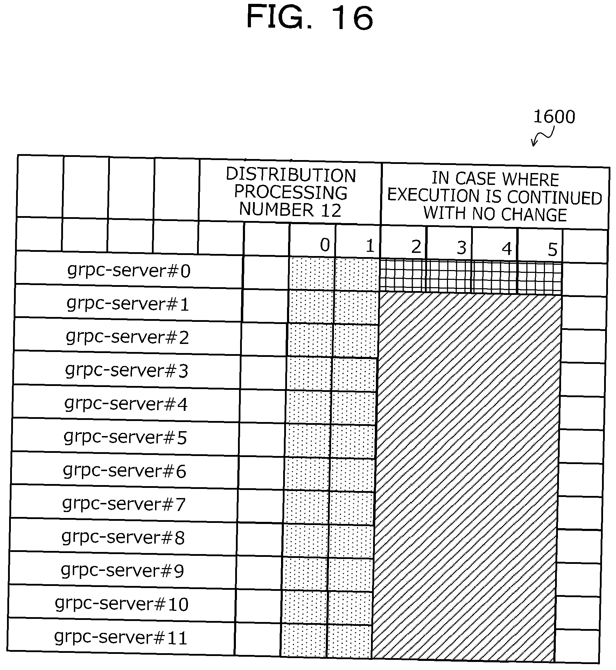

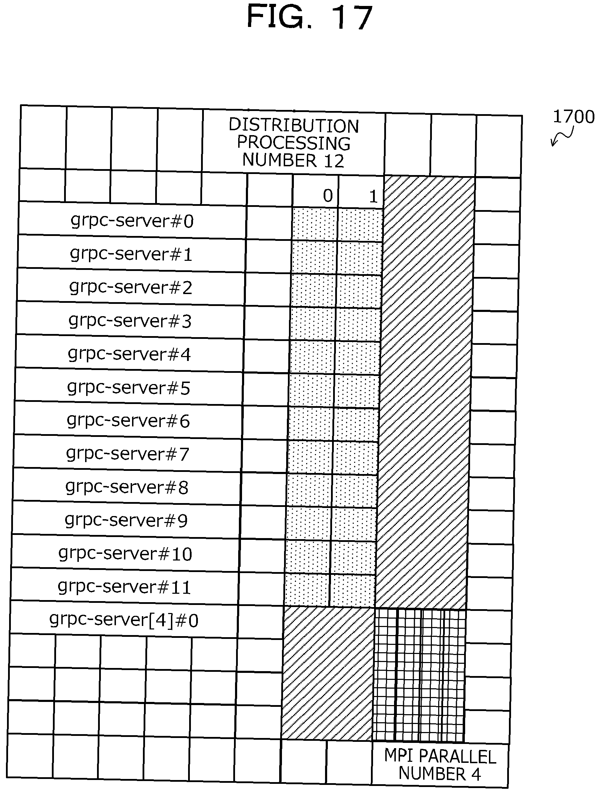

Although it is not possible to simultaneously execute the quantum calculation processing when the parameter theta[] is updated by the line search method or the like by gRPC distribution, there is a possibility that a speed can be increased by executing the quantum calculation processing in MPI parallel. An example in which the speed of the processing for updating the parameter theta[] is increased in the MPI parallel will be described with reference to FIGs. 16 and 17.

Here, first, description of FIGs. 13 and 14 will be made.

FIGs. 13 and 14 are explanatory diagrams illustrating an example in which the distribution processing number is changed in the middle. In the examples in FIGs. 13 and 14, since the number of elements of the parameter theta[] is 24, the number of times of quantum calculation processing corresponding to the gradient calculation is 24. In the examples in FIGs. 13 and 14, each stipple-hatched rectangle corresponds to one quantum calculation processing illustrated in FIG.6.

A table 1300 in FIG. 13 indicates an example in which the gradient calculation is started with the distribution processing number = 6 and the distribution processing number is changed to the distribution processing number = 2 in the middle. At a timing when processing for two rectangles is completed by six grpc-servers, the distribution processing number is changed to the distribution processing number = 2. For example, after being changed to the distribution processing number = 2, the four grpc-servers are unnecessary. Therefore, by releasing the arithmetic devices 212 configuring that, the four grpc-servers can be diverted to another processing. For example, in a hatched portion, the arithmetic device 212 can be used for another processing. In this way, the information processing device 100 can cope with a situation in which the demand of the calculation server included in the arithmetic device 212 changes from moment to moment, by changing the distribution processing number.

Next, description of FIG. 14 will be made. A table 1400 in FIG. 14 indicates an example in which the gradient calculation is started with the distribution processing number = 2 and the distribution processing number is changed to the distribution processing number = 6 in the middle. At a timing when processing for three rectangles is completed by the two grpc-servers, the arithmetic device 212 is added, the number of qulacs-servers is increased to six, and the processing is continued. As a result, the time required for the gradient calculation can be shortened, as compared with a case where the entire processing is executed with the distribution processing number = 2. This is a case where, although the demand of the calculation server configuring the arithmetic device 212 is large and only up to two qulacs-servers can be prepared at the beginning of the gradient calculation, the demand of the calculation server decreases and the number of qulacs-servers can be increased to six, as time elapses. In this way, the information processing device 100 can cope with the change in the calculation server demand, by changing the distribution processing number.

Next, an example will be described in which the distribution processing number is a number other than the divisor for the number of elements in the parameter theta[], with reference to FIG. 15.

FIG. 15 is an explanatory diagram illustrating an example in which the distribution processing number is a number other than the divisor for the number of elements in the parameter theta[]. In the example in FIG. 15, the number of elements in the parameter theta[] is 24, and 24 times of quantum calculation processing corresponding to the gradient calculation is needed. In the example in FIG. 15, each stipple-hatched rectangle corresponds to one time of execution of the quantum calculation processing illustrated in FIG. 6.

A table 1500 in FIG. 15 corresponds to a case where the distribution processing number = 1. As indicated in the table 1500, the processing time required for the gradient calculation is a length of 24 rectangles. A table 1510 in FIG. 15 is a case where the distribution processing number is 10 that is not the divisor for the number of elements of the parameter theta[]. As indicated in the table 1510, the processing time required for the gradient calculation is a length of three rectangles.

In this case, by starting with the distribution processing number = 10 and changing the distribution processing number to the distribution processing number = 4 in the middle, the information processing device 100 can divert the arithmetic devices 212 for six qulacs-servers to another processing, in a hatched portion. In this way, it is possible to cope with the change in the calculation server demand.

Next, an example in which the speed of the execution of the quantum calculation processing when the parameter theta[] is updated can be increased by MPI parallel processing will be described, with reference to FIGs. 16 and 17. Four times of quantum calculation processing when the parameter theta[] is updated represents a case where simultaneous execution is not possible by the gRPC distribution processing.

In the examples in FIGs. 16 and 17, since the number of elements of the parameter theta[] is 24, 24 times of quantum calculation processing corresponding to the gradient calculation exists. Furthermore, four times of the quantum calculation processing for updating the parameter theta[] exists. In the examples in FIGs. 16 and 17, each rectangle corresponds to one quantum calculation processing illustrated in FIG. 6. In the examples in FIGs. 16 and 17, each stipple-hatched rectangle represents, for example, any one of 24 pieces of processing for realizing the gradient calculation. In the examples in FIGs. 16 and 17, for example, each cross-hatched rectangle represents any one of four pieces of processing for updating the parameter theta[].

A table 1600 in FIG. 16 corresponds to a case where the grpc-server same as that in the gradient calculation is continuously used for the four times of processing for updating the parameter theta[]. In the table 1600, it is assumed that the distribution processing number = 12. As indicated in the table 1600, a processing time required when the parameter theta[] is searched is a length for four rectangles.

Next, description of FIG. 17 will be made. A table 1700 in FIG. 17 corresponds to a case where four pieces of processing for updating the parameter theta[] is executed by a grpc-server with a large MPI parallel number. In the table 1700, by performing execution by a grpc-server [4] #0 with an increased MPI parallel number = 4, for example, it is assumed that execution can be performed at a higher speed than the grpc-server #0, for example, in a time for two rectangles.

As indicated in the table 1700, by executing the four pieces of processing for updating the parameter theta[] with the grpc-server that can execute the processing at a higher speed, the processing time for one iteration can be shortened. An effect of such an increase in the speed can be achieved by allocating the arithmetic devices 212 configuring 12 grpc-servers first, and then, releasing the arithmetic devices 212 configuring the 12 grpc-servers, and allocating the arithmetic device 212 corresponding to the grpc-server that can perform the execution at a higher speed with the increased MPI parallel number, by the information processing device 100.

### (Specific Example for Controlling Arithmetic System 210)

Next, a specific example will be described in which the information processing device 100 controls the arithmetic system 210 so as to determine the MPI parallel number and the distribution processing number and to execute the quantum chemical calculation by the VQE, in the first example, with reference to FIGs. 18 to 26.

FIGs. 18 to 26 are explanatory diagrams illustrating a specific example for controlling the arithmetic system 210, in the first example. In FIG. 18, the information processing device 100 stores a table 1800 to be a guideline for determining the MPI parallel number. The table 1800 is referred, for example, when the information processing device 100 determines the MPI parallel number based on the number of qubits. The table 1800 is implemented by, for example, the storage region such as the memory 302 or the recording medium 305 of the information processing device 100 illustrated in FIG. 3.

As illustrated in FIG. 18, the table 1800 includes fields of the number of qubits (= number of qubits) and N1. In the table 1800, by setting information in each field for each number of qubits, candidate information is stored as a record. In the field of the number of qubits, the number of qubits of the quantum circuit is set. In the field of N1, an MPI parallel number N1 corresponding to the number of qubits is set.

In a quantum simulator mpiQulacs, when it is assumed that the number of qubits be q, a necessary memory capacity increases in proportion to a q-th power of 2. When the number of qubits is large and the memory usage amount increases and exceeds a main storage capacity of a single calculation server, it is necessary to increase the MPI parallel number. The table 1800 that holds a correspondence relationship between the number of qubits and N1 holds a lower limit value of the MPI parallel number N1 necessary for handling the designated number of qubits.

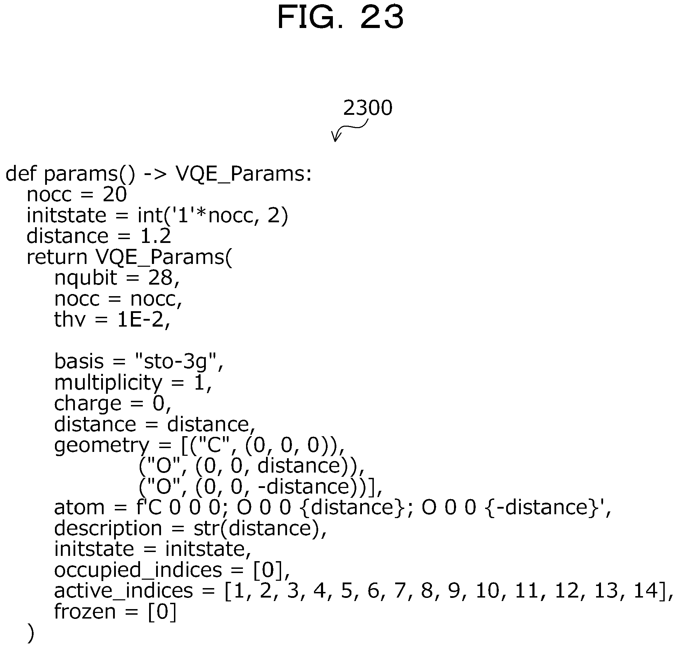

Next, description of FIG. 19 will be made. In FIG. 19, the information processing device 100 stores a table 1900 to be a guideline for determining the MPI parallel number. The table 1900 is referred, for example, when the information processing device 100 determines the MPI parallel number based on information regarding the target molecule of the VQE. The information regarding the target molecule includes, for example, a type of the target molecule. The information regarding the target molecule is, for example, as in FIG. 23 and includes detailed information such as arrangement of atoms in the target molecule. However, in FIG. 19, only the number of qubits and a name of a molecule are represented and illustrated, and others are omitted. The table 1900 is implemented by, for example, the storage region such as the memory 302 or the recording medium 305 of the information processing device 100 illustrated in FIG. 3.

As illustrated in FIG. 19, the table 1900 includes fields of the number of qubits, a molecule, N1, and an execution time. The table 1900 is configured to store a plurality of records, each of which includes a set of: the number of qubits, information regarding the molecule, a parameter N1, and the execution time. In the field of the number of qubits, the number of qubits of the quantum circuit is set. In the field of the molecule, a type of a molecule is set. It is sufficient to regard that, in the field of the molecule, a label value that can uniquely specify detailed information of the molecule is set. It is assumed that detailed molecule information as illustrated in FIG. 23 can be referred, from the label value, and the detailed molecule information is stored in the storage region such as the memory 302 or the recording medium 305 of the information processing device 100 illustrated in FIG. 3, for example.

In the field of N1, the MPI parallel number N1 is set. In the field of the execution time, a sample of an execution time when the quantum calculation processing is executed using the number of qubits, the type of the molecule, and the value of the MPI parallel number N1 set in the same record is set. The sample is, for example, a value of the execution time measured when the quantum calculation processing has been executed in the past.

As in the table 1800 described above, the memory usage amount required for the quantum simulator increases according to the number of qubits, and the lower limit value of the MPI parallel number is determined according to the number of qubits. In the table 1900, only a value of N1 equal to or more than the minimum necessary MPI parallel is set. For example, this is why N1 is equal to or more than 64 in a record of 36 qubits.

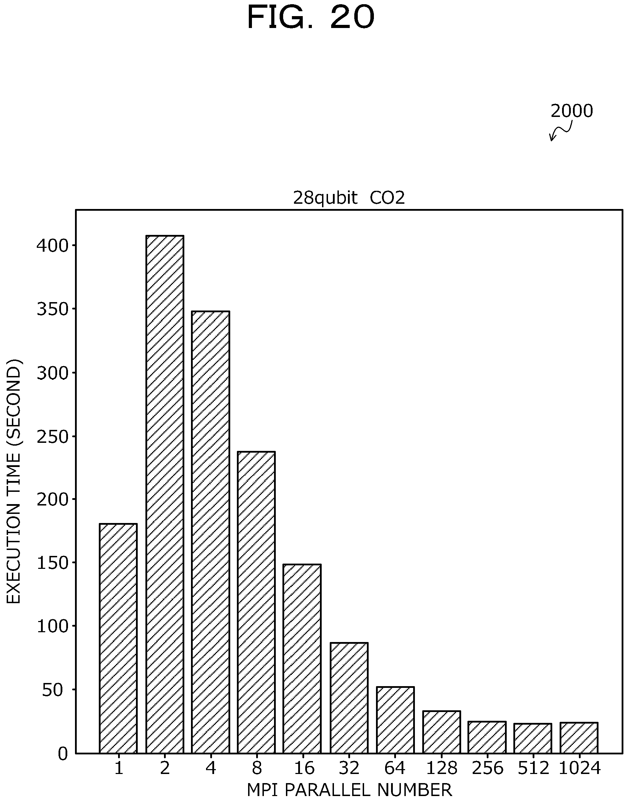

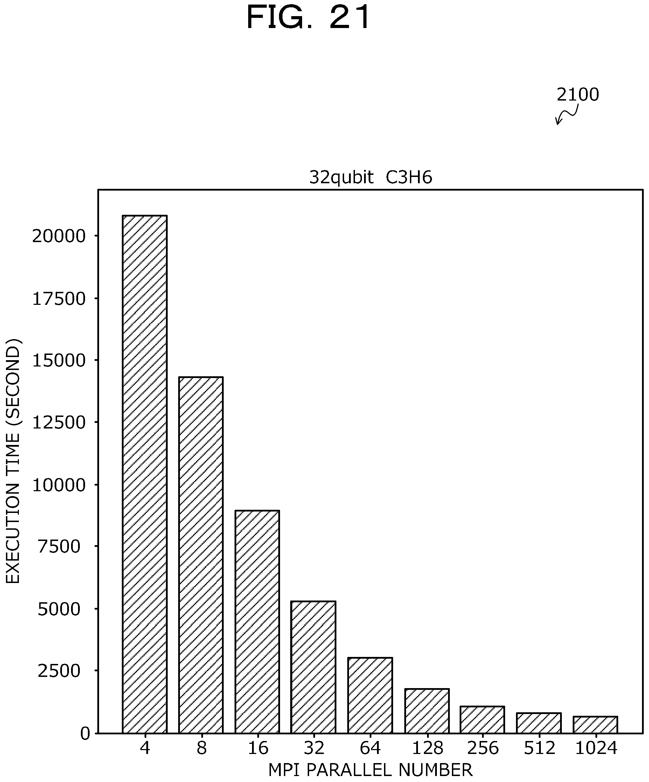

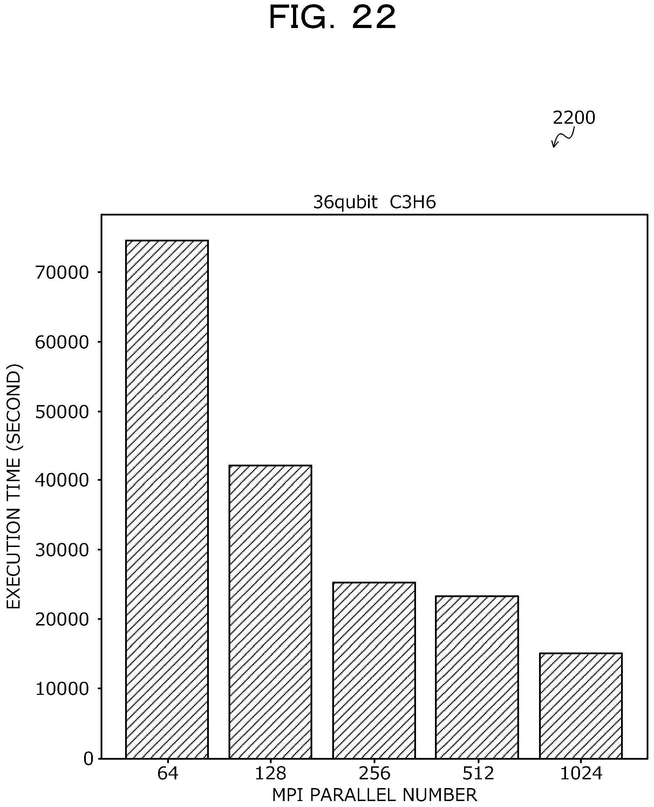

Next, description of FIGs. 20 to 22 will be made. FIGs. 20 to 22 are bar graphs illustrating the MPI parallel number N1 on the horizontal axis and the execution time on the vertical axis, in the table 1900. A graph 2000 in FIG. 20 is a case where the number of qubits = 28 and the type of the molecule = CO2. A graph 2100 in FIG. 21 is a case where the number of qubits = 32 and the type of the molecule = C3H6. A graph 2200 in FIG. 22 is a case where the number of qubits = 36 and the type of the molecule = C3H6.

Although FIG. 20 is a remarkable example, the execution time is not necessarily shortened as the MPI parallel number N1 increases. Specifically, in the MPI parallel, data is exchanged each other between the arithmetic devices 212 via the network such as the InfiniBand, when the MPI parallel number N1 increases, a communication cost increases, and there is a case where the speed is decreased in the worst case, or even if the speed increases, the increase in the speed slows down, and this is uneconomical. Therefore, it is considered that an appropriate MPI parallel number N1 is different, according to a combination of the number of qubits and the information regarding the molecule. Therefore, it is desirable that the information processing device 100 determines the appropriate MPI parallel number N1, according to the combination of the number of qubits and the information regarding the molecule.

Next, description of FIGs. 23 to 25 will be made, and an example will be described in which the information processing device 100 determines the appropriate MPI parallel number N1 and a distribution processing number N2. In FIG. 23, the information processing device 100 acquires information 2300 regarding the target molecule related to the optimization problem. The information 2300 regarding the target molecule includes, for example, a type of the target molecule = CO2. The information 2300 regarding the target molecule includes, for example, the number of qubits = 28. The information 2300 regarding the target molecule may include, for example, arrangement of atoms in the target molecule or the like.

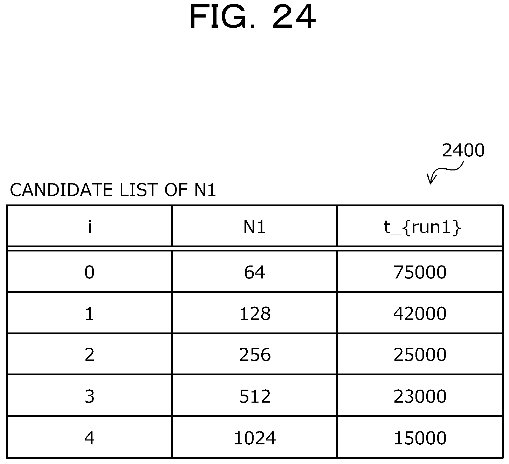

The information processing device 100 searches the table 1900 using (the number of qubits, molecule) as a search condition and extracts a record (N1, execution time). Here, it is assumed that the number of qubits = 28, the molecule = CO2, and an extraction result be FIG. 24. For simple description, in FIG. 24, the execution time is replaced with an approximate number. However, originally, a numerical value same as that in the table 1900 is used. A field i in FIG. 24 indicates a serial number of a record. A field t_{run1} indicates an execution time. A candidate list of N1 is a list of pairs (value of MPI parallel number that can be set to N1, execution time when execution is performed with MPI parallel number).

The information processing device 100 has found five records indicated in a table 2400, as the candidate list including the combination of the MPI parallel number N1 and the sample of the execution time.

Here, a case has been described where the information processing device 100 has found the candidate list of the MPI parallel number N1 from the table 1900. However, the present embodiment is not limited to this. For example, in a case where it is not possible to find the MPI parallel number N1 and the sample of the execution time in the table 1900, the information processing device 100 refers to the table 1800 instead, and acquires the MPI parallel number N1 and a value in a row below N1 as values of the candidate list of N1, from the number of qubits. For example, if the number of qubits = 32, the values of N1 of the candidate list are [4, 16, 32, 64, 256, 1024]. Then, the execution time of the candidate list is set to an undetermined value (n/a).

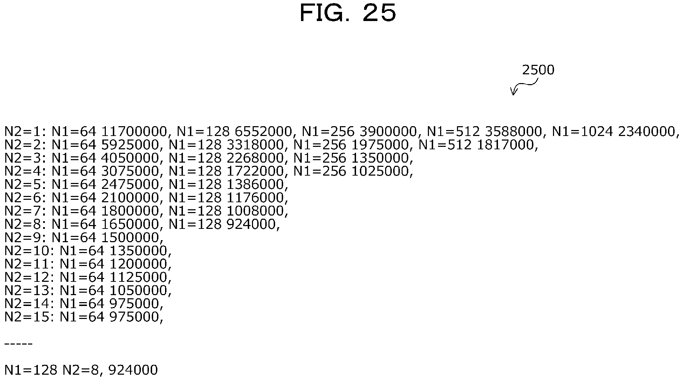

Next, description of FIG. 25 will be made. FIG. 25 illustrates a flow until values of N1 and N2 are determined. In FIG. 25, the information processing device 100 acquires the number of currently available arithmetic devices 212, by inquiring the control device 211 of the number of currently available arithmetic devices 212. It is assumed that the control device 211 collect information such as the number of accumulated jobs that an own device is in charge of, from the arithmetic device 212 and have calculated the number of currently available arithmetic devices 212. In the example in FIG. 25, it is assumed that the information processing device 100 acquire the number of currently available arithmetic devices 212 = 1024.

The information processing device 100 solves an optimal problem for determining N1 and N2, so as to minimize a cost function calculated by N1 and N2, under a constraint condition that a product of the MPI parallel number N1 and the distribution processing number N2 is within a range that does not exceed the acquired number = 1024. An example of the cost function is an expected execution time when one iteration of calculation processing of the VQE is executed, under a condition of N1 and N2 that are numbers to be parallel distribution processed. A method for calculating the cost function is indicated in the formula (1) to be described later. In FIG. 25, when N1 = 64 and N2 = 1, N2 = 1 : N1= 64 11700000 indicates that the value of the cost function (expected execution time of one iteration) is 11700000 (seconds). A possible value of N1 is a value included in the candidate list of N1. A possible value of N2 is an integer equal to or more than one and equal or less than the number of currently available arithmetic devices 212 (1024 in this described example). Since the optimization problem for determining N1 and N2 is simple in this example and can be easily solved in a round-robin manner, FIG. 24 lists all in a round-robin manner. As a finally obtained solution, when N1 = 128 and N2 = 8, a minimum value of the expected execution time that is 92400 seconds is obtained. As another example of the cost function, it is considered to make a multi-purpose optimization problem so as to minimize both of the execution time and the number of arithmetic devices 212, by linearly combining the formula for minimizing the expected execution time of one iteration described above and N1 * N2 that is the number of necessary arithmetic devices 212, with an appropriate weighting coefficient.
[Expression 1] ${t}_{run 1} \times \left⌈{N}_{param}/{N}_{2}\right⌉ + {t}_{run 1} \times {N}_{serialrun}$

The number N_{param} is the number of parameters that is k in FIG. 6 and is a constant value. The number N_{serialrun} is an average number of times of serially executing the quantum calculation processing, and corresponds to four times in a portion where four rectangles are continuously and horizontally arranged on the right side in FIG. 9, and is a constant value. The serial execution is performed, for example, in the evaluation of the objective function (execution of quantum calculation processing in FIG. 6, in VQE), executed when a linear search method is executed to update the parameter theta[]. A key bracket (ceil) is processing for rounding a numerical value after a decimal point and represents round-up processing. The number t_{run1} is a processing time when the quantum calculation processing is executed once and is a value selected from among the values included in the candidate list and is a value extracted from t_{run1} in the table 2400 in FIG. 24, specifically, the value of the execution time in the table 1900 in FIG. 19. Since t_{run1} is a value that changes depending on the number of qubits, the information regarding the molecule, and N1, when the value is extracted from the table 1900 or the table 2400, one value of the execution time is selected from records of which the value of N1 matches. Therefore, when the optimization problem is solved here, it can be regarded that t_{run1} is a value that is immediately determined according to N1. Therefore, the formula 1 can be regarded as functions of N1 and N2 and can be adopted as the objective function of the optimization problem. Note that, when the value of t_{run1} is an undetermined value n/a, processing proceeds using an appropriate dummy value 1.

Specifically, the information processing device 100 determines the MPI parallel number N1 and the distribution processing number N2 as a combination that minimizes the calculated expected execution time. A table 2500 indicates one or more combinations of the MPI parallel number N1 and the distribution processing number N2 and an expected execution time of one iteration corresponding to each of the combinations. In the example in FIG. 25, specifically, the information processing device 100 determines the MPI parallel number N1 = 128 and the distribution processing number N2 = 8. An expected execution time of one iteration corresponding to a combination of the MPI parallel number N1 = 128 and the distribution processing number N2 = 8 is 92400 seconds.

The information processing device 100 controls the arithmetic system 210 so as to execute the plurality of times of quantum calculation processing including the gradient calculation, with the determined MPI parallel number N1 and distribution processing number N2 and to complete the quantum chemical calculation by the VQE. The information processing device 100 may receive a result of executing the quantum chemical calculation by the VQE, from the control device 211. The information processing device 100 may update the table 1900, based on the result of executing the quantum calculation processing. At this time, it is expected that the undetermined value n/a is updated with a numerical value of an actual execution result or a value having a large error caused by variation of the processing time is updated to a value that is considered to be statistically accurate. Note that, in a case where the undetermined value n/a is in the table 1900, by changing the value of N1 for each grpc-server at the time of distribution processing and setting the value as N1, N1 * 2, N1 * 4, ..., it is possible to make a devisal to update the undetermined value n/a.

The information processing device 100 may control the arithmetic system 210, so as to execute the plurality of times of quantum calculation processing with the determined MPI parallel number N1 and distribution processing number N2 and to execute one iteration. The information processing device 100 may determine the MPI parallel number N1 and the distribution processing number N2 again every time before executing a next iteration. As a result, the information processing device 100 can determine the MPI parallel number N1 and the distribution processing number N2, according to the demand of the arithmetic device 212 that changes with time. Therefore, the information processing device 100 can improve the operation efficiency of the arithmetic device 212 and easily ensure the use fairness of the arithmetic device 212.

The information processing device 100 may receive a result of executing the one iteration, from the control device 211. The information processing device 100 may update the table 1900, based on the result of executing the one iteration.

Here, in a case where the information processing device 100 does not find the candidate list, corresponding to the combination of the number of qubits and the type of the target molecule, the information processing device 100 may update the table 1900. For example, there may be a case where the information processing device 100 controls the arithmetic system 210 so as to execute the plurality of times of quantum calculation processing respectively with the different MPI parallel numbers N1. Thereafter, the information processing device 100 may update the table 1900, based on a result of executing the plurality of times of quantum calculation processing respectively with the different MPI parallel numbers N1.

Specifically, the information processing device 100 controls the arithmetic system 210, so as to execute the plurality of times of quantum calculation processing respectively with the different MPI parallel numbers N1, in a first iteration. The information processing device 100 receives the result of executing the plurality of times of quantum calculation processing respectively with the different MPI parallel numbers N1 in the first iteration, from the control device 211. The information processing device 100 updates the table 1900, based on the result of executing the plurality of times of quantum calculation processing respectively with the different MPI parallel numbers N1 in the first iteration.

As a result, hereinafter, the information processing device 100 can easily and appropriately determine the MPI parallel number N1 and the distribution processing number N2. Specifically, the information processing device 100 may determine the MPI parallel number N1 and the distribution processing number N2, based on the updated table 1900, in a second and subsequent iterations.

Furthermore, the information processing device 100 can appropriately determine how large each of the MPI parallel number and the distribution processing number is preferably increased. In a case where the number of qubits is relatively small, the information processing device 100 can make the MPI parallel number be smaller and make the distribution processing number be larger. As a result, the information processing device 100 can improve an operation rate of the arithmetic device 212, while improving the efficiency of the quantum chemical calculation by the VQE.

On the other hand, in a case where the number of qubits is relatively large, the information processing device 100 can increase the distribution processing number within a range of the available arithmetic devices 212, while increasing the MPI parallel number. As a result, the information processing device 100 can improve the operation rate of the arithmetic device 212, while improving the efficiency of the quantum chemical calculation by the VQE.

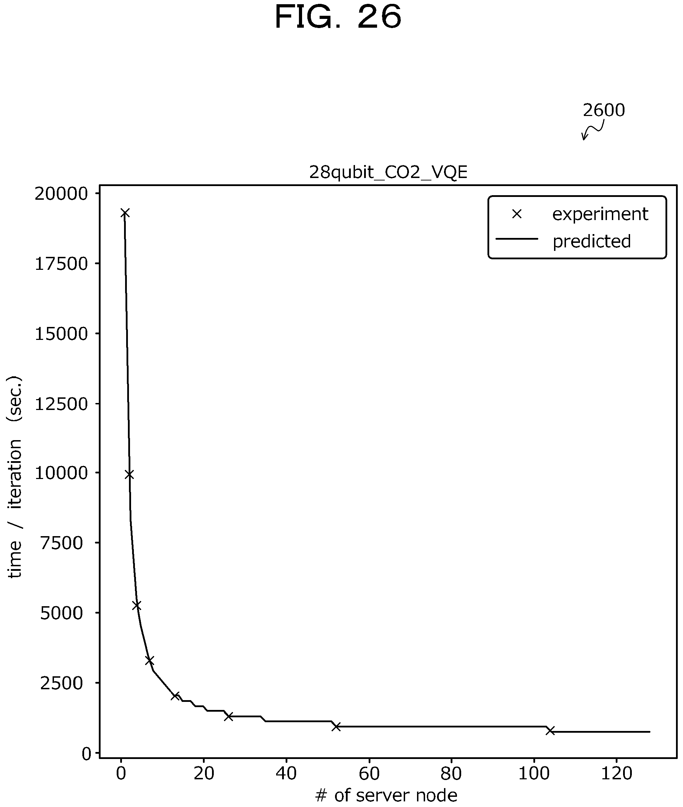

Next, description of FIG. 26 will be made. A graph 2600 in FIG. 26 indicates a tendency of a change in the processing time for one iteration with respect to a change in the distribution processing number. The vertical axis of the graph 2600 indicates a processing time for one iteration. The horizontal axis of the graph 2600 indicates the number of arithmetic devices 212 in a case of the distribution processing number N2. N1 = 1.

An x-point experiment in the graph 2600 represents an actual measurement value of the processing time for one iteration with respect to the distribution processing number N2. Specifically, the actual measurement value is a value obtained by dividing a processing time of the entire VQE by the number of iterations. A line predicted in the graph 2600 indicates a tendency of a change in an estimated value of the processing time for one iteration, with respect to the change in the distribution processing number N2 according to the above formula (1). As illustrated in the graph 2600, since the estimated value of the processing time matches the actual measurement value, it is possible to estimate validity of the formula 1.

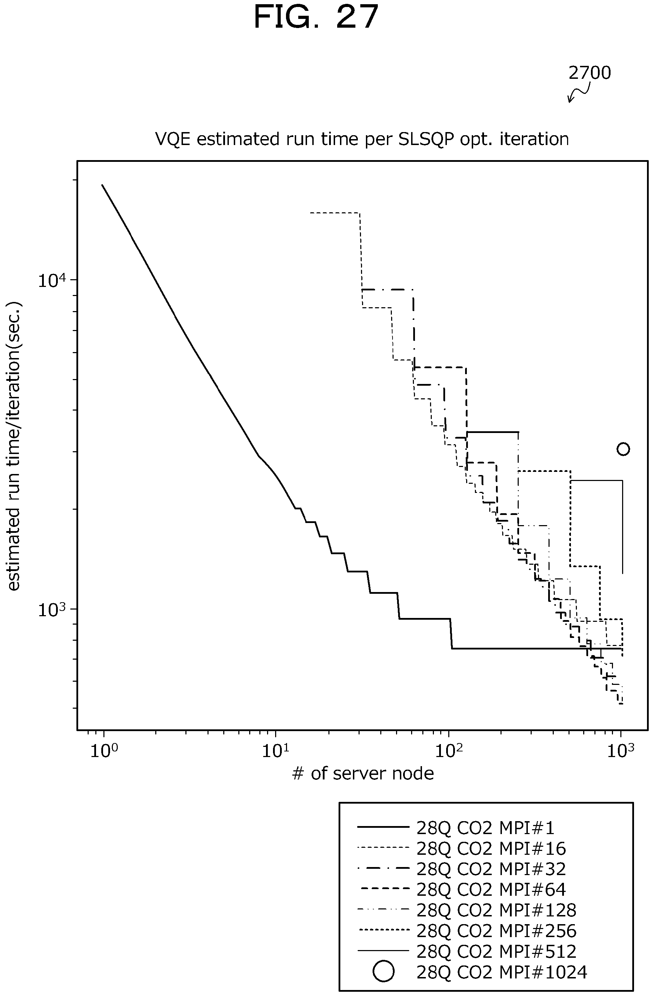

Next, an example of an effect by the information processing device 100 in the first example will be described with reference to FIGs. 27 to 34.

FIGs. 27 to 34 are explanatory diagrams illustrating an example of the effect in the first example. A graph 2700 in FIG. 27 corresponds to a combination of the number of qubits = 28 and the type of the molecule = CO2. The horizontal axis of the graph 2700 in FIG. 27 is the product of the MPI parallel number N1 and the distribution processing number N2 and indicates the number of arithmetic devices 212 to be used. The vertical axis of the graph 2700 in FIG. 27 is the expected execution time for one iteration calculated by the above formula (1).

The graph 2700 corresponds to a case where the information processing device 100 considers the processing time for one iteration of all the combinations of the MPI parallel number N1 and the distribution processing number N2 in a round-robin manner. The numerical value is calculated in a procedure similar to that in FIG. 25 described above. Each line in the graph 2700 exists for each MPI parallel number N1. For the optimization problem in the above formula 1, a minimum plot point in the vertical axis direction is a solution. For the above multi-purpose optimization problem, a lowermost and leftmost plot point forms a pareto front.

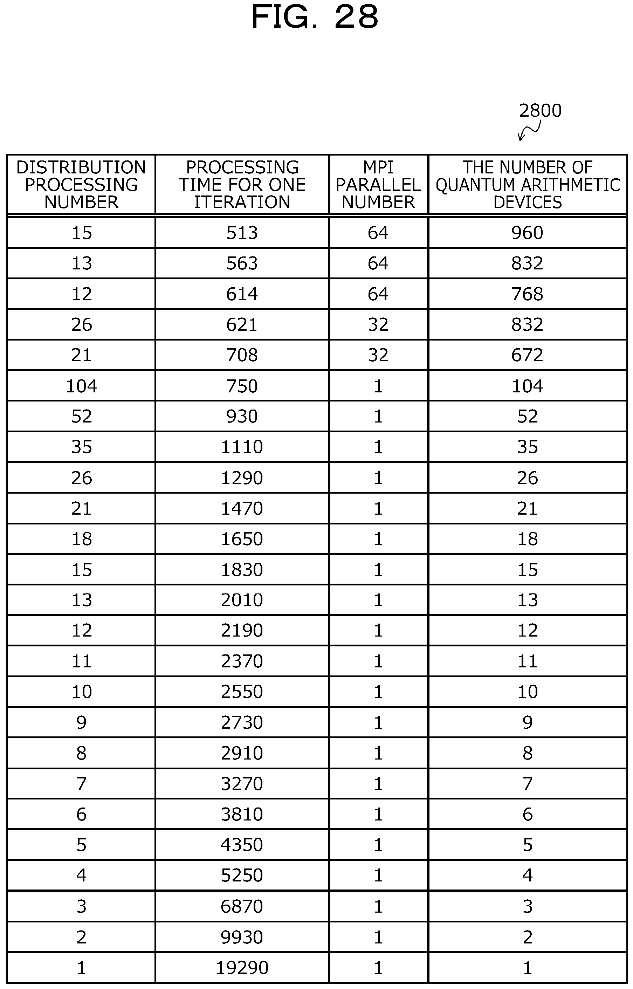

Next, description of FIG. 28 will be made. A table 2800 in FIG. 28 corresponds to the graph 2700 in FIG. 27 and indicates values of significant plot points. The table 2800 represents the MPI parallel number N1, the distribution processing number N2, the expected execution time for one iteration in the quantum chemical calculation by the VQE, and the number of arithmetic devices 212 to be used in the quantum chemical calculation by the VQE. The number of arithmetic devices 212 corresponds to the product of the MPI parallel number N1 and the distribution processing number N2. The table 2800 includes the solution for the optimization problem described above, for example, a processing time 513 when N1 = 64 and N2 = 15.

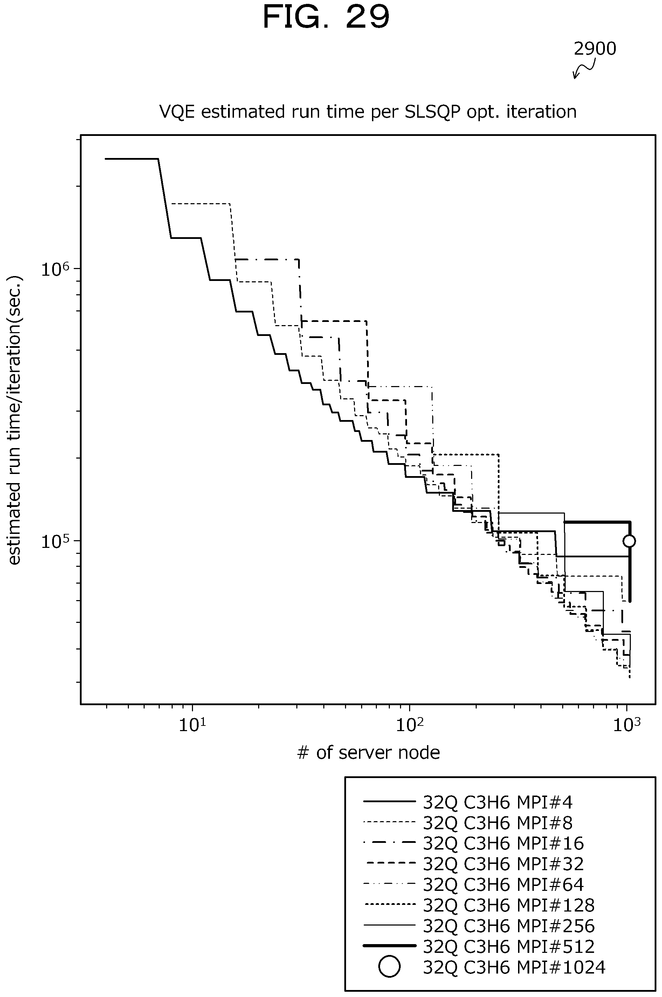

Next, description of FIG. 29 will be made. A graph 2900 in FIG. 29 corresponds to a combination of the number of qubits = 32 and the type of the molecule = C3H6. Others are similar to those in FIG. 27.

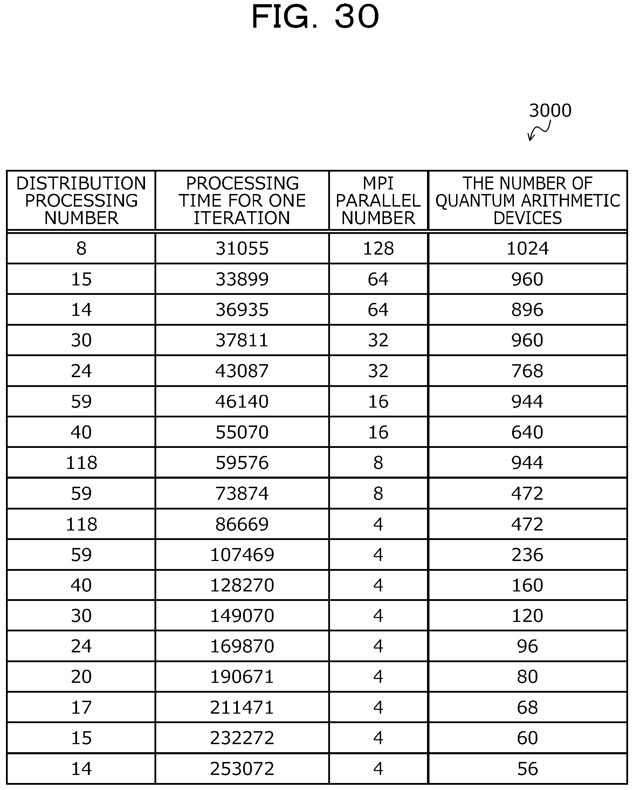

Next, description of FIG. 30 will be made. A table 3000 in FIG. 30 corresponds to the graph 2900 in FIG. 29. Others are similar to those in FIG. 28.

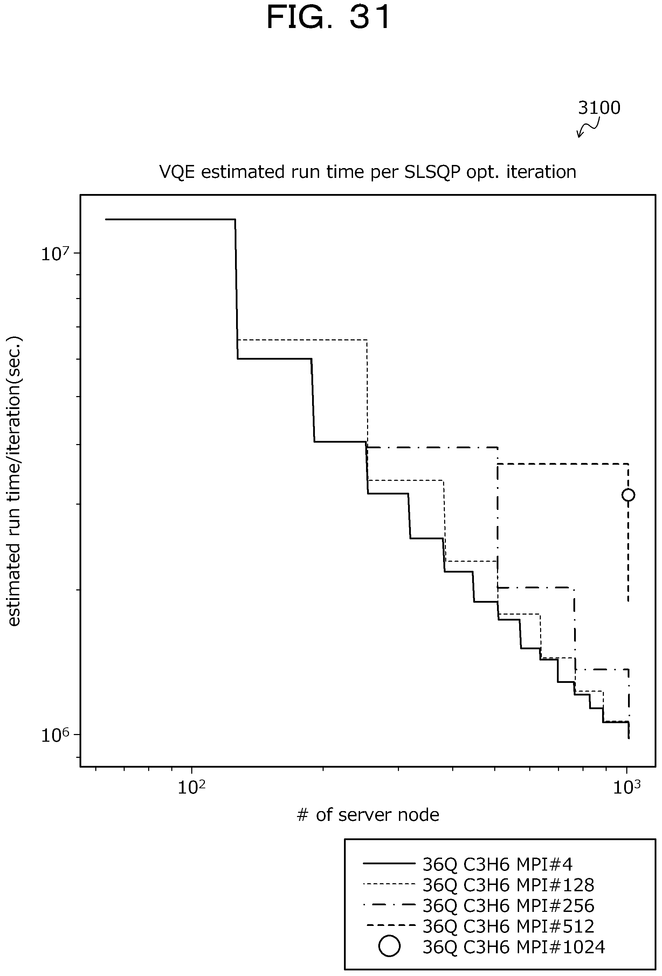

Next, description of FIG. 31 will be made. A graph 3100 in FIG. 31 corresponds to a combination of the number of qubits = 36 and the type of the molecule = C3H6. Others are similar to those in FIG. 27.

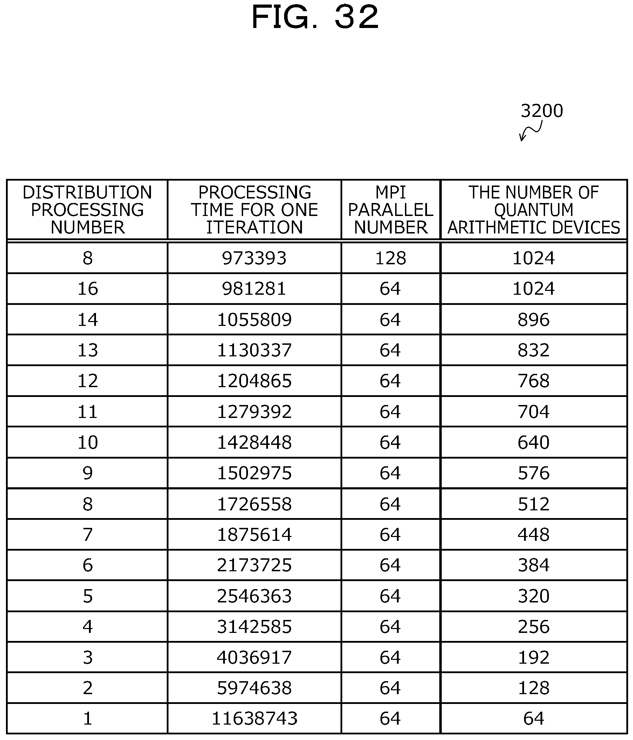

Next, description of FIG. 32 will be made. A table 3200 in FIG. 32 corresponds to the graph 3100 in FIG. 31. Others are similar to those in FIG. 28.

In this way, the information processing device 100 can consider the processing time for one iteration of the combination of the MPI parallel number N1 and the distribution processing number N2, as indicated in each graph, based on the type of the target molecule. Therefore, the information processing device 100 can find an appropriate combination of the MPI parallel number N1 and the distribution processing number N2, so as to minimize the processing time for one iteration, within a range of the number of available arithmetic devices 212. Therefore, the information processing device 100 can appropriately determine the MPI parallel number N1 and the distribution processing number N2, so as to improve the operation efficiency of the arithmetic device 212 and ensure the use fairness of the arithmetic device 212. The information processing device 100 can reduce the processing time required for the quantum chemical calculation by the VQE, based on the determined MPI parallel number N1 and distribution processing number N2.

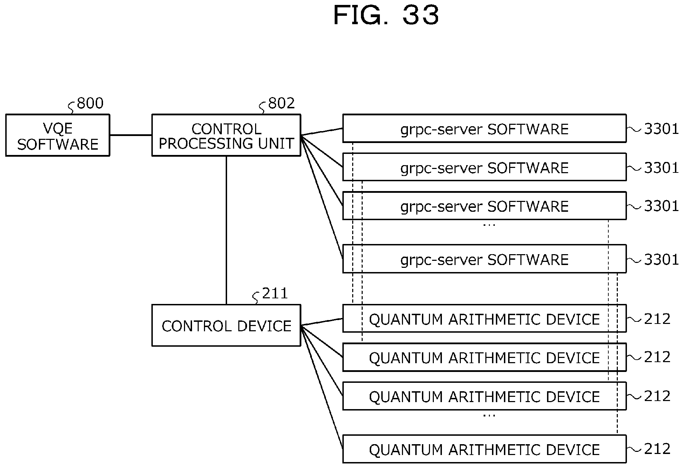

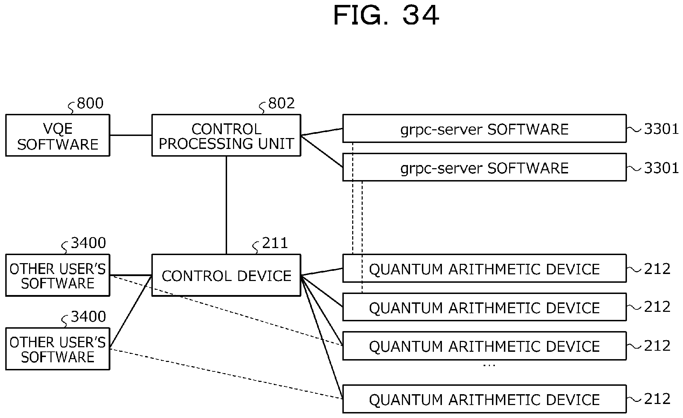

Next, description of FIGs. 33 and 34 will be made. FIG. 33 illustrates an example in which the quantum chemical calculation by the VQE is distributed and executed, in a case where the demand of the arithmetic device 212 is relatively small. In FIG. 33, it is assumed that there be no other users who use the arithmetic device 212, other than the user of the information processing device 100. Therefore, the demand of the arithmetic device 212 is relatively small.

In this case, the control processing unit 802 controls the arithmetic system 210, so as to allocate a plurality of pieces of grpc-server software 3301 to a relatively large number of arithmetic devices 212, for example, by the VQE software 800 and to execute the quantum chemical calculation by the VQE. Therefore, in a case where the demand of the arithmetic device 212 is relatively small, the control processing unit 802 can improve the efficiency of the quantum chemical calculation by the VQE.

Next, description of FIG. 34 will be made. FIG. 34 illustrates an example in which the quantum chemical calculation by the VQE is distributed and executed, in a case where the demand of the arithmetic device 212 is relatively large. In FIG. 34, it is assumed that two other users who use the arithmetic device 212 via software 3400 exist, in addition to the user of the information processing device 100. Therefore, it is assumed that the demand of the arithmetic device 212 be relatively large.

In this case, the control processing unit 802 controls the arithmetic system 210, so as to allocate a smaller number of pieces of grpc-server software 3401 to any one of the arithmetic devices 212, for example, by the VQE software 800 and to execute the quantum chemical calculation by the VQE. Specifically, the control processing unit 802 controls the arithmetic system 210, so as to allocate the plurality of pieces of grpc-server software 3401 to the arithmetic device 212 other than the arithmetic device 212 used by the other user via the software 3400. Therefore, in a case where the demand of the arithmetic device 212 is relatively large, the control processing unit 802 can improve the operation efficiency of the arithmetic device 212 and ensure the use fairness of the arithmetic device 212.

Here, a case has been described where the information processing device 100 applies the same MPI parallel number to the plurality of grpc-servers for executing the quantum calculation processing. However, the present embodiment is not limited to this. For example, there may be a case where the information processing device 100 applies the MPI parallel number that is different each other to each grpc-server. Furthermore, there may be a case where the information processing device 100 determines the MPI parallel number N1 and the distribution processing number N2, through machine learning.

### (Overall Processing Procedure)

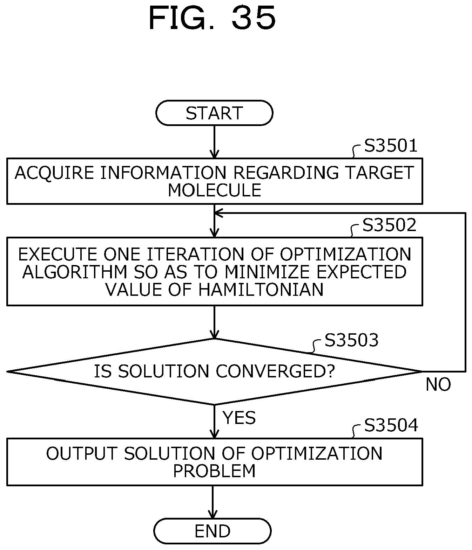

Next, an example of an overall processing procedure, executed by the information processing device 100 will be described with reference to FIG. 35. Overall processing is implemented by, for example, the CPU 301, the storage region such as the memory 302 or the recording medium 305, and the network I/F 303 illustrated in FIG. 3.

FIG. 35 is a flowchart illustrating an example of the overall processing procedure. In FIG. 35, the information processing device 100 uses quantum chemical calculation software and acquires the information regarding the target molecule related to the optimization problem (step S3501). Specifically, the information as in FIG. 23 is input into the quantum chemical calculation software, and the Hamiltonian as in FIG. 40 is acquired as a result. Subsequently, the information processing device 100 starts to execute one iteration of the optimization algorithm so as to minimize the expected value of the Hamiltonian. Therein, the quantum calculation processing illustrated in FIG. 6, corresponding to the objective function of the optimization problem is repeatedly executed, and the parameter theta[], corresponding to the variable of the optimization problem, is updated (step S3502).

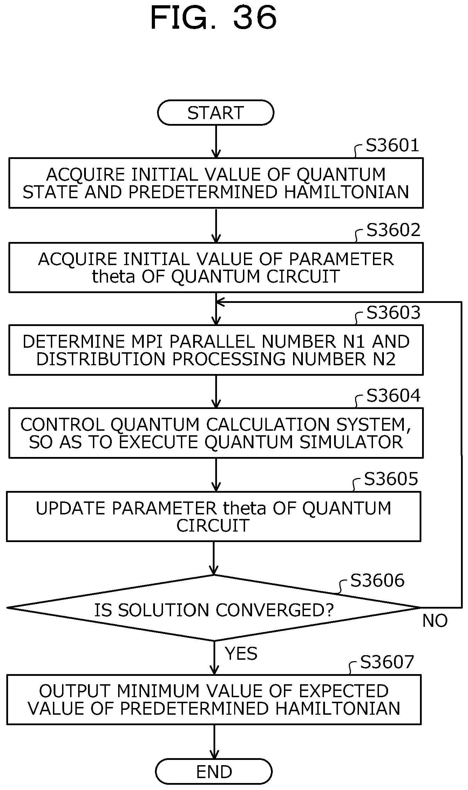

The optimization algorithm executed by the information processing device 100 determines whether or not a solution is converged with the optimization algorithm (step S3503). Here, in a case where the solution is not converged with the optimization algorithm (step S3503: No), the information processing device 100 returns to the processing in step S3502. On the other hand, in a case where the solution is converged with the optimization algorithm (step S3503: Yes), the information processing device 100 outputs the solution of the optimization problem (step S3504) and ends the overall processing. The processing in steps S3502 and S3503 corresponds to solving processing to be described later with reference to FIG. 36.

### (Solving Processing Procedure)

Next, an example of a solving processing procedure, executed by the information processing device 100, in the first example will be described with reference to FIG. 36. The solving processing is implemented by, for example, the CPU 301, the storage region such as the memory 302 or the recording medium 305, and the network I/F 303 illustrated in FIG. 3.

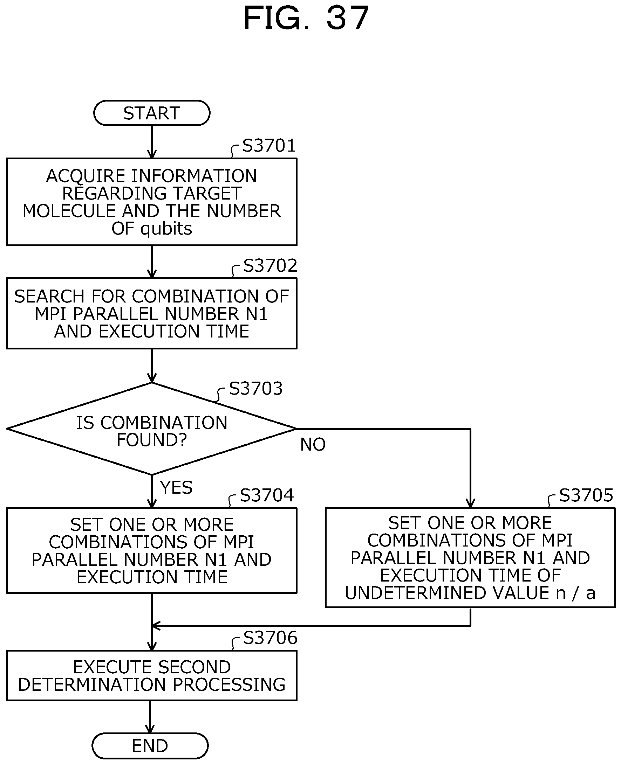

FIG. 36 is a flowchart illustrating an example of the solving processing procedure in the first example, and a viewpoint related to a method for using the arithmetic device 212 is added and written to FIG. 35. In FIG. 36, the information processing device 100 acquires an initial value of the quantum state and the predetermined Hamiltonian (step S3601). The information processing device 100 acquires an initial value of a parameter theta of the quantum circuit (step S3602). The information processing device 100 determines the MPI parallel number N1 and the distribution processing number N2, by executing first determination processing to be described later with reference to FIG. 37 (step S3603).

The information processing device 100 controls the arithmetic system 210, so as to execute the quantum simulator, based on the determined MPI parallel number N1 and distribution processing number N2 (step S3604). The information processing device 100 starts to execute the plurality of times of quantum calculation processing based on N1 and N2, by executing one iteration of the optimization algorithm so as to minimize the expected value of the Hamiltonian. Therein, the quantum calculation processing illustrated in FIG. 6, corresponding to the objective function of the optimization problem, is repeatedly executed, and the parameter theta[], corresponding to the variable of the optimization problem, is updated (step S3605).

The information processing device 100 determines whether or not the solution is converged with the optimization algorithm (step S3606). Here, in a case where the solution is not converged with the optimization algorithm (step S3606: No), the information processing device 100 returns to the processing in step S3603. On the other hand, in a case where the solution is converged with the optimization algorithm (step S3606: Yes), the information processing device 100 outputs a minimum value of the expected value of the predetermined Hamiltonian (step S3607) and ends the solving processing.

### (First Determination Processing Procedure)

Next, an example of a first determination processing procedure, executed by the information processing device 100 will be described with reference to FIG. 37. The first determination processing is implemented by, for example, the CPU 301, the storage region such as the memory 302 or the recording medium 305, and the network I/F 303 illustrated in FIG. 3.

FIG. 37 is a flowchart illustrating an example of the first determination processing procedure. In FIG. 37, the information processing device 100 acquires the information regarding the target molecule and the number of qubits (step S3701). The information processing device 100 refers to the table 1900 and searches for a combination of the MPI parallel number N1 and the execution time, corresponding to the information regarding the target molecule and the number of qubits (step S3702).

The information processing device 100 determines whether or not the combination has been found (step S3703). Here, in a case where the combination is not found (step S3703: No), the information processing device 100 proceeds to processing in step S3705. On the other hand, in a case where the combination has been found (step S3703: Yes), the information processing device 100 proceeds to processing in step S3704.

In step S3704, the information processing device 100 sets one or more combinations of the MPI parallel number N1 and the execution time to the table 2400 of the candidate list, based on the found combination (step S3704). The information processing device 100 proceeds to processing in step S3706.

In step S3705, the information processing device 100 sets one or more combinations of the MPI parallel number N1 and the execution time of the undetermined value n/a to the table 2400 of the candidate list, based on the number of qubits (step S3705). The information processing device 100 proceeds to the processing in step S3706.

In step S3706, the information processing device 100 determines the MPI parallel number N1 and the distribution processing number N2, by executing second determination processing (step S3706). The information processing device 100 ends the first determination processing procedure.

### (Second Determination Processing Procedure)

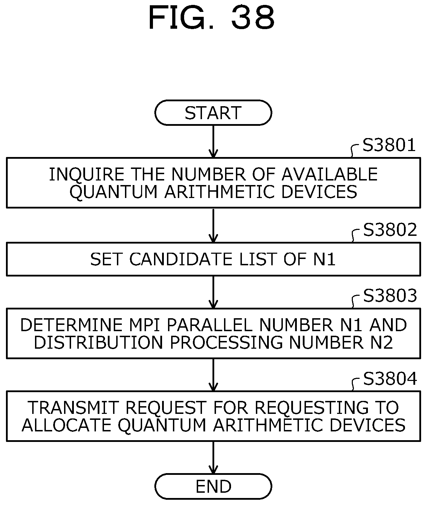

Next, an example of a second determination processing procedure, executed by the information processing device 100 will be described with reference to FIG. 38. The second determination processing is implemented by, for example, the CPU 301, the storage region such as the memory 302 or the recording medium 305, and the network I/F 303 illustrated in FIG. 3.

FIG. 38 is a flowchart illustrating an example of the second determination processing procedure. In FIG. 38, the information processing device 100 inquires the arithmetic system 210 of the number of available arithmetic devices 212 (step S3801). The information processing device 100 sets the candidate list of N1 (step S3802).

The information processing device 100 determines the MPI parallel number N1 and the distribution processing number N2, by solving the optimization problem, under a constraint condition that the execution time of one iteration becomes smaller and the product of the MPI parallel number N1 and the distribution processing number N2 is equal to or less than the number of available arithmetic devices 212, based on the candidate list of N1 (step S3803).

The information processing device 100 transmits a request for requesting to allocate the arithmetic devices 212 as many as the product of the MPI parallel number N1 and the distribution processing number N2, to the control device 211 (step S3804). The information processing device 100 ends the second determination processing procedure.

### (Quantum Calculation Processing Procedure)

Next, an example of a quantum calculation processing procedure, executed by the arithmetic device 212 will be described with reference to FIG. 39. Execution of one quantum calculation processing is a processing flow executed by the quantum simulator from left to right in FIG. 6.

FIG. 39 is a flowchart illustrating an example of the quantum calculation processing procedure and describes the processing executed by the quantum simulator in FIG. 6. In FIG. 39, the arithmetic device 212 acquires the initial value of the quantum state and the predetermined Hamiltonian (step S3901). The arithmetic device 212 acquires a current value of the parameter theta of the quantum circuit (step S3902). The arithmetic device 212 applies a value of theta to the quantum gate and generates the quantum circuit (step S3903).

The arithmetic device 212 sets the quantum state that causes the quantum circuit to act (step S3904). The arithmetic device 212 executes the quantum circuit (step S3905). The arithmetic device 212 obtains the expected value of the predetermined Hamiltonian, based on the quantum state after the quantum circuit has been executed (step S3906). The arithmetic device 212 outputs the calculated expected value of the predetermined Hamiltonian (step S3907). The arithmetic device 212 ends quantum calculation processing procedure.

Here, the information processing device 100 may switch some steps in each of the flowcharts in FIGs. 35 to 38 in the processing order and execute the processing. Furthermore, the information processing device 100 may omit processing of some steps in each of the flowcharts in FIGs. 35 to 38.

### <Second Example> Deletion of Term

Next, a second example will be described with reference to FIGs. 40 to 58. The second example can be executed independently from the processing for determining the MPI parallel number and the distribution processing number by the information processing device 100 in the first example, and the quantum chemical calculation by the VQE indicated in the first example can be executed, after correcting the Hamiltonian used for the quantum calculation processing, according to the second example. First, description of FIG. 40 will be made.

FIG. 40 is an explanatory diagram illustrating an example of the predetermined Hamiltonian 4000. FIG. 40 specifically illustrates a plurality of terms for defining the predetermined Hamiltonian 4000 and a coefficient related to each term. The term is a tensor product of a Pauli operator. The information processing device 100 stores the predetermined Hamiltonian 4000. The predetermined Hamiltonian 4000 is obtained by the quantum chemical calculation software as initial processing. In step S3601 in FIG. 36, after the predetermined Hamiltonian is determined, the Hamiltonian is not updated when the quantum calculation processing is executed, and the Hamiltonian determined once remains to be the same. Therefore, the number of terms for defining the predetermined Hamiltonian is known.

Here, a term having a small absolute value of the coefficient has a small ratio of contribution on the expected value of the Hamiltonian obtained by the quantum calculation processing. Therefore, even if the information processing device 100 deletes the term having the small absolute value of the coefficient from the predetermined Hamiltonian 4000, an error that occurs in the expected value of the Hamiltonian is small. Furthermore, it has been known that, in the quantum simulator mpiQulacs, the processing time required for calculation of the expected value of the Hamiltonian is in proportional to the number of terms of the Hamiltonian. Therefore, an effect is achieved for reducing the processing time while suppressing a calculation error, by deleting some terms of the Hamiltonian. In the following description, a procedure for deleting some terms from the predetermined Hamiltonian 4000 by the information processing device 100 will be described.

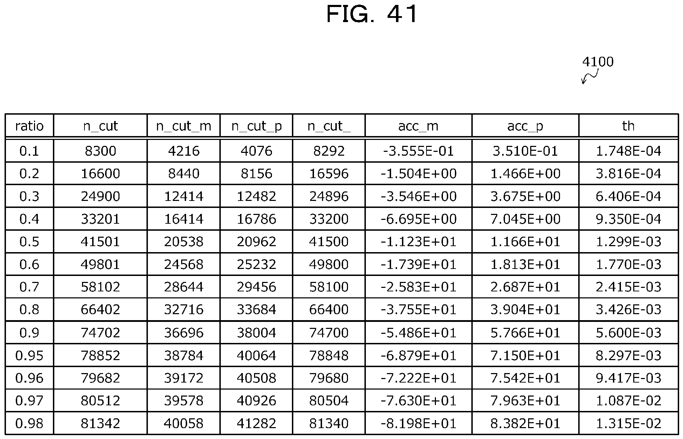

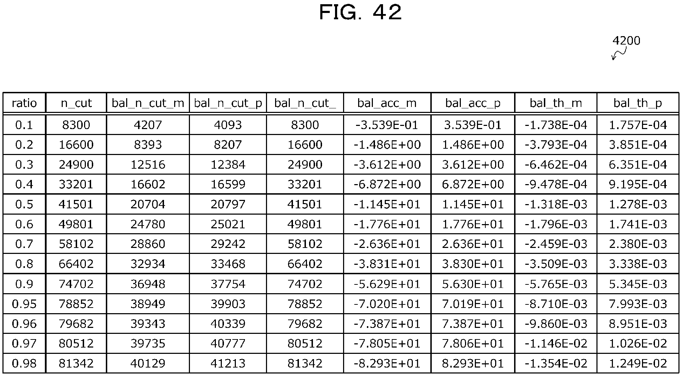

For example, a case is considered where the information processing device 100 accepts designation of the number of terms to be deleted from the predetermined Hamiltonian 4000. In this case, the information processing device 100 deletes the terms as many as those of which the designation has been accepted, among the plurality of terms, from the predetermined Hamiltonian 4000. A specific example in this case will be described later with reference to FIGs. 41 and 42.

For example, a case is considered where the information processing device 100 accepts a ratio of the terms to be deleted from the predetermined Hamiltonian 4000. In this case, the information processing device 100 determines the number of terms to be deleted from the predetermined Hamiltonian 4000, corresponding to the ratio of which the designation has been accepted. The information processing device 100 deletes the determined number of terms, among the plurality of terms, from the predetermined Hamiltonian 4000. A specific example in this case will be described later with reference to FIGs. 41 and 42.

For example, a case is considered where the information processing device 100 accepts designation of the processing time for one iteration. In this case, the information processing device 100 determines the number of terms to be deleted from the predetermined Hamiltonian 4000, based on the processing time of which the designation has been accepted. Then, the information processing device 100 deletes the determined number of terms from among the plurality of terms for defining the predetermined Hamiltonian 4000. A specific example in this case will be described later with reference to FIG. 43.

Next, a specific example in which the information processing device 100 deletes the terms as many as those of which the designation has been accepted, among the plurality of terms, from the predetermined Hamiltonian 4000 will be described with reference to FIG. 41.

FIG. 41 is an explanatory diagram illustrating a specific example in which the terms as many as those of which the designation has been accepted are deleted from the predetermined Hamiltonian 4000. In FIG. 41, the number of qubits = 36 and the type of the target molecule = C3H6.

The information processing device 100 stores a coefficient list coef in which a coefficient coef[] of each of the plurality of terms that defines the predetermined Hamiltonian 4000 is recorded. The information processing device 100 accepts designation of a ratio ratio, as a guideline for specifying how many terms are to be deleted from the predetermined Hamiltonian 4000. The information processing device 100 calculates the number n_cut of terms to be deleted from the predetermined Hamiltonian 4000, corresponding to the ratio ratio of which the designation has been accepted. The information processing device 100 may directly accept designation of the number n_cut of terms to be deleted from the predetermined Hamiltonian 4000.

For example, the information processing device 100 calculates an absolute value of the coefficient coef[] of each term. For example, the information processing device 100 determines, as a threshold th, an n_cut-th absolute value from the smallest absolute value, in a case where the absolute values of the coefficients coef[] of the respective terms are sorted in ascending order. The information processing device 100 deletes a term related to a coefficient existing within a range of [- th, + th], from the predetermined Hamiltonian 4000.

In FIG. 41, the number of terms for defining the predetermined Hamiltonian 4000 is 83003. A table 4100 indicates a relationship between n_cut and the term to be deleted from the predetermined Hamiltonian 4000. In the table 4100, ratio is a ratio of terms to be deleted. The reference n_cut represents the number of terms to be deleted. Specifically, the table 4100 indicates a degree of each of the coefficient that has the positive value and the coefficient that has the negative value to be deleted, in a case where ratio is within a range of 0.1 to 0.98.

In the table 4100, a reference n_cut_p indicates the number of terms to be deleted, among the terms of the coefficients having the positive values. The reference n_cut_m indicates the number of terms to be deleted, among the terms of the coefficients having the negative values. n_cut_ is n_cut_p + n_cut_m. In a case where there are different terms having the same coefficient, n_cut may be different from n_cut_. The reference acc_p is an absolute value of a total value of the coefficients having the positive values to be deleted. The reference acc_m is an absolute value of a total value of the coefficients having the negative values to be deleted. The reference th represents a threshold used to determine the term to be deleted.

In this way, the information processing device 100 can delete the term having the relatively small absolute value of the coefficient, among the plurality of terms for defining the predetermined Hamiltonian 4000, according to the designation of ratio or n_cut. As a result, the information processing device 100 can reduce the processing time required for the processing for obtaining the expected value of the Hamiltonian, in the quantum calculation processing, while suppressing an adverse effect on accuracy of the quantum calculation processing. Therefore, the information processing device 100 can reduce the processing time required for the quantum chemical calculation by the VQE.

Here, a case has been described where the information processing device 100 does not consider a balance between the terms to be deleted among the terms of which the coefficient has the positive value and the terms to be deleted among the terms of which the coefficient has the negative value. However, the present embodiment is not limited to this. For example, there may be a case where the information processing device 100 considers the balance between the terms to be deleted among the terms of which the coefficient has the positive value and the terms to be deleted among the terms of which the coefficient has the negative value. By considering the balance between the terms to be deleted among the terms of which the coefficient has the positive value and the terms to be deleted among the terms of which the coefficient has the negative value, the information processing device 100 can easily suppress the adverse effect on the accuracy of the quantum calculation processing.

Next, another specific example in which the information processing device 100 deletes the terms as many as those of which the designation has been accepted, among the plurality of terms, from the predetermined Hamiltonian 4000 will be described with reference to FIG. 42.

FIG. 42 is an explanatory diagram illustrating another specific example in which the terms as many as those of which the designation has been accepted are deleted from the predetermined Hamiltonian 4000. In FIG. 42, the number of qubits = 36 and the type of the target molecule = C3H6.

The information processing device 100 stores the coefficient list coef in which the coefficient coef[] of each of the plurality of terms that defines the predetermined Hamiltonian 4000 is recorded. The information processing device 100 accepts the designation of the ratio ratio, as the guideline for specifying how many terms are to be deleted from the predetermined Hamiltonian 4000. The information processing device 100 calculates the number n_cut of terms to be deleted from the predetermined Hamiltonian 4000, corresponding to the ratio ratio of which the designation has been accepted. The information processing device 100 may directly accept the designation of the number n_cut of terms to be deleted from the predetermined Hamiltonian 4000.

For example, the information processing device 100 creates a positive coefficient list coef_p in which coefficients coef_p[] having positive values are recorded, based on the coefficient coef[] of each term. For example, the information processing device 100 calculates an absolute value of the coefficient coef_p[] of each term, based on the positive coefficient list coef_p and sorts the positive coefficient list coef_p in ascending order of the absolute value.

For example, the information processing device 100 creates a negative coefficient list coef_m in which coefficients coef_m[] having negative values are recorded, based on the coefficient coef[] of each term. For example, the information processing device 100 calculates an absolute value of the coefficient coef_m[] of each term, based on the negative coefficient list coef_m and sorts the negative coefficient list coef_m in ascending order of the absolute value.

For example, the information processing device 100 determines the term to be deleted, so as to bring a total value bal_acc_p of the absolute value of the coefficient coef_p[] having the positive value to be deleted and a total value bal_acc_m of the absolute value of the coefficient coef_m[] having the negative value to be deleted to be closer to each other. For example, when the number of terms to be deleted reaches cut_n, the information processing device 100 determines a threshold bal_th_p for the coefficient coef_p[] having the positive value and a threshold bal_th_m for the coefficient coef_m[] having the negative value. The information processing device 100 deletes a term related to a coefficient existing within a range of [- bal_th_m, + bal_th_p], from the predetermined Hamiltonian 4000.

In FIG. 42, the number of terms for defining the predetermined Hamiltonian 4000 is 83003. A table 4200 indicates a relationship between n_cut and the term to be deleted from the predetermined Hamiltonian 4000. In the table 4200, ratio is a ratio of terms to be deleted. The reference n_cut represents the number of terms to be deleted. Specifically, the table 4200 indicates a degree of each of the coefficient that has the positive value and the coefficient that has the negative value to be deleted, in a case where ratio is within a range of 0.1 to 0.98.

In the table 4200, the reference bal_n_cut_p is the number of terms to be deleted, among the terms of the coefficients having the positive values. The reference bal_n_cut_m is the number of terms to be deleted, among the terms of the coefficients having the negative values. bal_n_cut_ is bal_n_cut_p + bal_n_cut_m. In a case where there are different terms having the same coefficient, bal_n_cut_ may be different from n_cut. The reference bal_acc_p is an absolute value of a total value of the coefficients having the positive values to be deleted. The reference bal_acc_m is an absolute value of a total value of the coefficients having the negative values to be deleted. The reference bal_th_p is a threshold for the coefficient having the positive value used to determine the term to be deleted. The reference bal_th_m is a threshold for the coefficient having the negative value used to determine the term to be deleted.

In this way, the information processing device 100 can delete the term having the relatively small absolute value of the coefficient, among the plurality of terms for defining the predetermined Hamiltonian 4000, according to the designation of ratio or n_cut. As a result, the information processing device 100 can reduce the processing time required for the processing for obtaining the expected value of the Hamiltonian, in the quantum calculation processing, while suppressing the adverse effect on the accuracy of the quantum chemical calculation by the VQE. Therefore, the information processing device 100 can reduce the processing time required for the quantum chemical calculation by the VQE.

Furthermore, by considering the balance between the number of terms to be deleted among the terms of which the coefficient has the positive value and the number of terms to be deleted among the terms of which the coefficient has the negative value, the information processing device 100 can easily suppress the adverse effect on the accuracy of the quantum chemical calculation by the VQE. Specifically, the information processing device 100 can bring bal_acc_p and bal_acc_m to be closer to each other and consider the balance between the number of terms to be deleted, among the terms of which the coefficient has the positive value and the number of terms to be deleted, among the terms of which the coefficient has the negative value.

Next, a specific example in which the information processing device 100 determines the term to be deleted from the predetermined Hamiltonian 4000, when the processing time for one desired iteration is received will be described with reference to FIG. 43.

FIG. 43 is an explanatory diagram illustrating a specific example of a calculation formula used to predict a time required to calculate the expected value of the Hamiltonian. FIG. 43 illustrates values of a coefficient a and a constant term b in a linear expression for predicting the processing time required to calculate the expected value of the Hamiltonian, using the number of terms of the Hamiltonian as a variable. The processing time depends on the number of qubits, the information regarding the molecule, and the MPI parallel number N1. In FIG. 43, an example of the values of a and b, in a case where the number of qubits = 36, the molecule = C3H6, and N1 = 64 to 1024, is illustrated. A formula for predicting the processing time required to calculate the expected value of the Hamiltonian is the following formula (2).

[Expression 2] ${t}_{run 1} = a \times {N}_{terms} + b$

On the other hand, the formula (1) described above is a calculation formula for predicting the processing time for one iteration. Therefore, it is possible to obtain t_{run1}, that is, the processing time required for one quantum calculation processing, by solving an equation in which a processing time per desired iteration is substituted. Here, based on a finding obtained from experimental results, it is assumed that the processing time of one quantum calculation processing be substantially equal to the processing time required to calculate the expected value of the Hamiltonian. Then, by solving the equation by substituting the value of t_{run1} into the above formula (2), N_{terms}, that is, the number of terms of the Hamiltonian is obtained. A value obtained by subtracting the obtained number of terms from the number of terms of the predetermined Hamiltonian 4000 is the number of terms to be deleted.

Since the information processing device 100 stores the information as in the table 4300 in FIG. 43, the information processing device 100 can obtain the number of terms of the Hamiltonian to be deleted, from the processing time per desired iteration, by the above procedure. By fitting the information as in the table 4300 in FIG. 43 into a linear expression by a least squares method or the like, using the result of the quantum calculation processing executed in the past, the values of a and b can be determined.

The information processing device 100 accepts designation of a processing time t_{liter} for one iteration. The information processing device 100 determines the number N_{terms} of terms to be left in the Hamiltonian, based on the processing time t_{liter} of which the designation has been accepted, according to the formulas (1) and (2) above. The information processing device 100 determines the number n_cut of terms to be deleted from the predetermined Hamiltonian 4000, based the number N_{terms} of terms to be left in the Hamiltonian.

The information processing device 100 deletes some terms from the predetermined Hamiltonian 4000, as in FIGs. 41 and 42, based on the determined n_cut. In this way, the information processing device 100 can delete the term having the relatively small absolute value of the coefficient, among the plurality of terms for defining the predetermined Hamiltonian 4000, according to the designation of ratio or n_cut.

As a result, the information processing device 100 can reduce the processing time required for the processing for obtaining the expected value of the Hamiltonian, in the quantum calculation processing, while suppressing the adverse effect on the accuracy of the quantum calculation processing. Therefore, the information processing device 100 can reduce the processing time required for the quantum chemical calculation by the VQE. The information processing device 100 can reduce the processing time required for the quantum chemical calculation by the VQE so as to satisfy the processing time t_{liter} for one iteration of which the designation has been accepted and can improve convenience of the user.

Here, in a case where the constants a and b corresponding to the combination of the type of the target molecule, the number of qubits, and the MPI parallel number N1 do not exist in the table 4300, there may be a case where the information processing device 100 calculates the constants a and b. For example, when executing the plurality of times of quantum calculation processing, the information processing device 100 controls the arithmetic system 210 so as to execute the processing with different Hamiltonians from which two or more different numbers of terms are deleted. This is because, if there are two or more execution results, it is possible to perform fitting into the linear expression and determine the values of a and b. For example, the information processing device 100 receives an actual measurement value of the processing time in which the expected value of the Hamiltonian in each iteration is obtained, from the control device 211.

For example, the information processing device 100 calculates the constants a and b corresponding to the combination of the type of the target molecule, the number of qubits, and the MPI parallel number N1, based on the received actual measurement value and records the constants a and b in the table 4300. As a result, hereinafter, the information processing device 100 can use the constants a and b corresponding to the combination of the type of the target molecule, the number of qubits, and the MPI parallel number N1.

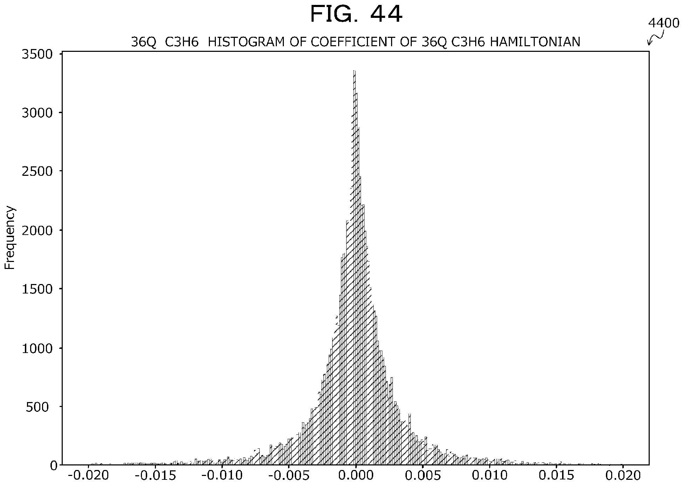

Next, an example of an effect by the information processing device 100 in the second example will be described with reference to FIGs. 44 to 54.

FIGs. 44 to 54 are explanatory diagrams illustrating an example of the effect in the second example. A graph 4400 in FIG. 44 represents a histogram related to the coefficient of the term for defining the predetermined Hamiltonian 4000. As illustrated in the graph 4400, there is a tendency that the number of terms of which the absolute value of the coefficient is closer to zero is larger than the number of terms of which the absolute value of the coefficient is away from zero. As the absolute value of the coefficient is smaller, it is estimated that contribution on the quantum chemical calculation by the VQE is smaller, and it is considered that the effect on the accuracy of the quantum chemical calculation by the VQE is smaller. Therefore, in the predetermined Hamiltonian 4000, there are a large number of terms of which the absolute value of the coefficient is small, and it is possible to delete many of these terms, and the calculation error can be suppressed to be smaller. Therefore, it is considered that the processing time of the quantum calculation processing can be easily reduced.

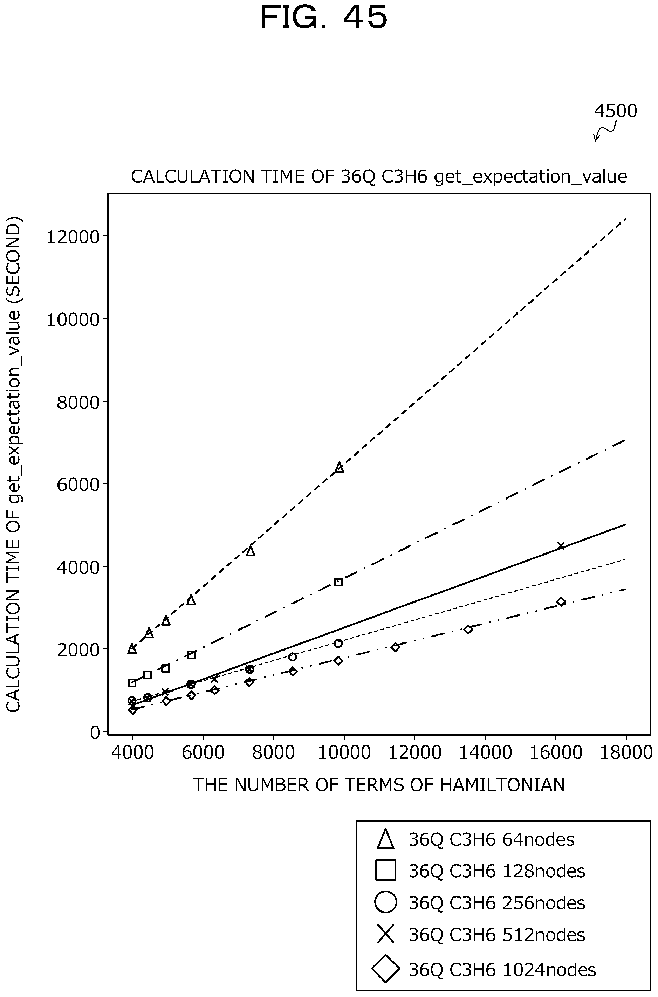

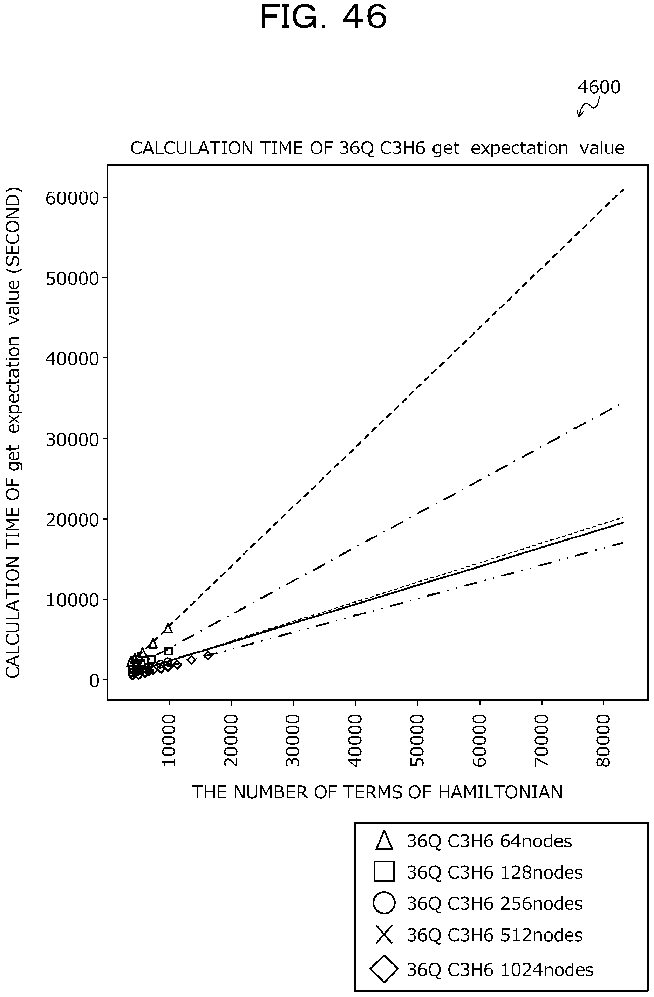

Next, description of FIGs. 45 and 46 will be made. A graph 4500 in FIG. 45 represents a tendency of a processing time in which the expected value of the Hamiltonian is obtained, with respect to the number of terms of the Hamiltonian. While variously changing the number of terms of the Hamiltonian to be deleted, and then, changing the MPI parallel number N1, execution results are plotted with various marks. A line indicates a result of fitting into a linear expression. A graph 4600 in FIG. 46 is a graph in which a range of the horizontal axis is expanded for the result same as that in FIG. 45. A right end of the graph 4600 indicates a processing time that would be required when the term is not deleted.

As illustrated in the graphs 4500 and 4600, as the number of terms of the Hamiltonian is smaller, the processing time in which the expected value of the Hamiltonian is obtained tends to be shorter. Therefore, it is considered that the information processing device 100 can improve the efficiency of the quantum chemical calculation by the VQE, by deleting some terms from the predetermined Hamiltonian 4000.

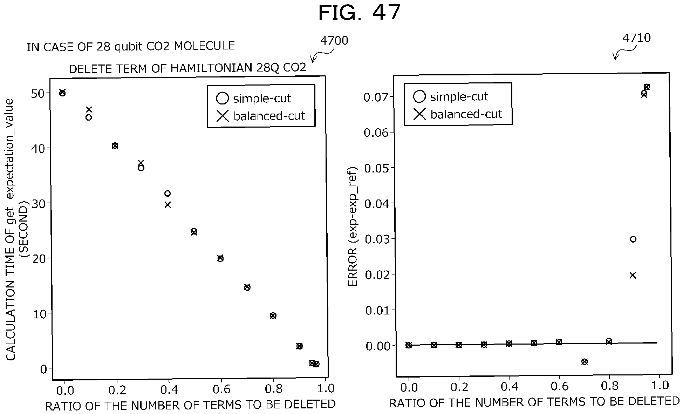

Next, description of FIGs. 47 to 52 will be made. In FIG. 47, it is assumed that the number of qubits = 28 and the type of the target molecule = CO2. A graph 4700 in FIG. 47 represents a tendency of the processing time in which the expected value of the Hamiltonian is obtained, with respect to the ratio of the number of terms to be deleted. Here, the "simple-cut" corresponds to the method for deleting the term, illustrated in FIG. 41. The "balanced-cut" corresponds to the method for deleting the term, illustrated in FIG. 42. A graph 4710 in FIG. 47 represents a tendency of an error of the expected value of the Hamiltonian, with respect to the ratio of the number of terms to be deleted. This experimental result indicates that the processing time is shortened by deleting the terms, and in addition, that the calculation error is small if the number of terms to be deleted is appropriately suppressed.

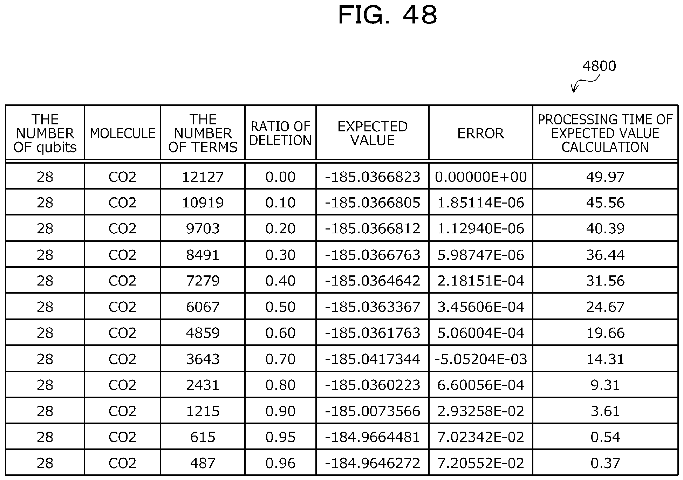

Next, description of FIG. 48 will be made. A table 4800 in FIG. 48 indicates the graphs 4700 and 4710 in FIG. 47 as numerical values.

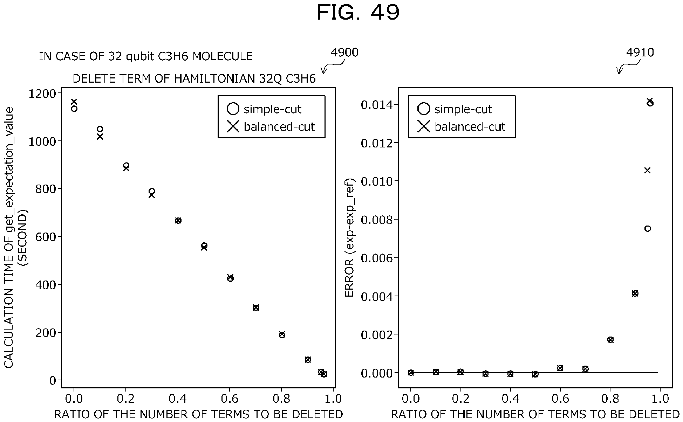

Next, description of FIG. 49 will be made. FIG. 49 illustrates a result in a case where those in FIG. 47 are changed to the number of qubits = 32 and the type of the target molecule = C3H6.

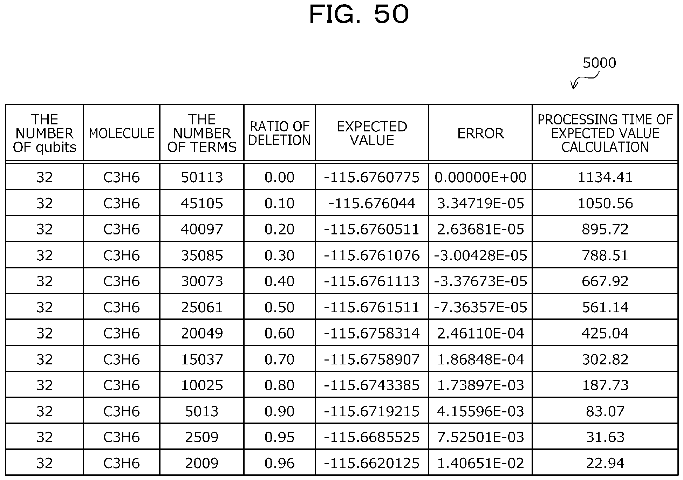

Next, description of FIG. 50 will be made. A table 5000 in FIG. 50 indicates the graphs 4900 and 4910 in FIG. 49 as numerical values.

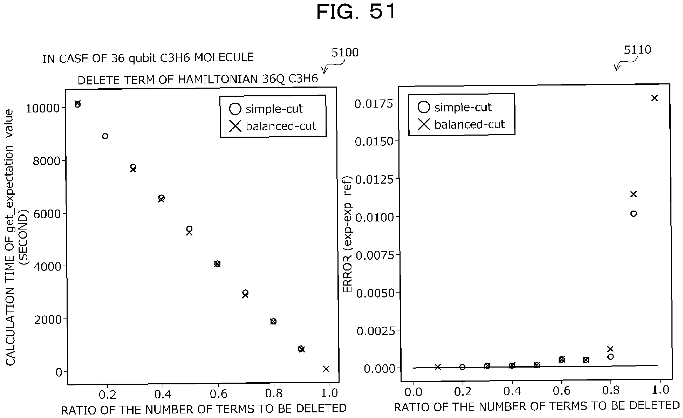

Next, description of FIG. 51 will be made. FIG. 51 illustrates a result in a case where those in FIG. 47 are changed to the number of qubits = 36 and the type of the target molecule = C3H6.

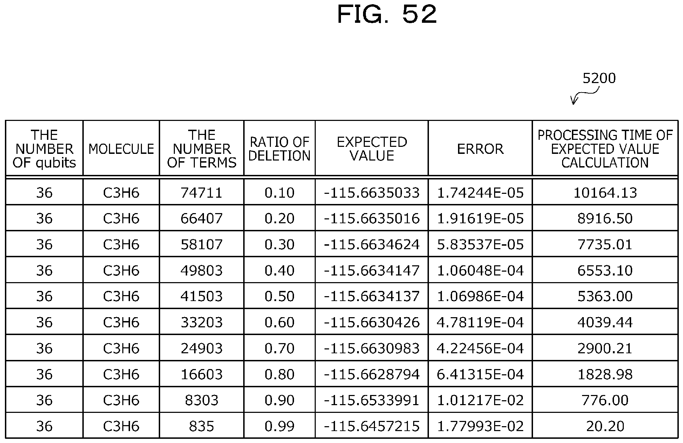

Next, description of FIG. 52 will be made. A table 5200 in FIG. 52 indicates the graphs 5100 and 5110 in FIG. 51 as numerical values.

In this way, there is a case where, by deleting the term having the relatively small absolute value of the coefficient from the predetermined Hamiltonian 4000, the information processing device 100 can suppress the error, even if the ratio of the number of terms to be deleted is set to 80%. Therefore, it is possible to for the information processing device 100 to improve the efficiency of the quantum chemical calculation by the VQE, while suppressing a decrease in the accuracy of the quantum chemical calculation by the VQE.

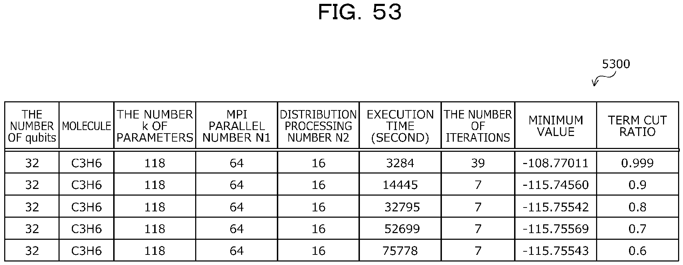

Next, description of FIG. 53 will be made. A table 5300 in FIG. 53 summarizes the results of executing the quantum chemical calculation by the VQE. An execution time, the number of iterations, a minimum value, a term cut ratio, corresponding to a combination of the number of qubits, the type of the target molecule, the number k of parameters, the MPI parallel number N1, and the distribution processing number N2, are represented.

The execution time is a processing time required for overall quantum chemical calculation by the VQE. The number of iterations is the number of iterations repeated in the overall quantum chemical calculation by the VQE. The minimum value is a minimum value of the expected value of the Hamiltonian. The term cut ratio is a ratio of the number of terms deleted from the predetermined Hamiltonian 4000. As illustrated in the table 5300, the information processing device 100 can reduce the execution time, by deleting some terms, from the predetermined Hamiltonian 4000. Furthermore, there may be a case where the information processing device 100 determines the number of terms to be deleted, through machine learning.

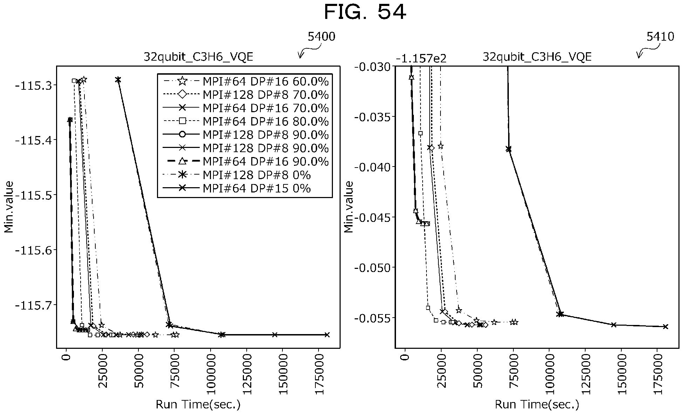

Next, description of FIG. 54 will be made. A graph 5400 in FIG. 54 is a graph illustrating a state where the plurality of iterations is repeated until the minimum value of the expected value of the Hamiltonian is converged with the optimization algorithm, and the minimum value is updated for each iteration. The horizontal axis indicates a processing time and is a value that is set to zero when the quantum chemical calculation by the VQE is started. The vertical axis indicates the minimum value of the expected value of the Hamiltonian, and a state can be seen that the minimum value decreases as the iteration proceeds. A portion plotted by various marks indicates when the iteration proceeds and the variable theta and the minimum value of the expected value of the Hamiltonian are updated. Describing notations in a legend, an MPI# numerical value is the value of N1, a DP# numerical value is the value of N2, and a subsequent percentage is a ratio of terms to be cut (deleted).

A graph 5410 in FIG. 54 is a graph in which vicinity of the minimum value on the vertical axis in the graph 5400 is enlarged. The effect of the second example can be read from this graph 5410. 1) When the ratio of the terms to be cut is larger, the minimum value is less likely to decrease, and the error increases. 2) When the ratio of the terms to be cut is smaller, although the minimum value decreases, the processing time is greatly longer. 3) When the ratio of the terms to be cut is proper, approach to the minimum value is made with less errors and in a shorter processing time. 4) Although the processing time increases/decreases by changing N1 and N2, if the cut ratio is the same, the obtained minimum value is the same, and this suggests that it is possible to cope with a change in a demand of a server.

### (Overall Processing Procedure)

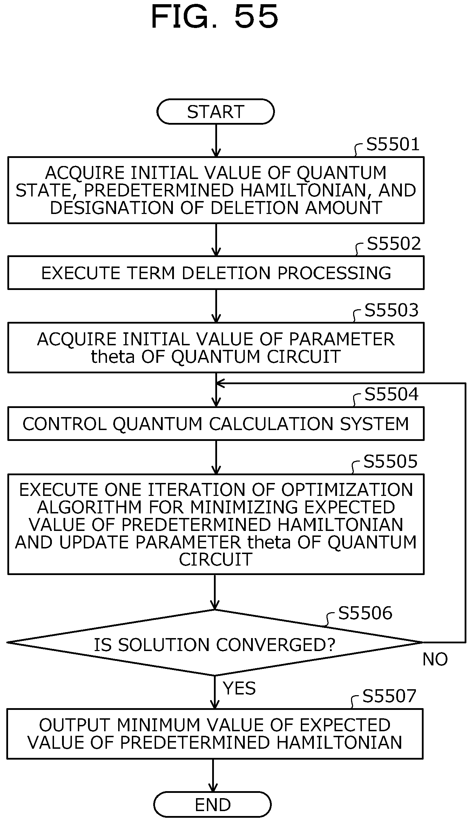

In the second example, an example of the overall processing procedure executed by the information processing device 100 has a common main processing portion of the VQE, such as step S3502 or S3503 in the first example. Therefore, detailed description is omitted. A difference in the second example is a point that the processing for deleting the term of the Hamiltonian is executed in a portion corresponding to step S3502, corresponding to various types of initialization processing immediately after processing start. This will be described in solving processing to be described later with reference to FIG. 55.

### (Solving Processing Procedure)

Next, an example of a solving processing procedure executed by the information processing device 100 in the second example will be described with reference to FIG. 55. The solving processing is implemented by, for example, the CPU 301, the storage region such as the memory 302 or the recording medium 305, and the network I/F 303 illustrated in FIG. 3.

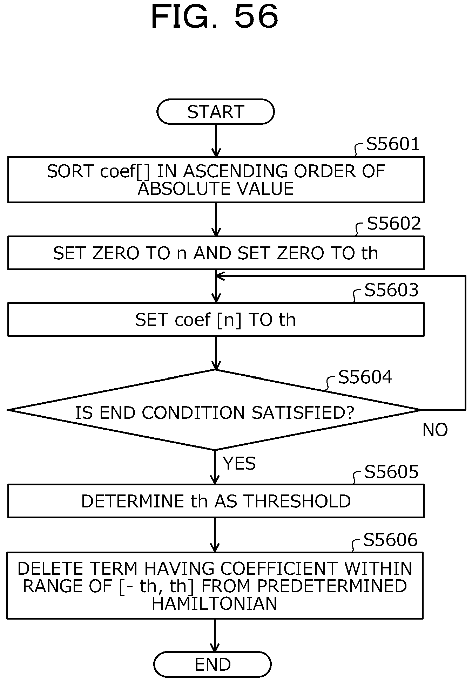

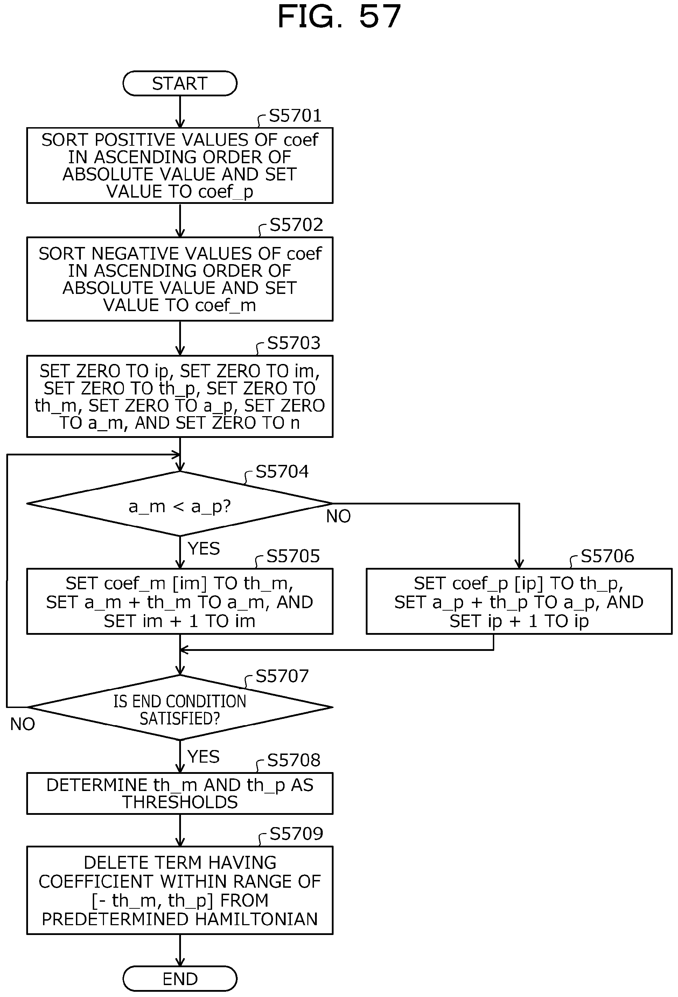

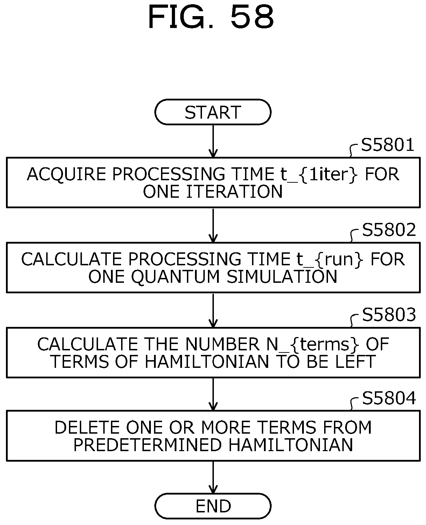

FIG. 55 is a flowchart illustrating an example of the solving processing procedure in the second example. In FIG. 55, the information processing device 100 acquires the initial value of the quantum state, the predetermined Hamiltonian, and designation of a deletion amount (step S5501). The information processing device 100 executes any one of various types of term deletion processing including first term deletion processing to be described later with reference to FIG. 56, second term deletion processing to be described later with reference to FIG. 57, and third term deletion processing to be described later with reference to FIG. 58 (step S5502).

The information processing device 100 acquires the initial value of the parameter theta of the quantum circuit (step S5503). The information processing device 100 controls the arithmetic system 210, so as to execute the quantum simulator (step S5504). The information processing device 100 executes one iteration of the optimization algorithm for minimizing the expected value of the predetermined Hamiltonian and updates the parameter theta of the quantum circuit (step S5505).

The information processing device 100 determines whether or not the solution is converged with the optimization algorithm (step S5506). Here, in a case where the solution is not converged with the optimization algorithm (step S5506: No), the information processing device 100 returns to the processing in step S5504. On the other hand, in a case where the solution is converged with the optimization algorithm (step S5506: Yes), the information processing device 100 outputs the minimum value of the expected value of the predetermined Hamiltonian (step S5507) and ends the solving processing.

### (First Term Deletion Processing Procedure)

Next, an example of a first term deletion processing procedure executed by the information processing device 100 will be described with reference to FIG. 56. The first term deletion processing is implemented by, for example, the CPU 301, the storage region such as the memory 302 or the recording medium 305, and the network I/F 303 illustrated in FIG. 3.

FIG. 56 is a flowchart illustrating an example of the first term deletion processing procedure. In FIG. 56, the information processing device 100 sorts coef[] in ascending order of the absolute value (step S5601). The information processing device 100 sets zero to n and sets zero to th (step S5602). The information processing device 100 sets coef [n] to th (step S5603).

The information processing device 100 determines whether or not an end condition is satisfied (step S5604). The end condition is (n < n_cut) and (n < the number of elements of coef). Here, in a case where the end condition is not satisfied (step S5604: No), the information processing device 100 increments n and returns to the processing in step S5603. On the other hand, in a case where the end condition is satisfied (step S5604: Yes), the information processing device 100 proceeds to processing in step S5605.

In step S5605, the information processing device 100 determines th as the threshold (step S5605). The information processing device 100 deletes a term having a coefficient within a range of [- th, th] from the predetermined Hamiltonian (step S5606). The information processing device 100 ends the first term deletion processing.

### (Second Term Deletion Processing Procedure)

Next, an example of a second term deletion processing procedure executed by the information processing device 100 will be described with reference to FIG. 57. The second term deletion processing is implemented by, for example, the CPU 301, the storage region such as the memory 302 or the recording medium 305, and the network I/F 303 illustrated in FIG. 3.

FIG. 57 is a flowchart illustrating an example of the second term deletion processing procedure. In FIG. 57, the information processing device 100 sorts the positive values of coef in ascending order of the absolute value and sets the values to coef_p (step S5701). The information processing device 100 sorts the negative values of coef in ascending order of the absolute value and sets the values to coef_m (step S5702). The information processing device 100 sets zero to ip, sets zero to im, sets zero to th_p, sets zero to th_m, sets zero to a_p, sets zero to a_m, and sets zero to n (step S5703).

The information processing device 100 determines whether or not a_m < a_p (step S5704). Here, in a case where a_m < a_p (step S5704: Yes), the information processing device 100 proceeds to processing in step S5705. On the other hand, in a case where a_m < a_p is not satisfied (step S5704: No), the information processing device 100 proceeds to processing in step S5706.

In step S5705, the information processing device 100 sets coef_m [im] to th_m, sets a_m + th_m to a_m, and sets im + 1 to im (step S5705). Then, the information processing device 100 proceeds to processing in step S5707.

In step S5706, the information processing device 100 sets coef_p [ip] to th_p, sets a_p + th_p to a_p, and sets ip + 1 to ip (step S5706). Then, the information processing device 100 proceeds to the processing in step S5707.

In step S5707, the information processing device 100 determines whether or not the end condition is satisfied (step S5707). The end condition is (n < n_cut) and (ip < the number of elements of coef_p) and (im < the number of elements of coef_m). Here, in a case where the end condition is not satisfied (step S5707: No), the information processing device 100 increments n and returns to the processing in step S5704. On the other hand, in a case where the end condition is satisfied (step S5707: Yes), the information processing device 100 proceeds to processing in step S5708.

In step S5708, the information processing device 100 determines th_m and th_p as the thresholds (step S5708). The information processing device 100 deletes a term having a coefficient within a range of [- th_m, th_p] from the predetermined Hamiltonian (step S5709). The information processing device 100 ends the second term deletion processing.

### (Third Term Deletion Processing Procedure)

Next, an example of a third term deletion processing procedure executed by the information processing device 100 will be described with reference to FIG. 58. The third term deletion processing is implemented by, for example, the CPU 301, the storage region such as the memory 302 or the recording medium 305, and the network I/F 303 illustrated in FIG. 3.

FIG. 58 is a flowchart illustrating an example of the third term deletion processing procedure. In FIG. 58, the information processing device 100 acquires the processing time t_{liter} for one iteration (step S5801). The information processing device 100 calculates a processing time t_{run} for one time of the quantum simulation (step S5802).

The information processing device 100 calculates the number N_{terms} of terms of the Hamiltonian to be left (step S5803). The information processing device 100 deletes one or more terms from the predetermined Hamiltonian so that the number of terms becomes the number N_{terms} of terms (step S5804). The information processing device 100 ends the third term deletion processing.

As described above, according to the information processing device 100, it is possible to acquire the information regarding the target molecule in the quantum chemical calculation. According to the information processing device 100, it is possible to acquire the value list that may be designated as the first parallel number and that includes the combination of the first parallel number and the sample of the processing time in which the quantum calculation processing is executed once with the first parallel number, based on the information regarding the target molecule. According to the information processing device 100, it is possible to specify the number of arithmetic devices available for the quantum calculation processing. According to the information processing device 100, it is possible to determine the first parallel number and the second parallel number, so as to reduce the processing time in which the plurality of times of quantum calculation processing is executed, within a range in which the product of the first parallel number and the second parallel number does not exceed the specified number, based on the value list that may be designated as the first parallel number. According to the information processing device 100, it is possible to control the plurality of times of quantum calculation processing, based on the determined first parallel number and second parallel number. As a result, the information processing device 100 can reduce the processing time required for the quantum calculation processing.

According to the information processing device 100, it is possible to include the storage unit that stores the value list that may be designated as the first parallel number, in association with the information regarding each of the plurality of molecules. According to the information processing device 100, it is possible to refer to the storage unit and to acquire the value list that may be designated as the first parallel number associated with the information regarding the target molecule. As a result, the information processing device 100 can appropriately acquire the value list that may be designated as the first parallel number, according to the target molecule. Therefore, the information processing device 100 can appropriately determine the first parallel number and the second parallel number.

According to the information processing device 100, it is possible to update the storage content of the storage unit, based on the execution result of at least one time of the quantum calculation processing, among the plurality of times of quantum calculation processing. As a result, the information processing device 100 can reflect the value of the processing time when at least one time of the quantum calculation processing is actually executed, on the storage content of the storage unit, and thereafter, can appropriately and easily determine the first parallel number and the second parallel number.

According to the information processing device 100, in a case where the second parallel number is set as the predetermined value and the multiple values that may be designated as the first parallel number are respectively applied to the different times of quantum calculation processing, it is possible to acquire the execution result of each time of the quantum calculation processing. According to the information processing device 100, it is possible to update the storage content of the storage unit, based on the execution result of each time of the quantum calculation processing. As a result, the information processing device 100 can reflect the value of the processing time when the quantum calculation processing is actually executed, on the storage content of the storage unit, and thereafter, can appropriately and easily determine the first parallel number and the second parallel number.

According to the information processing device 100, it is possible to acquire the number of arithmetic devices available for the quantum calculation processing, by inquiring the system including the plurality of arithmetic devices of the number of arithmetic devices available for the quantum calculation processing. As a result, the information processing device 100 can improve the operation efficiency of the arithmetic device 212 and easily ensure the use fairness of the arithmetic device 212, according to the number of arithmetic devices currently available for the quantum calculation processing.

According to the information processing device 100, it is possible to acquire the coefficient of each of the plurality of terms for defining the predetermined Hamiltonian regarding the target molecule, in the quantum calculation processing. According to the information processing device 100, it is possible to delete the term, of which the absolute value of the coefficient is equal to or less than the reference value, among the plurality of terms, from the predetermined Hamiltonian, based on the acquired coefficient. According to the information processing device 100, it is possible to control the plurality of times of quantum calculation processing, based on the determined first parallel number and second parallel number, using the predetermined Hamiltonian from which the term having the absolute value of the coefficient equal to or less than the reference value is deleted. As a result, the information processing device 100 can reduce the processing time required for the quantum calculation processing.

According to the information processing device 100, it is possible to accept the designation of the number of terms to be deleted from the predetermined Hamiltonian. According to the information processing device 100, it is possible to set the absolute value of the coefficient of the specific term existing in the order according to the designated number, from the smallest absolute value of the coefficient, among the plurality of terms, as the reference value. As a result, the information processing device 100 can reduce the processing time required for the quantum calculation processing, while suppressing the decrease in the accuracy of the quantum calculation processing.

According to the information processing device 100, it is possible to accept the designation of the upper limit value of the processing time. According to the information processing device 100, it is possible to store the information indicating the change in the processing time in which the expected value of the Hamiltonian is obtained, according to the change in the number of terms for defining the Hamiltonian. According to the information processing device 100, it is possible to specify the number of terms to be deleted from the predetermined Hamiltonian, so that the processing time in which the expected value of the predetermined Hamiltonian is obtained is equal to or less than the designated upper limit value, based on the information. According to the information processing device 100, it is possible to set the absolute value of the coefficient of the specific term existing in the order according to the specified number, from the smallest absolute value of the coefficient, among the plurality of terms, as the reference value. As a result, the information processing device 100 can reduce the processing time required for the quantum calculation processing, while suppressing the decrease in the accuracy of the quantum calculation processing.

According to the information processing device 100, it is possible to delete the first term of which the coefficient has the positive value and the absolute value of the coefficient is equal to or less than the first reference value and the second term of which the coefficient has the negative value and the absolute value of the coefficient is equal to or less than the second reference value, among the plurality of terms, from the predetermined Hamiltonian. As a result, the information processing device 100 can easily suppress the decrease in the accuracy of the quantum calculation processing and reduce the processing time required for the quantum calculation processing.

According to the information processing device 100, it is possible to delete the first term and the second term, from the predetermined Hamiltonian, so as to bring the total value of the absolute values of the coefficients of the first term and the total value of the absolute values of the coefficients of the second term to be closer to each other. As a result, the information processing device 100 can easily suppress the decrease in the accuracy of the quantum calculation processing and reduce the processing time required for the quantum calculation processing.

According to the information processing device 100, it is possible to accept the designation of the ratio of the number of terms to be deleted from the predetermined Hamiltonian, with respect to the number of terms for defining the predetermined Hamiltonian. According to the information processing device 100, it is possible to set the absolute value of the coefficient of the specific term existing in the order according to the term to be deleted from the predetermined Hamiltonian, from the smallest absolute value of the coefficient, among the plurality of terms, as the reference value, based on the ratio of which the designation has been accepted. As a result, the information processing device 100 can reduce the processing time required for the quantum calculation processing.

According to the information processing device 100, it is possible to acquire the coefficient of each of the plurality of terms for defining the predetermined Hamiltonian in the quantum chemical calculation by the VQE. According to the information processing device 100, it is possible to delete the term, of which the absolute value of the coefficient is equal to or less than the reference value, among the plurality of terms, from the predetermined Hamiltonian, based on the acquired coefficient. According to the information processing device 100, it is possible to control the plurality of times of quantum calculation processing, using the predetermined Hamiltonian from which the term having the absolute value of the coefficient equal to or less than the reference value is deleted. As a result, the information processing device 100 can reduce the processing time required for the quantum calculation processing.

Note that the information processing method described in the present embodiment may be implemented by executing a program prepared in advance in a computer such as a PC or a workstation. The information processing program described in the present embodiment is recorded in a computer-readable recording medium, and is read from the recording medium by a computer to execute the program. The recording medium is a hard disk, a flexible disk, a Compact Disc (CD)-ROM, a Magneto Optical disc (MO), a Digital Versatile Disc (DVD), or the like.

Furthermore, the information processing program described in the present embodiment may be distributed via a network such as the Internet.

## Claims

1. An information processing program comprising instructions which, when executed by a computer, cause the computer to execute processing comprising:
acquiring, based on a combination of a number of qubits and information regarding a target molecule to be used in a quantum chemical calculation by a Variational Quantum Eigensolver, VQE, from among a value table configured to store a plurality of records in association with a plurality of molecules, respectively, a value list that includes one or more records corresponding to the target molecule, each of the one or more records in the value list being a candidate for a first parallel number of the quantum chemical calculation, each of the plurality of records including a combination of the first parallel number and a sample of a processing time in which the quantum calculation processing is executed once with the first parallel number, the first parallel number being a number that indicates how many arithmetic devices one quantum calculation processing is distributed into and executed in parallel, among a plurality of times of the quantum calculation processing in quantum chemical calculation;
determining, based on the one or more records included in the value list, the first parallel number and a second parallel number by solving an optimization problem to minimize a cost function, so as to reduce a processing time in which the plurality of times of quantum calculation processing is executed, within a range in which a product of the first parallel number and the second parallel number does not exceed a number of arithmetic devices available for the quantum calculation processing, the second parallel number indicating how many groups of arithmetic devices the plurality of times of quantum calculation processing is simultaneously distributed into and executed; and
controlling an arithmetic system including the arithmetic devices to execute the plurality of times of quantum calculation processing, based on the determined first parallel number and second parallel number.

2. The information processing program according to claim 1, wherein
the acquiring includes
acquiring, from among the plurality of records in the value table, the one or more records corresponding to the target molecule to generate the value list that includes the one or more records, each of the plurality of records in the value table including a combination of the first parallel number, a corresponding molecule among the plurality of molecules, and the sample of the processing time in which the quantum calculation processing is executed once with the first parallel number.

3. The information processing program according to claim 2, the processing further comprising:
updating the plurality of records in the value table, based on an execution result of at least one time of the quantum calculation processing of the plurality of times of quantum calculation processing.

4. The information processing program according to claim 3, wherein
the updating includes
updating the plurality of records in the value table, based on the execution result of each of the plurality of times of quantum calculation processing, in a case where the second parallel number is set as a predetermined value and multiple values that may be designated as the first parallel number are respectively applied to different pieces of quantum calculation processing in the plurality of times of quantum calculation processing.

5. The information processing program according to claim 1, the processing further comprising:
acquiring the number of arithmetic devices available for the quantum calculation processing, by inquiring a system that includes the plurality of arithmetic devices of the number of arithmetic devices available for the quantum calculation processing.

6. The information processing program according to any one of claims 1 to 5, for causing the computer to execute processing further comprising:
determining, for each term of a plurality of terms in a predetermined Hamiltonian (4000) regarding the target molecule in the quantum calculation processing, whether an absolute value of a coefficient of the term is equal to or less than a reference value, and
deleting, from the predetermined Hamiltonian (4000), one or more terms each of which has the absolute value of the coefficient that is equal to or less than a reference value, among the plurality of terms in the predetermined Hamiltonian (4000), wherein
the controlling includes
controlling the plurality of times of quantum calculation processing, based on the determined first parallel number and second parallel number, by using the predetermined Hamiltonian (4000) from which the one or terms are deleted.

7. The information processing program according to claim 6, the processing further comprising:
receiving a number of terms to be deleted from the predetermined Hamiltonian (4000); and
setting, as the reference value, an absolute value of a coefficient of a specific term among the plurality of terms, the specific term being a term that exists at a position corresponding to the received number of terms, from a term having a smallest absolute value of the coefficient in an ordered sequence of the plurality of terms.

8. The information processing program according to claim 6, the processing further comprising:
receiving an upper limit value of a processing time;
specifying the number of terms to be deleted from the predetermined Hamiltonian (4000), so that a processing time in which an expected value of the predetermined Hamiltonian (4000) is obtained is equal to or less than the received upper limit value, based on information that indicates a relationship between a change in a processing time in which an expected value of a Hamiltonian is obtained, and a change in a number of terms in the Hamiltonian; and
setting, as the reference value, an absolute value of a coefficient of a specific term among the plurality of terms, the specific term being a term that exists at a position corresponding to the specified number of terms, from a term having a smallest absolute value of the coefficient in an ordered sequence of the plurality of terms.

9. The information processing program according to claim 6, wherein
the deleting includes
deleting, from the predetermined Hamiltonian (4000), one or more first terms and one or more second terms among the plurality of terms, each of the one or more first terms being a term of which the coefficient has a positive value and the absolute value of the coefficient is equal to or less than a first reference value, each of the one or more second terms being a term of which the coefficient has a negative value and the absolute value of the coefficient is equal to or less than a second reference value.

10. The information processing program according to claim 9,
wherein the deleting includes determining the first and second reference values, so as to bring a total value of the absolute values of the coefficients of the one or more first terms and a total value of the absolute values of the coefficients of the one or more second terms to be closer to each other.

11. The information processing program according to claim 6, for causing the computer to execute processing further comprising:
receiving a ratio of the number of terms to be deleted from the predetermined Hamiltonian (4000), with respect to a number of terms of the plurality of terms in the predetermined Hamiltonian (4000);
determining the number of terms to be deleted, in accordance with the ration received; and
setting, as the reference value, an absolute value of a coefficient of a specific term among the plurality of terms, the specific term being a term that exists at a position corresponding to the determined number of terms to be deleted, from a term having a smallest absolute value of the coefficient in an ordered sequence of the plurality of terms.

12. An information processing method implemented by a computer, the information processing method comprising:
acquiring, based on a combination of a number of qubits and information regarding a target molecule to be used in a quantum chemical calculation by a Variational Quantum Eigensolver, VQE, from among a value table configured to store a plurality of records in association with a plurality of molecules, respectively, a value list that includes one or more records corresponding to the target molecule, each of the one or more records in the value list being a candidate for a first parallel number of the quantum chemical calculation, each of the plurality of records including a combination of the first parallel number and a sample of a processing time in which the quantum calculation processing is executed once with the first parallel number, the first parallel number being a number that indicates how many arithmetic devices one quantum calculation processing is distributed into and executed in parallel, among a plurality of times of the quantum calculation processing in quantum chemical calculation;
determining, based on the one or more records included in the value list, the first parallel number and a second parallel number by solving an optimization problem to minimize a cost function, so as to reduce a processing time in which the plurality of times of quantum calculation processing is executed, within a range in which a product of the first parallel number and the second parallel number does not exceed a number of arithmetic devices available for the quantum calculation processing, the second parallel number indicating how many groups of arithmetic devices the plurality of times of quantum calculation processing is simultaneously distributed into and executed; and
controlling an arithmetic system including the arithmetic devices to execute the plurality of times of quantum calculation processing, based on the determined first parallel number and second parallel number.

13. An information processing apparatus comprising a control unit configured to perform processing including:
acquiring, based on a combination of a number of qubits and information regarding a target molecule to be used in a quantum chemical calculation by a Variational Quantum Eigensolver, VQE, from among a value table configured to store a plurality of records in association with a plurality of molecules, respectively, a value list that includes one or more records corresponding to the target molecule, each of the one or more records in the value list being a candidate for a first parallel number of the quantum chemical calculation, each of the plurality of records including a combination of the first parallel number and a sample of a processing time in which the quantum calculation processing is executed once with the first parallel number, the first parallel number being a number that indicates how many arithmetic devices one quantum calculation processing is distributed into and executed in parallel, among a plurality of times of the quantum calculation processing in quantum chemical calculation;
determining, based on the one or more records included in the value list, the first parallel number and a second parallel number by solving an optimization problem to minimize a cost function, so as to reduce a processing time in which the plurality of times of quantum calculation processing is executed, within a range in which a product of the first parallel number and the second parallel number does not exceed a number of arithmetic devices available for the quantum calculation processing, the second parallel number indicating how many groups of arithmetic devices the plurality of times of quantum calculation processing is simultaneously distributed into and executed; and
controlling an arithmetic system including the arithmetic devices to execute the plurality of times of quantum calculation processing, based on the determined first parallel number and second parallel number.

## Patentansprüche

1. Informationsverarbeitungsprogramm umfassend Anweisungen, die, wenn sie von einem Computer ausgeführt werden, den Computer veranlassen, eine Verarbeitung auszuführen, umfassend:
Erwerben, auf der Grundlage einer Kombination aus einer Anzahl an Qubits und Informationen in Bezug auf ein Zielmolekül, das in einer quantenchemischen Berechnung durch einen Variations-Quanten-Eigensolver, VQE, verwendet werden soll, aus einer Werte-Tabelle, die ausgebildet ist, um jeweils eine Vielzahl von Datensätzen in Verbindung mit einer Vielzahl von Molekülen zu speichern, einer Werteliste, die einen oder mehrere Datensätze einschließt, die dem Zielmolekül entsprechen, wobei jeder von dem einen oder mehreren Datensätzen in der Werteliste ein Kandidat für eine erste parallele Anzahl der quantenchemischen Berechnung ist, wobei jeder der Vielzahl von Datensätzen eine Kombination aus der ersten parallelen Anzahl und einer Stichprobe einer Verarbeitungszeit einschließt, in der die Quantenberechnungsverarbeitung einmal mit der ersten parallelen Anzahl ausgeführt wird, wobei die erste parallele Anzahl eine Anzahl ist, die angibt, in wie viele arithmetische Vorrichtungen eine Quantenberechnungsverarbeitung verteilt ist und unter einer Vielzahl von Malen der Quantenberechnungsverarbeitung in der quantenchemischen Berechnung parallel ausgeführt wird;
Bestimmen, auf der Grundlage des einen oder mehrerer Datensätze, die in der Werteliste eingeschlossen sind, der ersten parallelen Anzahl und einer zweiten parallelen Anzahl durch Lösen eines Optimierungsproblems zur Minimierung einer Kostenfunktion, um eine Verarbeitungszeit zu reduzieren, in der die Vielzahl von Malen einer Quantenberechnungsverarbeitung ausgeführt wird, innerhalb eines Bereichs, in dem ein Produkt der ersten parallelen Anzahl und der zweiten parallelen Anzahl eine Anzahl an für die Quantenberechnungsverarbeitung verfügbaren arithmetischen Vorrichtungen nicht überschreitet, wobei die zweite parallele Anzahl angibt, in wie viele Gruppen von arithmetischen Vorrichtungen die Vielzahl von Malen der Quantenberechnungsverarbeitung gleichzeitig verteilt und ausgeführt wird; und
Steuern eines arithmetischen Systems, das die arithmetischen Vorrichtungen einschließt, um die Vielzahl von Malen der Quantenberechnungsverarbeitung auszuführen, auf der Grundlage der bestimmten ersten parallelen Anzahl und zweiten parallelen Anzahl.

2. Informationsverarbeitungsprogramm nach Anspruch 1, wobei das Erwerben Folgendes einschließt
Erwerben aus der Vielzahl von Datensätzen in der Werte-Tabelle des einen oder mehrerer Datensätze, die dem Zielmolekül entsprechen, um die Werteliste zu erzeugen, die den einen oder mehrere Datensätze einschließt, wobei jeder der Vielzahl von Datensätzen in der Werte-Tabelle eine Kombination aus der ersten parallelen Anzahl, einem entsprechenden Molekül aus der Vielzahl von Molekülen und der Stichprobe der Verarbeitungszeit einschließt, in der die Quantenberechnungsverarbeitung einmal mit der ersten parallelen Anzahl ausgeführt wird.

3. Informationsverarbeitungsprogramm nach Anspruch 2, das Verarbeiten weiter umfassend:
Aktualisieren der Vielzahl von Datensätzen in der Werte-Tabelle auf der Grundlage eines Ausführungsergebnisses von mindestens einem Mal der Quantenberechnungsverarbeitung aus der Vielzahl von Malen der Quantenberechnungsverarbeitung.

4. Informationsverarbeitungsprogramm nach Anspruch 3, wobei das Aktualisieren Folgendes einschließt
Aktualisieren der Vielzahl von Datensätzen in der Werte-Tabelle auf der Grundlage des Ausführungsergebnisses jedes der Vielzahl von Malen der Quantenberechnungsverarbeitung, in einem Fall, in dem die zweite parallele Anzahl als ein vorbestimmter Wert eingestellt ist und mehrere Werte, die als die erste parallele Anzahl bezeichnet werden können, jeweils auf unterschiedliche Quantenberechnungsverarbeitungen in der Vielzahl von Malen der Quantenberechnungsverarbeitung angewendet werden.

5. Informationsverarbeitungsprogramm nach Anspruch 1, das Verarbeiten weiter umfassend:
Erwerben der Anzahl an für die Quantenberechnungsverarbeitung verfügbaren arithmetischen Vorrichtungen durch Abfragen eines Systems, das die Anzahl von arithmetischen Vorrichtungen der arithmetischen Vorrichtungen einschließt, die für die Quantenberechnungsverarbeitung verfügbar sind.

6. Informationsverarbeitungsprogramm nach einem der Ansprüche 1 bis 5, zum Veranlassen des Computers, eine Verarbeitung auszuführen, weiter umfassend:
Bestimmen für jeden Term einer Vielzahl von Termini in einem vorbestimmten Hamilton-Operator (4000) in Bezug auf das Zielmolekül in der Quantenberechnungsverarbeitung, ob der Absolutwert eines Koeffizienten des Terms gleich wie oder kleiner als ein Referenzwert ist, und
Löschen aus dem vorbestimmten Hamilton-Operator (4000) eines oder mehrerer Termini, von denen jeder den Absolutwert des Koeffizienten aufweist, der gleich wie oder kleiner als ein Referenzwert ist, aus der Vielzahl von Termini im vorbestimmten Hamilton-Operator (4000), wobei
das Steuern Folgendes einschließt
Steuern der Vielzahl von Malen der Quantenberechnungsverarbeitung auf der Grundlage der bestimmten ersten parallelen Anzahl und zweiten parallelen Anzahl, durch Verwenden des vorbestimmten Hamilton-Operators (4000), von dem der eine oder die Termini gelöscht worden sind.

7. Informationsverarbeitungsprogramm nach Anspruch 6, das Verarbeiten weiter umfassend:
Empfangen einer Anzahl an Termini, die aus dem vorbestimmten Hamilton-Operator (4000) gelöscht werden sollen; und
Einstellen als Referenzwert eines Absolutwerts eines Koeffizienten eines spezifischen Terms der Vielzahl von Termini, wobei der spezifische Term ein Term ist, der an einer Position existiert, die der empfangenen Anzahl an Termini entspricht, von einem Term, der einen kleinsten Absolutwert des Koeffizienten aufweist, in einer geordneten Sequenz der Vielzahl von Termini.

8. Informationsverarbeitungsprogramm nach Anspruch 6, das Verarbeiten weiter umfassend:
Empfang eines oberen Grenzwerts für eine Verarbeitungszeit;
Spezifizieren der Anzahl an Termini, die aus dem vorbestimmten Hamilton-Operator (4000) gelöscht werden sollen, sodass eine Verarbeitungszeit, in der ein erwarteter Wert des vorbestimmten Hamilton-Operators (4000) erhalten wird, gleich wie oder kleiner als der empfangene obere Grenzwert ist, auf der Grundlage von Informationen, die eine Beziehung zwischen einer Änderung der Verarbeitungszeit, in der ein erwarteter Wert eines Hamilton-Operators erhalten wird, und einer Änderung der Anzahl an Termini im Hamilton-Operator angeben; und
Einstellen als Referenzwert eines Absolutwerts eines Koeffizienten eines spezifischen Terms aus der Vielzahl von Termini, wobei der spezifische Term ein Term ist, der an einer Position existiert, die der bestimmten Anzahl an Termini entspricht, von einem Term, der einen kleinsten Absolutwert des Koeffizienten in einer geordneten Sequenz der Vielzahl von Termini aufweist.

9. Informationsverarbeitungsprogramm nach Anspruch 6, wobei das Löschen Folgendes einschließt
Löschen eines oder mehrerer erster Termini und eines oder mehrerer zweiter Termini aus dem vorbestimmten Hamilton-Operator (4000) aus der Vielzahl von Termini, wobei jeder des einen oder mehrerer erster Termini ein Term ist, dessen Koeffizient einen positiven Wert aufweist und dessen Absolutwert des Koeffizienten gleich wie oder kleiner als ein erster Referenzwert ist, wobei jeder des einen oder mehrerer zweiter Termini ein Term ist, dessen Koeffizient einen negativen Wert aufweist und dessen Absolutwert des Koeffizienten gleich wie oder kleiner als ein zweiter Referenzwert ist.

10. Informationsverarbeitungsprogramm nach Anspruch 9,
wobei das Löschen Bestimmen des ersten und zweiten Referenzwerts einschließt, um einen Gesamtwert der Absolutwerte der Koeffizienten der einen oder mehreren ersten Termini und einen Gesamtwert der Absolutwerte der Koeffizienten der einen oder mehreren zweiten Termini einander näher zu bringen.

11. Informationsverarbeitungsprogramm nach Anspruch 6, zum Veranlassen des Computers, eine Verarbeitung auszuführen, weiter umfassend:
Empfangen eines Verhältnisses der Anzahl an zu löschenden Termini aus dem vorbestimmten Hamilton-Operator (4000) in Bezug auf eine Anzahl an Termini der Vielzahl von Termini im vorbestimmten Hamilton-Operator (4000);
Bestimmen der Anzahl an zu löschenden Termini in Übereinstimmung mit dem erhaltenen Verhältnis; und
Einstellen als Referenzwert eines Absolutwerts eines Koeffizienten eines spezifischen Terms aus der Vielzahl von Termini, wobei der spezifische Term ein Term ist, der an einer Position existiert, die der bestimmten Anzahl der zu löschenden Termini entspricht, von einem Term, der einen kleinsten Absolutwert des Koeffizienten in einer geordneten Sequenz der Vielzahl von Termini aufweist.

12. Informationsverarbeitungsverfahren, das von einem Computer implementiert wird, das Informationsverarbeitungsverfahren umfassend:
Erwerben, auf der Grundlage einer Kombination aus einer Anzahl an Qubits und Informationen in Bezug auf ein Zielmolekül, das in einer quantenchemischen Berechnung durch einen Variations-Quanten-Eigensolver, VQE, verwendet werden soll, aus einer Werte-Tabelle, die ausgebildet ist, um jeweils eine Vielzahl von Datensätzen in Verbindung mit einer Vielzahl von Molekülen zu speichern, einer Werteliste, die einen oder mehrere Datensätze einschließt, die dem Zielmolekül entsprechen, wobei jeder von dem einen oder mehreren Datensätzen in der Werteliste ein Kandidat für eine erste parallele Anzahl der quantenchemischen Berechnung ist, wobei jeder der Vielzahl von Datensätzen eine Kombination aus der ersten parallelen Anzahl und einer Stichprobe einer Verarbeitungszeit einschließt, in der die Quantenberechnungsverarbeitung einmal mit der ersten parallelen Anzahl ausgeführt wird, wobei die erste parallele Anzahl eine Anzahl ist, die angibt, in wie viele arithmetische Vorrichtungen eine Quantenberechnungsverarbeitung verteilt ist und unter einer Vielzahl von Malen der Quantenberechnungsverarbeitung in der quantenchemischen Berechnung parallel ausgeführt wird;
Bestimmen, auf der Grundlage des einen oder mehrerer Datensätze, die in der Werteliste eingeschlossen sind, der ersten parallelen Anzahl und einer zweiten parallelen Anzahl durch Lösen eines Optimierungsproblems zur Minimierung einer Kostenfunktion, um eine Verarbeitungszeit zu reduzieren, in der die Vielzahl von Malen einer Quantenberechnungsverarbeitung ausgeführt wird, innerhalb eines Bereichs, in dem ein Produkt der ersten parallelen Anzahl und der zweiten parallelen Anzahl eine Anzahl an für die Quantenberechnungsverarbeitung verfügbaren arithmetischen Vorrichtungen nicht überschreitet, die zweite parallele Anzahl angibt, in wie viele Gruppen von arithmetischen Vorrichtungen die Vielzahl von Malen der Quantenberechnungsverarbeitung gleichzeitig verteilt und ausgeführt wird; und
Steuern eines arithmetischen Systems, das die arithmetischen Vorrichtungen einschließt, um die Vielzahl von Malen der Quantenberechnungsverarbeitung auszuführen, auf der Grundlage der bestimmten ersten parallelen Anzahl und zweiten parallelen Anzahl.

13. Informationsverarbeitungseinrichtung umfassend eine Steuereinheit, die ausgebildet ist, um das Verarbeiten durchzuführen, das Folgendes einschließt:
Erwerben, auf der Grundlage einer Kombination aus einer Anzahl an Qubits und Informationen in Bezug auf ein Zielmolekül, das in einer quantenchemischen Berechnung durch einen Variations-Quanten-Eigensolver, VQE, verwendet werden soll, aus einer Werte-Tabelle, die ausgebildet ist, um jeweils eine Vielzahl von Datensätzen in Verbindung mit einer Vielzahl von Molekülen zu speichern, einer Werteliste, die einen oder mehrere Datensätze einschließt, die dem Zielmolekül entsprechen, wobei jeder von dem einen oder mehreren Datensätzen in der Werteliste ein Kandidat für eine erste parallele Anzahl der quantenchemischen Berechnung ist, wobei jeder der Vielzahl von Datensätzen eine Kombination aus der ersten parallelen Anzahl und einer Stichprobe einer Verarbeitungszeit einschließt, in der die Quantenberechnungsverarbeitung einmal mit der ersten parallelen Anzahl ausgeführt wird, wobei die erste parallele Anzahl eine Anzahl ist, die angibt, in wie viele arithmetische Vorrichtungen eine Quantenberechnungsverarbeitung verteilt ist und unter einer Vielzahl von Malen der Quantenberechnungsverarbeitung in der quantenchemischen Berechnung parallel ausgeführt wird;
Bestimmen, auf der Grundlage des einen oder mehrerer Datensätze, die in der Werteliste eingeschlossen sind, der ersten parallelen Anzahl und einer zweiten parallelen Anzahl durch Lösen eines Optimierungsproblems zur Minimierung einer Kostenfunktion, um eine Verarbeitungszeit zu reduzieren, in der die Vielzahl von Malen einer Quantenberechnungsverarbeitung ausgeführt wird, innerhalb eines Bereichs, in dem ein Produkt der ersten parallelen Anzahl und der zweiten parallelen Anzahl eine Anzahl an für die Quantenberechnungsverarbeitung verfügbaren arithmetischen Vorrichtungen nicht überschreitet, die zweite parallele Anzahl angibt, in wie viele Gruppen von arithmetischen Vorrichtungen die Vielzahl von Malen der Quantenberechnungsverarbeitung gleichzeitig verteilt und ausgeführt wird; und
Steuern eines arithmetischen Systems, das die arithmetischen Vorrichtungen einschließt, um die Vielzahl von Malen der Quantenberechnungsverarbeitung auszuführen, auf der Grundlage der bestimmten ersten parallelen Anzahl und zweiten parallelen Anzahl.

## Revendications

1. Programme de traitement d'informations comprenant des instructions qui, lorsqu'elles sont mises en œuvre par un ordinateur, amènent l'ordinateur à mettre en œuvre un traitement comprenant :
l'acquisition, sur la base d'une combinaison d'un nombre de qubits et d'informations concernant une molécule cible à utiliser dans un calcul chimique quantique par un solveur quantique variationnel de valeurs propres, VQE, parmi une table de valeurs configurée pour stocker une pluralité d'enregistrements en association avec une pluralité de molécules, respectivement, d'une liste de valeurs qui inclut un ou plusieurs enregistrements correspondant à la molécule cible, chacun des un ou plusieurs enregistrements dans la liste de valeurs étant un candidat pour un premier nombre parallèle du calcul chimique quantique, chacun de la pluralité d'enregistrements incluant une combinaison du premier nombre parallèle et d'un échantillon d'un temps de traitement dans lequel le traitement de calcul quantique est mis en œuvre une fois avec le premier nombre parallèle, le premier nombre parallèle étant un nombre qui indique dans combien de dispositifs arithmétiques un traitement de calcul quantique est réparti et mis en œuvre en parallèle, parmi une pluralité d'instances du traitement de calcul quantique dans le calcul chimique quantique ;
la détermination, sur la base des un ou plusieurs enregistrements inclus dans la liste de valeurs, du premier nombre parallèle et d'un deuxième nombre parallèle en résolvant un problème d'optimisation afin de minimiser une fonction de coût, de manière à réduire un temps de traitement dans lequel la pluralité d'instances de traitement de calcul quantique est mise en œuvre, dans une plage dans laquelle un produit du premier nombre parallèle et du deuxième nombre parallèle ne dépasse pas un nombre de dispositifs arithmétiques disponibles pour le traitement de calcul quantique, le deuxième nombre parallèle indiquant dans combien de groupes de dispositifs arithmétiques la pluralité d'instances de traitement de calcul quantique est simultanément répartie et mise en œuvre ; et
la commande d'un système arithmétique incluant les dispositifs arithmétiques pour mettre en œuvre la pluralité d'instances de traitement de calcul quantique, sur la base du premier nombre parallèle et du deuxième nombre parallèle déterminés.

2. Programme de traitement d'informations selon la revendication 1, dans lequel l'acquisition inclut
l'acquisition, parmi la pluralité d'enregistrements dans la table de valeurs, des un ou plusieurs enregistrements correspondant à la molécule cible afin de générer la liste de valeurs qui inclut les un ou plusieurs enregistrements, chacun de la pluralité d'enregistrements dans la table de valeurs incluant une combinaison du premier nombre parallèle, d'une molécule correspondante parmi la pluralité de molécules, et de l'échantillon du temps de traitement dans lequel le traitement de calcul quantique est mis en œuvre une fois avec le premier nombre parallèle.

3. Programme de traitement d'informations selon la revendication 2, le traitement comprenant en outre :
la mise à jour de la pluralité d'enregistrements dans la table de valeurs, sur la base d'un résultat d'exécution d'au moins une instance du traitement de calcul quantique parmi la pluralité d'instances de traitement de calcul quantique.

4. Programme de traitement d'informations selon la revendication 3, dans lequel la mise à jour inclut
la mise à jour de la pluralité d'enregistrements dans la table de valeurs, sur la base du résultat d'exécution de chacune de la pluralité d'instances de traitement de calcul quantique, dans un cas où le deuxième nombre parallèle est défini comme une valeur prédéterminée et de multiples valeurs qui peuvent être désignées comme le premier nombre parallèle sont respectivement appliquées à différents éléments de traitement de calcul quantique dans la pluralité d'instances de traitement de calcul quantique.

5. Programme de traitement d'informations selon la revendication 1, le traitement comprenant en outre :
l'acquisition du nombre de dispositifs arithmétiques disponibles pour le traitement de calcul quantique, en interrogeant un système qui inclut la pluralité de dispositifs arithmétiques du nombre de dispositifs arithmétiques disponibles pour le traitement de calcul quantique.

6. Programme de traitement d'informations selon l'une quelconque des revendications 1 à 5, pour amener l'ordinateur à mettre en œuvre un traitement comprenant en outre :
le fait de déterminer, pour chaque terme d'une pluralité de termes dans un Hamiltonien prédéterminé (4000) concernant la molécule cible dans le traitement de calcul quantique, si une valeur absolue d'un coefficient du terme est égale ou inférieure à une valeur de référence, et
la suppression, dans l'Hamiltonien prédéterminé (4000), d'un ou plusieurs termes dont chacun présente la valeur absolue du coefficient qui est égale ou inférieure à une valeur de référence, parmi la pluralité de termes dans l'Hamiltonien prédéterminé (4000), dans lequel
la commande inclut :
la commande de la pluralité d'instances de traitement de calcul quantique, sur la base du premier nombre parallèle et du deuxième nombre parallèle déterminés, en utilisant l'Hamiltonien prédéterminé (4000) dans lequel le ou les termes sont supprimés.

7. Programme de traitement d'informations selon la revendication 6, le traitement comprenant en outre :
la réception d'un nombre de termes devant être supprimés dans l'Hamiltonien prédéterminé (4000) ; et
le paramétrage, comme valeur de référence, d'une valeur absolue d'un coefficient d'un terme spécifique parmi la pluralité de termes, le terme spécifique étant un terme existant à une position correspondant au nombre reçu de termes, à partir d'un terme présentant la plus petite valeur absolue du coefficient dans une séquence ordonnée de la pluralité de termes.

8. Programme de traitement d'informations selon la revendication 6, le traitement comprenant en outre :
la réception d'une valeur limite supérieure d'un temps de traitement ;
la spécification du nombre de termes devant être supprimés dans l'Hamiltonien prédéterminé (4000), de sorte qu'un temps de traitement dans lequel une valeur attendue de l'Hamiltonien prédéterminé (4000) est obtenue est égal ou inférieur à la valeur limite supérieure reçue, sur la base d'informations qui indiquent une relation entre une variation d'un temps de traitement dans lequel une valeur attendue d'un Hamiltonien est obtenue, et une variation d'un nombre de termes dans l'Hamiltonien ; et
le paramétrage, comme valeur de référence, d'une valeur absolue d'un coefficient d'un terme spécifique parmi la pluralité de termes, le terme spécifique étant un terme qui existe à une position correspondant au nombre spécifié de termes, à partir d'un terme présentant la plus petite valeur absolue du coefficient dans une séquence ordonnée de la pluralité de termes.

9. Programme de traitement d'informations selon la revendication 6, dans lequel la suppression inclut
la suppression, dans l'Hamiltonien prédéterminé (4000), d'un ou plusieurs premiers termes et d'un ou plusieurs deuxièmes termes parmi la pluralité de termes, chacun des un ou plusieurs premiers termes étant un terme dont le coefficient présente une valeur positive et la valeur absolue du coefficient est égale ou inférieure à une première valeur de référence,
chacun des un ou plusieurs deuxièmes termes étant un terme dont le coefficient présente une valeur négative et la valeur absolue du coefficient est égale ou inférieure à une deuxième valeur de référence.

10. Programme de traitement d'informations selon la revendication 9,
dans lequel la suppression inclut la détermination des première et deuxième valeurs de référence, de manière à amener une valeur totale des valeurs absolues des coefficients des un ou plusieurs premiers termes et une valeur totale des valeurs absolues des coefficients des un ou plusieurs deuxièmes termes à être plus proches l'une de l'autre.

11. Programme de traitement d'informations selon la revendication 6, pour amener l'ordinateur à mettre en œuvre un traitement comprenant en outre :
la réception d'une proportion du nombre de termes devant être supprimés dans l'Hamiltonien prédéterminé (4000) par rapport à un nombre de termes de la pluralité de termes dans l'Hamiltonien prédéterminé (4000) ;
la détermination du nombre de termes devant être supprimés, conformément à la proportion reçue ; et
le paramétrage, comme valeur de référence, d'une valeur absolue d'un coefficient d'un terme spécifique parmi la pluralité de termes, le terme spécifique étant un terme qui existe à une position correspondant au nombre déterminé de termes devant être supprimés, à partir d'un terme présentant la plus petite valeur absolue du coefficient dans une séquence ordonnée de la pluralité de termes.

12. Procédé de traitement d'informations mis en œuvre par un ordinateur, le procédé de traitement d'informations comprenant :
l'acquisition, sur la base d'une combinaison d'un nombre de qubits et d'informations concernant une molécule cible à utiliser dans un calcul chimique quantique par un solveur quantique variationnel de valeurs propres, VQE, parmi une table de valeurs configurée pour stocker une pluralité d'enregistrements en association avec une pluralité de molécules, respectivement, d'une liste de valeurs qui inclut un ou plusieurs enregistrements correspondant à la molécule cible, chacun des un ou plusieurs enregistrements dans la liste de valeurs étant un candidat pour un premier nombre parallèle du calcul chimique quantique, chacun de la pluralité d'enregistrements incluant une combinaison du premier nombre parallèle et d'un échantillon d'un temps de traitement dans lequel le traitement de calcul quantique est mis en œuvre une fois avec le premier nombre parallèle, le premier nombre parallèle étant un nombre qui indique dans combien de dispositifs arithmétiques un traitement de calcul quantique est réparti et mis en œuvre en parallèle, parmi une pluralité d'instances du traitement de calcul quantique dans le calcul chimique quantique ;
la détermination, sur la base des un ou plusieurs enregistrements inclus dans la liste de valeurs, du premier nombre parallèle et d'un deuxième nombre parallèle en résolvant un problème d'optimisation afin de minimiser une fonction de coût, de manière à réduire un temps de traitement dans lequel la pluralité d'instances de traitement de calcul quantique est mise en œuvre, dans une plage dans laquelle un produit du premier nombre parallèle et du deuxième nombre parallèle ne dépasse pas un nombre de dispositifs arithmétiques disponibles pour le traitement de calcul quantique, le deuxième nombre parallèle indiquant dans combien de groupes de dispositifs arithmétiques la pluralité d'instances de traitement de calcul quantique est simultanément répartie et mise en œuvre ; et
la commande d'un système arithmétique incluant les dispositifs arithmétiques pour mettre en œuvre la pluralité d'instances de traitement de calcul quantique, sur la base du premier nombre parallèle et du deuxième nombre parallèle déterminés.

13. Appareil de traitement d'informations comprenant une unité de commande configurée pour réaliser un traitement incluant :
l'acquisition, sur la base d'une combinaison d'un nombre de qubits et d'informations concernant une molécule cible à utiliser dans un calcul chimique quantique par un solveur quantique variationnel de valeurs propres, VQE, parmi une table de valeurs configurée pour stocker une pluralité d'enregistrements en association avec une pluralité de molécules, respectivement, d'une liste de valeurs qui inclut un ou plusieurs enregistrements correspondant à la molécule cible, chacun des un ou plusieurs enregistrements dans la liste de valeurs étant un candidat pour un premier nombre parallèle du calcul chimique quantique,
chacun de la pluralité d'enregistrements incluant une combinaison du premier nombre parallèle et d'un échantillon d'un temps de traitement dans lequel le traitement de calcul quantique est mis en œuvre une fois avec le premier nombre parallèle, le premier nombre parallèle étant un nombre qui indique dans combien de dispositifs arithmétiques un traitement de calcul quantique est réparti et mis en œuvre en parallèle, parmi une pluralité d'instances du traitement de calcul quantique dans le calcul chimique quantique ;
la détermination, sur la base des un ou plusieurs enregistrements inclus dans la liste de valeurs, du premier nombre parallèle et d'un deuxième nombre parallèle en résolvant un problème d'optimisation afin de minimiser une fonction de coût, de manière à réduire un temps de traitement dans lequel la pluralité d'instances de traitement de calcul quantique est mise en œuvre, dans une plage dans laquelle un produit du premier nombre parallèle et du deuxième nombre parallèle ne dépasse pas un nombre de dispositifs arithmétiques disponibles pour le traitement de calcul quantique, le deuxième nombre parallèle indiquant dans combien de groupes de dispositifs arithmétiques la pluralité d'instances de traitement de calcul quantique est simultanément répartie et mise en œuvre ; et
la commande d'un système arithmétique incluant les dispositifs arithmétiques pour mettre en œuvre la pluralité d'instances de traitement de calcul quantique, sur la base du premier nombre parallèle et du deuxième nombre parallèle déterminés.
